(19) **Europäisches Patentamt**
**European Patent Office**
**Office européen des brevets**

(11) **EP 4 351 064 A1**

(12) **EUROPEAN PATENT APPLICATION**
published in accordance with Art. 153(4) EPC

(43) Date of publication:
**10.04.2024 Bulletin 2024/15**

(21) Application number: **22832135.2**

(22) Date of filing: **29.06.2022**

(51) International Patent Classification (IPC):
**H04L 5/00** *(2006.01)*

(52) Cooperative Patent Classification (CPC):
**H04L 5/00; H04W 72/04**

(86) International application number:
**PCT/CN2022/102494**

(87) International publication number:
**WO 2023/274323 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2021 CN 202110753764**

(71) Applicant: **Huawei Technologies Co., Ltd.
Longgang
Shenzhen, Guangdong 518129 (CN)**

(72) Inventors:
• **LU, Yuxin
Shenzhen, Guangdong 518129 (CN)**

• **LIU, Chenchen
Shenzhen, Guangdong 518129 (CN)**
• **YU, Jian
Shenzhen, Guangdong 518129 (CN)**
• **LI, Yunbo
Shenzhen, Guangdong 518129 (CN)**
• **GAN, Ming
Shenzhen, Guangdong 518129 (CN)**

(74) Representative: **Maiwald GmbH
Engineering
Elisenhof
Elisenstrasse 3
80335 München (DE)**

(54) **PILOT-FREQUENCY SIGNAL TRANSMISSION METHOD AND RELATED APPARATUS**

(57) This application provides a pilot signal transmission method and a related apparatus. The method includes: A first device determines a first frequency band to which a discrete RU allocated to the first device belongs; and the first device sends a first pilot signal of the first device to a second device on all pilot subcarriers included in the first frequency band. According to embodiments of this application, problems such as narrowband interference and frequency selective fading are avoided, and pilot signal transmission reliability is improved.

A STA determines a first frequency band to which a discrete RU allocated to the STA belongs — 501

The STA sends a first pilot signal of the STA to an AP on all pilot subcarriers included in the first frequency band — 502

FIG. 5

EP 4 351 064 A1

## Description

This application claims priority to Chinese Patent Application No. 202110753764.8, filed with the China National Intellectual Property Administration on July 2, 2021 and entitled "PILOT SIGNAL TRANSMISSION METHOD AND RELATED APPARATUS", which is incorporated herein by reference in its entirety.

## TECHNICAL FIELD

This application relates to the field of communication technologies, and in particular, to a pilot signal transmission method and a related apparatus.

## BACKGROUND

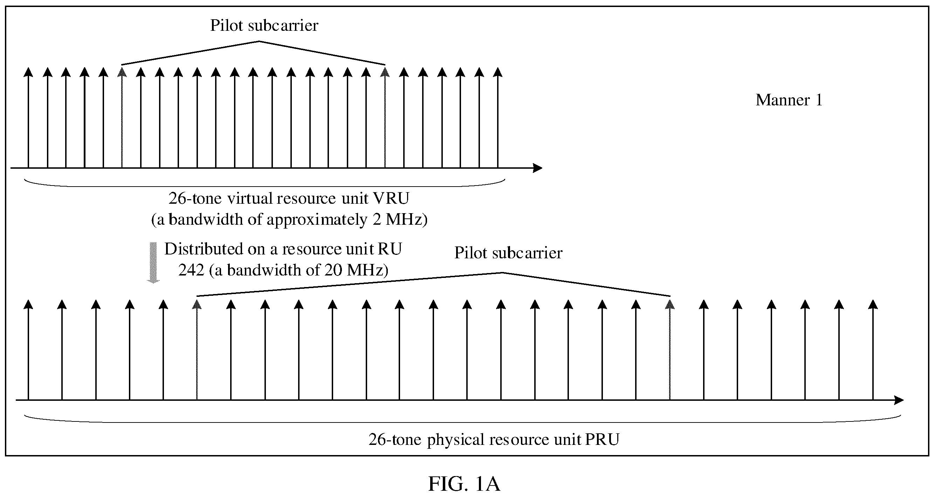

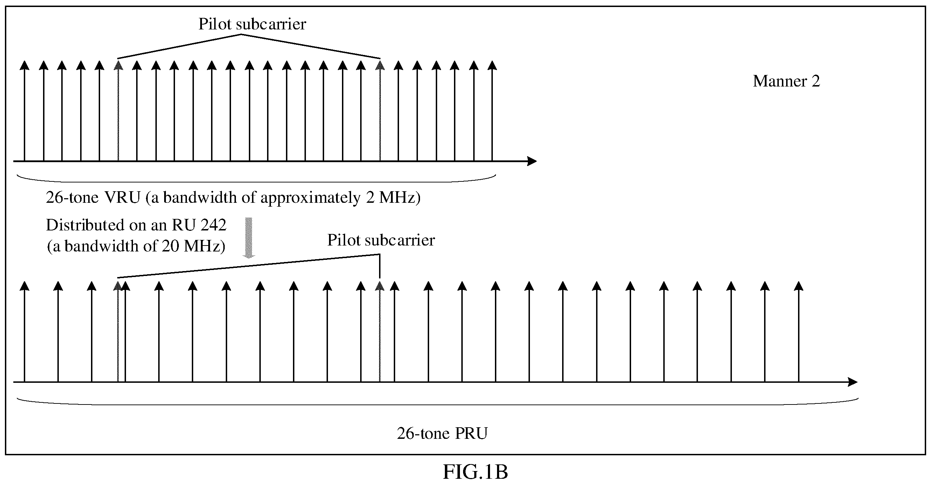

A transmit power of a device is limited by both a maximum power and a maximum power spectral density. In other words, the transmit power of the device cannot exceed the maximum power or the maximum power spectral density. To implement a larger transmit power of the device, a corresponding transmit bandwidth may be expanded. In other words, subcarriers allocated to the device become more discrete in frequency domain, that is, a quantity of subcarriers per MHz is reduced. For example, refer to FIG. 1A and FIG. 1B. FIG. 1A and FIG. 1B are a schematic diagram of mapping a virtual resource unit (virtual resource unit, VRU) to a physical resource unit (physical RU, PRU). In FIG. 1A and FIG. 1B, the following two manners are involved to implement that all subcarriers in a 26-tone VRU are distributed to a PRU on a frequency band with a bandwidth of 20 MHz: In manner 1, two pilot subcarriers in FIG. 1A participate in mapping; in manner 2, two pilot subcarriers in FIG. 1B do not participate in mapping. It may be understood that, in FIG. 1A and FIG. 1B, a frequency band with a bandwidth of 2 MHz includes one 26-tone VRU. In other words, a VRU on the frequency band with a bandwidth of approximately 2 MHz includes 26 subcarriers, and the 26 subcarriers include two pilot subcarriers. As shown in FIG. 1A and FIG. 1B, it may be learned that because the 26-tone VRU on the frequency band with a bandwidth of approximately 2 MHz is distributed to a 26-tone PRU on the frequency band with a bandwidth of 20 MHz, a quantity of subcarriers on each MHz can be reduced in both the two manners. However, the pilot subcarriers in the two manners are sparsely distributed on the frequency band with a bandwidth of 20 MHz, that is, cannot evenly cover the entire frequency band. Therefore, when a pilot signal is sent by using a pilot subcarrier included in the 26-tone PRU, problems such as narrowband interference and frequency selective fading may occur, and transmission of the pilot signal may be greatly damaged. Therefore, how to avoid problems such as narrowband interference and frequency selective fading and improve pilot signal transmission reliability becomes a technical problem to be urgently resolved in a current phase.

## SUMMARY

This application provides a pilot signal transmission method and a related apparatus, to avoid problems such as narrowband interference and frequency selective fading, and improve pilot signal transmission reliability.

According to a first aspect, a pilot signal transmission method is provided. The method includes:

a first device determines a first frequency band to which a discrete RU allocated to the first device belongs; and the first device sends a first pilot signal of the first device to a second device on all pilot subcarriers included in the first frequency band.

It may be learned that, in the foregoing technical solution, a first frequency band that includes a discrete RU allocated to a STA is determined, so that the STA may send a first pilot signal of the STA to an AP on all pilot subcarriers included in the first frequency band, and the first pilot signal may be transmitted by using fixed and evenly distributed pilot subcarriers on the first frequency band. This avoids problems such as narrowband interference and frequency selective fading caused by sparse distribution of the pilot subcarriers on the frequency band, and improves pilot signal transmission reliability. In this way, a linear difference result is more accurate, a problem that a linear difference result is incorrect when pilot phases are not in a same period is avoided, and a linear difference implemented by using the pilot subcarriers can accurately cover the entire frequency band.

According to a second aspect, a pilot signal transmission method is provided. The method includes:

a first device determines a first frequency band to which a discrete RU allocated to the first device belongs, where the first frequency band includes pilot subcarriers in a first discrete RU group and pilot subcarriers in a second discrete RU group, and the pilot subcarriers in the first discrete RU group and the pilot subcarriers in the second discrete RU group do not overlap; and

the first device sends a first pilot signal of the first device to a second device on all pilot subcarriers in the first discrete RU group or the second discrete RU group.

It may be learned that, in the foregoing technical solution, a first frequency band that includes a discrete RU allocated to a STA is determined, so that the STA may send a first pilot signal of the STA to an AP on all pilot subcarriers in the first discrete RU group or the second discrete RU group included in the first frequency band, and the first pilot signal may be transmitted by using fixed and evenly distributed pilot subcarriers on the first frequency band. This avoids problems such as narrowband interference and frequency selective fading caused by sparse distribution of the pilot subcarriers on the frequency band, and improves pilot signal transmission reliability. In this way, a linear difference result is more accurate, a problem that a linear difference result is incorrect when pilot phases are not in a same period is avoided, and a linear difference implemented by using the pilot subcarriers can accurately cover the entire frequency band.

According to a third aspect, a communication apparatus is provided. The apparatus includes a processing module and a transceiver module.

The processing module is configured to determine a first frequency band to which a discrete RU allocated to the processing module belongs.

The transceiver module is configured to send a first pilot signal of a first device to a second device on all pilot subcarriers included in the first frequency band.

According to a fourth aspect, a communication apparatus is provided. The apparatus includes a processing module and a transceiver module.

The processing module is configured to determine a first frequency band to which a discrete RU allocated to the processing module belongs, where the first frequency band includes pilot subcarriers in a first discrete RU group and pilot subcarriers in a second discrete RU group, and the pilot subcarriers in the first discrete RU group and the pilot subcarriers in the second discrete RU group do not overlap.

The receiver module is configured to send a first pilot signal of a first device to a second device on all pilot subcarriers in the first discrete RU group or the second discrete RU group.

Optionally, with reference to the first aspect, the second aspect, the third aspect, or the fourth aspect, the first pilot signal of the first device is related to a preset matrix $W$ and a column vector $s_k^t$, $W$ is a reversible matrix with Nu rows and Nu columns, $W$ satisfies the following equation: $W = [w_1, w_2, ..., w_{Nu}]$, $w_x$ is a column vector, x is an integer greater than or equal to 1 and less than or equal to Nu, Nu is an integer greater than 0, $W$ is used to control pilot signals transmitted by Nu devices in Nu time units, a column index of $W$ is a time unit index, a row index of $W$ is a device index, and the Nu devices include the first device. $s_k^t$ indicates pilot signals corresponding to the first device on all the pilot subcarriers included in the first frequency band in a $t^{th}$ time unit, a quantity of columns of $s_k^t$ is a quantity of all the pilot subcarriers included in the first frequency band, an $n^{th}$ element in $s_k^t$ indicates a pilot signal corresponding to the first device on an $n^{th}$ pilot subcarrier included in the first frequency band, n is an integer greater than 0 and less than or equal to the quantity of columns of $s_k^t$, k is an integer greater than or equal to 1 and less than or equal to Nu, t is an integer greater than or equal to 0, and t is a time unit index.

It may be learned that, in the foregoing technical solution, the first pilot signal of the first device is related to the preset matrix $W$ and the column vector $s_k^t$, so that a receiver can separate a pilot signal of a single device.

Optionally, with reference to the first aspect, the second aspect, the third aspect, or the fourth aspect, first pilot signals $q_t$ of the Nu devices satisfy the following equation: $q_t = [s_1^t \quad s_2^t \quad s_3^t \quad ... \quad s_{Nu}^t] w_{tt}$, tt = mod(t, Nu) + 1, $w_{tt}$ indicates a $tt^{th}$ column vector in $W$, $q_t$ is a column vector, a quantity of columns of $q_t$ is a quantity of all the pilot subcarriers included in the first frequency band, tt is an integer greater than or equal to 1 and less than or equal to Nu, and the first pilot signals of the Nu devices are sent on all the pilot subcarriers included in the first frequency band.

It may be learned that, in the foregoing technical solution, the first pilot signals $q_t$ of the Nu devices satisfy the following equation: $q_t = [s_1^t \quad s_2^t \quad s_3^t \quad ... \quad s_{Nu}^t] w_{tt}$, so that the receiver can separate a pilot signal of a single device.

Optionally, the first pilot signal of the first device is $s_k^t W_{k,tt}$ , $W_{k,tt}$ is an element in a $k^{th}$ row and a $tt^{th}$ column in $W$, tt = mod(t, Nu) + 1, and tt is an integer greater than or equal to 1 and less than or equal to Nu.

Optionally, with reference to the first aspect, the second aspect, the third aspect, or the fourth aspect, $W$ is an orthogonal matrix;

$W$ is a 2×n-order Hadamard matrix $H_{2n}$, and $H_{2n}$ satisfies the following equation: $H_{2n} = \begin{bmatrix} H_n & H_n \\ -H_n & H_n \end{bmatrix}$ , where $H_n$ is an n-order Hadamard matrix, and n is an integer greater than or equal to 1;

$W$ is a 2×n-order P matrix $P_{2n \times 2n}$, and $P_{2n \times 2n}$ satisfies the following equation: $P_{2n \times 2n} = \begin{bmatrix} P_{n \times n} & P_{n \times n} \\ P_{n \times n} & -P_{n \times n} \end{bmatrix}$ , where $P_{n \times n}$ is an n-order P matrix; or

$W$ is a diagonal matrix, and the diagonal matrix is an identity matrix.

Optionally, with reference to the first aspect, the second aspect, the third aspect, or the fourth aspect, n is 1, and $H_{2n} = \begin{bmatrix} 1 & 1 \\ -1 & 1 \end{bmatrix}$;

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and

n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

Optionally, with reference to the first aspect, the second aspect, the third aspect, or the fourth aspect, partial elements in sk are set to zero.

Optionally, with reference to the first aspect, the second aspect, the third aspect, or the fourth aspect, the first pilot signal of the first device occupies different pilot subcarriers in different time units in the Nu time units, and a total quantity of pilot subcarriers occupied by the first pilot signal of the first device in the Nu time units is a total quantity of the pilot subcarriers included in the first frequency band.

According to a fifth aspect, a pilot signal demodulation method is provided. The method includes:

a second device receives second pilot signals of at least two first devices on all pilot subcarriers included in a first frequency band, where the first frequency band is a frequency band to which discrete resource units RUs allocated to the at least two first devices belong; and

the second device processes the second pilot signals of the at least two first devices, to obtain first pilot signals sent by the at least two first devices.

It may be learned that, in the foregoing technical solution, an AP may receive second pilot signals of at least two STAs on all pilot subcarriers included in a first frequency band, so that the AP may process the second pilot signals of the at least two STAs, to obtain a first pilot signal sent by each STA, thereby separating a pilot signal of a single STA.

According to a sixth aspect, a pilot signal demodulation method is provided. The method includes:

a second device receives second pilot signals of at least two first devices on all pilot subcarriers included in a first discrete RU group or a second discrete RU group, where the first discrete RU group or the second discrete RU group is included in a first frequency band, and the first frequency band is a frequency band to which discrete RUs allocated to the at least two first devices belong; and

the second device processes the second pilot signals of the at least two first devices, to obtain first pilot signals sent by the at least two first devices.

It may be learned that, in the foregoing technical solution, an AP may receive second pilot signals of at least two STAs on all pilot subcarriers included in a first discrete RU group or a second discrete RU group, so that the AP may process the second pilot signals of the at least two STAs, to obtain a first pilot signal sent by each STA, thereby separating a pilot signal of a single STA.

According to a seventh aspect, a communication apparatus is provided. The apparatus includes a transceiver module and a processing module.

The transceiver module is configured to receive second pilot signals of at least two first devices on all pilot subcarriers included in a first frequency band, where the first frequency band is a frequency band to which discrete resource units RUs allocated to the at least two first devices belong.

The processing module is configured to process the second pilot signals of the at least two first devices, to obtain first pilot signals sent by the at least two first devices.

According to an eighth aspect, a communication apparatus is provided. The apparatus includes a transceiver module and a processing module.

The transceiver module is configured to receive second pilot signals of at least two first devices on all pilot subcarriers included in a first discrete RU group or a second discrete RU group, where the first discrete RU group or the second discrete RU group is included in a first frequency band, and the first frequency band is a frequency band to which discrete RUs allocated to the at least two first devices belong.

The processing module is configured to process the second pilot signals of the at least two first devices, to obtain first pilot signals sent by the at least two first devices.

Optionally, with reference to the fifth aspect, the sixth aspect, the seventh aspect, or the eighth aspect, the second pilot signals $X$ of the at least two first devices satisfy the following equation:

$$X = G[s_1 \quad s_2 \quad s_3 \quad ... \quad s_{Nu}]W \text{ or } X = G[s_1 \quad s_2 \quad s_3 \quad ... \quad s_{Nu}]W + Z.$$

$G$ is a channel parameter, $Z$ is a noise, $W$ satisfies the following equation: $W = [w_1, w_2, ..., w_{Nu}]$, $w_x$ is a column vector, x is an integer greater than or equal to 1 and less than or equal to Nu, Nu is an integer greater than 1, $W$ is used to control pilot signals transmitted by the at least two first devices in Nu time units, a column index of $W$ is a time unit index, and a row index of $W$ is a device index.

A quantity of columns of $s_k$ is a quantity of all the pilot subcarriers included in the first frequency band, an $n^{th}$ element in $s_k$ indicates a pilot signal corresponding to a $k^{th}$ first device in the at least two first devices on an $n^{th}$ pilot subcarrier included in the first frequency band, n is an integer greater than 0 and less than or equal to the quantity of columns of $s_k$, k is an integer greater than or equal to 1 and less than or equal to Nu, t is an integer greater than or equal to 0, and t is a time unit index.

It may be learned that, in the foregoing technical solution, the second pilot signals $X$ of the at least two first devices satisfy the following equation:
$X = G[s_1 s_2 s_3 ... s_{Nu}]W$ or $X = G[s_1 s_2 s_3 ... s_{Nu}]W + Z$, so that the second device can separate a pilot signal of a single first device.

Optionally, with reference to the fifth aspect, the sixth aspect, the seventh aspect, or the eighth aspect, the first pilot signals sent by the at least two first devices are $[s_1\ s_2\ s_3\ ...\ s_{Nu}]W$.

It may be learned that, in the foregoing technical solution, the first pilot signals sent by the at least two first devices are $[s_1\ s_2\ s_3\ ...\ s_{Nu}]W$, so that the second device can separate a pilot signal of a single device.

Optionally, with reference to the fifth aspect, the sixth aspect, the seventh aspect, or the eighth aspect,

$W$ is an orthogonal matrix;
$W$ is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

where $H_n$ is an n-order Hadamard matrix, and n is an integer greater than or equal to 1;
$W$ is a 2×n-order P matrix $P_{2n \times 2n}$, and $P_{2n \times 2n}$ satisfies the following equation:

$$P_{2n \times 2n} = \begin{bmatrix} P_{n \times n} & P_{n \times n} \\ P_{n \times n} & -P_{n \times n} \end{bmatrix},$$

where $P_{n \times n}$ is an n-order P matrix; or
$W$ is a diagonal matrix, and the diagonal matrix is an identity matrix.

Optionally, with reference to the fifth aspect, the sixth aspect, the seventh aspect, or the eighth aspect,

n is 1, and

$$H_{2n} = \begin{bmatrix} 1 & 1 \\ -1 & 1 \end{bmatrix};$$

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and
n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

Optionally, with reference to the fifth aspect, the sixth aspect, the seventh aspect, or the eighth aspect, partial elements of partial column vectors in $[s_1\ s_2\ s_3\ ...\ s_{Nu}]$ are set to zero.

Optionally, with reference to the fifth aspect, the sixth aspect, the seventh aspect, or the eighth aspect, the first pilot signal of one first device in the at least two first devices occupies different pilot subcarriers in different time units in the Nu time units, and a total quantity of pilot subcarriers occupied by the first pilot signal of one first device in the Nu time units is a total quantity of the pilot subcarriers included in the first frequency band.

According to a ninth aspect, a method for sending data in a wireless network is provided. The method includes:

a first device determines a discrete resource unit RU allocated to the first device, where the discrete RU includes data subcarriers and pilot subcarriers, all subcarriers in one discrete RU are distributed on a first frequency band, a size of the first frequency band is 20 MHz, and the first frequency band includes a maximum of 18 pilot subcarriers that are spaced; and
a quantity of pilot subcarriers included in one discrete RU is greater than or equal to 2, and at least two pilot subcarriers included in one discrete RU are spaced by at least M pilot subcarriers; and
the first device sends a physical layer protocol data unit PPDU on the discrete RU.

It may be learned that, in the foregoing technical solution, all subcarriers in a discrete RU allocated to a STA are distributed on a 20 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

According to a tenth aspect, a method for sending data in a wireless network is provided. The method includes: a second device receives a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 20 MHz, and the first frequency band includes a maximum of 18 pilot subcarriers that are spaced.

A quantity of pilot subcarriers included in one discrete RU is greater than or equal to 2, and at least two pilot subcarriers included in one discrete RU are spaced by at least M pilot subcarriers.

It may be learned that, in the foregoing technical solution, all subcarriers in a discrete RU allocated to a STA are distributed on a 20 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, receiving the PPDU on the discrete RU is also implemented.

According to an eleventh aspect, a communication apparatus is provided. The apparatus includes a processing module and a transceiver module.

The processing module is configured to determine a discrete resource unit RU allocated to the processing module, where the discrete RU includes data subcarriers and pilot subcarriers, all subcarriers in one discrete RU are distributed on a first frequency band, a size of the first frequency band is 20 MHz, and the first frequency band includes a maximum of 18 pilot subcarriers that are spaced.

A quantity of pilot subcarriers included in one discrete RU is greater than or equal to 2, and at least two pilot subcarriers included in one discrete RU are spaced by at least M pilot subcarriers.

The transceiver module is configured to send a physical layer protocol data unit PPDU on the discrete RU.

According to a twelfth aspect, a communication apparatus is provided. The apparatus includes a transceiver module.

The transceiver module is configured to receive a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 20 MHz, and the first frequency band includes a maximum of 18 pilot subcarriers that are spaced.

A quantity of pilot subcarriers included in one discrete RU is greater than or equal to 2, and at least two pilot subcarriers included in one discrete RU are spaced by at least M pilot subcarriers.

Optionally, with reference to the ninth aspect, the tenth aspect, the eleventh aspect, or the twelfth aspect, the maximum of 18 pilot subcarriers spaced in the first frequency band are the same as pilot subcarriers in a continuous RU mode.

Optionally, with reference to the ninth aspect, the tenth aspect, the eleventh aspect, or the twelfth aspect, one discrete RU corresponds to one continuous RU, one continuous RU includes at least two pilot subcarriers, and there is an intersection set between indices of pilot subcarriers in one discrete RU and indices of pilot subcarriers in the continuous RU.

Optionally, with reference to the ninth aspect, the tenth aspect, the eleventh aspect, or the twelfth aspect, the discrete RU is a discrete 26-tone RU, the discrete 26-tone RU includes 24 data subcarriers and 2 pilot subcarriers, and the 2 pilot subcarriers are spaced by at least 9 pilot subcarriers.

Optionally, with reference to the ninth aspect, the tenth aspect, the eleventh aspect, or the twelfth aspect, the discrete RU is a discrete 52-tone RU, the discrete 52-tone RU includes two discrete 26-tone RUs, and pilot subcarriers in the discrete 52-tone RU include some or all of pilot subcarriers in the two discrete 26-tone RUs.

Optionally, with reference to the ninth aspect, the tenth aspect, the eleventh aspect, or the twelfth aspect, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 9 pilot subcarriers.

Optionally, with reference to the ninth aspect, the tenth aspect, the eleventh aspect, or the twelfth aspect, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

Optionally, with reference to the ninth aspect, the tenth aspect, the eleventh aspect, or the twelfth aspect, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 9 pilot subcarriers.

According to a thirteenth aspect, a method for sending data in a wireless network is provided. The method includes:

a first device determines a discrete resource unit RU allocated to the first device, where the discrete RU includes data subcarriers and pilot subcarriers, all subcarriers in one discrete RU are distributed on a first frequency band, a size of the first frequency band is 40 MHz, and the first frequency band includes a maximum of 36 pilot subcarriers that are spaced; and

a quantity of pilot subcarriers included in one discrete RU is greater than or equal to 2, and at least two pilot subcarriers included in one discrete RU are spaced by at least M pilot subcarriers; and

the first device sends a physical layer protocol data unit PPDU on the discrete RU.

It may be learned that, in the foregoing technical solution, all subcarriers in a discrete RU allocated to a STA are distributed on a 40 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

According to a fourteenth aspect, a method for sending data in a wireless network is provided. The method includes:

a second device receives a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 40 MHz, and the first frequency band includes a maximum of 36 pilot subcarriers that are spaced.

A quantity of pilot subcarriers included in one discrete RU is greater than or equal to 2, and at least two pilot subcarriers included in one discrete RU are spaced by at least M pilot subcarriers.

It may be learned that, in the foregoing technical solution, all subcarriers in a discrete RU allocated to a STA are distributed on a 40 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, receiving the PPDU on the discrete RU is also implemented.

According to a fifteenth aspect, a communication apparatus is provided. The apparatus includes a transceiver module.

The transceiver module is configured to determine a discrete resource unit RU allocated to the transceiver module, where the discrete RU includes data subcarriers and pilot subcarriers, all subcarriers in one discrete RU are distributed on a first frequency band, a size of the first frequency band is 40 MHz, and the first frequency band includes a maximum of 36 pilot subcarriers that are spaced.

A quantity of pilot subcarriers included in one discrete RU is greater than or equal to 2, and at least two pilot subcarriers included in one discrete RU are spaced by at least M pilot subcarriers.

The first device sends a physical layer protocol data unit PPDU on the discrete RU.

According to a sixteenth aspect, a communication apparatus is provided. The apparatus includes a transceiver module.

The transceiver module is configured to receive a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 40 MHz, and the first frequency band includes a maximum of 36 pilot subcarriers that are spaced.

A quantity of pilot subcarriers included in one discrete RU is greater than or equal to 2, and at least two pilot subcarriers included in one discrete RU are spaced by at least M pilot subcarriers.

Optionally, with reference to the thirteenth aspect, the fourteenth aspect, the fifteenth aspect, or the sixteenth aspect, the discrete RU is a discrete 26-tone RU, the discrete 26-tone RU includes 24 data subcarriers and 2 pilot subcarriers, and the 2 pilot subcarriers are spaced by at least 18 pilot subcarriers.

Optionally, with reference to the thirteenth aspect, the fourteenth aspect, the fifteenth aspect, or the sixteenth aspect, the discrete RU is a discrete 52-tone RU, the discrete 52-tone RU includes two discrete 26-tone RUs, and pilot subcarriers in the discrete 52-tone RU include some or all of pilot subcarriers in the two discrete 26-tone RUs.

Optionally, with reference to the thirteenth aspect, the fourteenth aspect, the fifteenth aspect, or the sixteenth aspect, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 18 pilot subcarriers.

Optionally, with reference to the thirteenth aspect, the fourteenth aspect, the fifteenth aspect, or the sixteenth aspect, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

Optionally, with reference to the thirteenth aspect, the fourteenth aspect, the fifteenth aspect, or the sixteenth aspect, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 18 pilot subcarriers.

Optionally, with reference to the thirteenth aspect, the fourteenth aspect, the fifteenth aspect, or the sixteenth aspect, the discrete RU is a discrete 242-tone RU, the discrete 242-tone RU includes two discrete 106-tone RUs, and pilot subcarriers in the discrete 242-tone RU include some or all of pilot subcarriers in the two discrete 106-tone RUs.

Optionally, with reference to the thirteenth aspect, the fourteenth aspect, the fifteenth aspect, or the sixteenth aspect, the discrete RU is a discrete 242-tone RU, a quantity of data subcarriers included in the discrete 242-tone RU is greater than or equal to 224, a quantity of pilot subcarriers included in the discrete 242-tone RU is greater than or equal to 2 and less than or equal to 18, and at least two pilot subcarriers in a maximum of 18 pilot subcarriers are spaced by at least 18 pilot subcarriers.

According to a seventeenth aspect, a method for sending data in a wireless network is provided. The method includes:

a first device determines a discrete resource unit RU allocated to the first device, where the discrete RU includes data subcarriers and pilot subcarriers, all subcarriers in one discrete RU are distributed on a first frequency band, a size of the first frequency band is 80 MHz, and the first frequency band includes 72 pilot subcarriers that are spaced; and
a quantity of pilot subcarriers included in one discrete RU is greater than or equal to 2, and at least two pilot subcarriers included in one discrete RU are spaced by at least M pilot subcarriers; and
the first device sends a physical layer protocol data unit PPDU on the discrete RU.

It may be learned that, in the foregoing technical solution, all subcarriers in a discrete RU allocated to a STA are distributed on an 80 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

According to an eighteenth aspect, a method for sending data in a wireless network is provided. The method includes:

a second device receives a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 80 MHz, and the first frequency band includes 72 pilot subcarriers that are spaced.

A quantity of pilot subcarriers included in one discrete RU is greater than or equal to 2, and at least two pilot subcarriers included in one discrete RU are spaced by at least M pilot subcarriers.

It may be learned that, in the foregoing technical solution, all subcarriers in a discrete RU allocated to a STA are distributed on an 80 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, receiving the PPDU on the discrete RU is also implemented.

According to a nineteenth aspect, a communication apparatus is provided. The apparatus includes a processing module and a transceiver module.

The processing module is configured to determine a discrete resource unit RU allocated to the processing module, where the discrete RU includes data subcarriers and pilot subcarriers, all subcarriers in one discrete RU are distributed on a first frequency band, a size of the first frequency band is 80 MHz, and the first frequency band includes 72 pilot subcarriers that are spaced.

A quantity of pilot subcarriers included in one discrete RU is greater than or equal to 2, and at least two pilot subcarriers included in one discrete RU are spaced by at least M pilot subcarriers.

The transceiver module is configured to send a physical layer protocol data unit PPDU on the discrete RU.

According to a twentieth aspect, a communication apparatus is provided. The apparatus includes a transceiver module.

The transceiver module is configured to receive a physical layer protocol data unit PPDU on a discrete RU allocated to a first device.

The discrete RU includes data subcarriers and pilot subcarriers, all subcarriers in one discrete RU are distributed on a first frequency band, a size of the first frequency band is 80 MHz, and the first frequency band includes 72 pilot subcarriers that are spaced.

A quantity of pilot subcarriers included in one discrete RU is greater than or equal to 2, and at least two pilot subcarriers included in one discrete RU are spaced by at least M pilot subcarriers.

Optionally, with reference to the seventeenth aspect, the eighteenth aspect, the nineteenth aspect, or the twentieth aspect, the discrete RU is a discrete 26-tone RU, the discrete 26-tone RU includes 24 data subcarriers and 2 pilot subcarriers, and the 2 pilot subcarriers are spaced by at least 36 pilot subcarriers.

Optionally, with reference to the seventeenth aspect, the eighteenth aspect, the nineteenth aspect, or the twentieth aspect, the discrete RU is a discrete 52-tone RU, the discrete 52-tone RU includes two discrete 26-tone RUs, and pilot subcarriers in the discrete 52-tone RU include some or all of pilot subcarriers in the two discrete 26-tone RUs.

Optionally, with reference to the seventeenth aspect, the eighteenth aspect, the nineteenth aspect, or the twentieth aspect, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 36 pilot subcarriers.

Optionally, with reference to the seventeenth aspect, the eighteenth aspect, the nineteenth aspect, or the twentieth aspect, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

Optionally, with reference to the seventeenth aspect, the eighteenth aspect, the nineteenth aspect, or the twentieth aspect, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 36 pilot subcarriers.

Optionally, with reference to the seventeenth aspect, the eighteenth aspect, the nineteenth aspect, or the twentieth aspect, the discrete RU is a discrete 242-tone RU, the discrete 242-tone RU includes two discrete 106-tone RUs, and pilot subcarriers in the discrete 242-tone RU include some or all of pilot subcarriers in the two discrete 106-tone RUs.

Optionally, with reference to the seventeenth aspect, the eighteenth aspect, the nineteenth aspect, or the twentieth aspect, the discrete RU is a discrete 242-tone RU, a quantity of data subcarriers included in the discrete 242-tone RU is greater than or equal to 224, a quantity of pilot subcarriers included in the discrete 242-tone RU is greater than or equal to 2 and less than or equal to 18, and at least two pilot subcarriers in a maximum of 18 pilot subcarriers are spaced by at least 36 pilot subcarriers.

Optionally, with reference to the seventeenth aspect, the eighteenth aspect, the nineteenth aspect, or the twentieth aspect, the discrete RU is a discrete 484-tone RU, the discrete 484-tone RU includes two discrete 242-tone RUs, and pilot subcarriers in the discrete 484-tone RU include some or all of pilot subcarriers in the two discrete 242-tone RUs.

Optionally, with reference to the seventeenth aspect, the eighteenth aspect, the nineteenth aspect, or the twentieth aspect, the discrete RU is a discrete 484-tone RU, a quantity of data subcarriers included in the discrete 484-tone RU is greater than or equal to 448, a quantity of pilot subcarriers included in the discrete 484-tone RU is greater than or equal to 2 and less than or equal to 36, and at least two pilot subcarriers in a maximum of 36 pilot subcarriers are spaced by at least 36 pilot subcarriers.

According to a twenty-first aspect, a chip is provided. The chip includes at least one processor and an interface. The processor is configured to read and execute instructions stored in a memory. When the instructions are run, the chip is enabled to perform the method according to any one of the first aspect, the second aspect, the fifth aspect, the sixth aspect, the ninth aspect, the tenth aspect, the thirteenth aspect, the fourteenth aspect, the seventeenth aspect, or the eighteenth aspect.

According to a twenty-second aspect, a computer-readable storage medium is provided. The computer-readable storage medium stores a computer program. The computer program includes program instructions. When the program instructions are executed by a computer, the computer is enabled to perform the method according to any one of the first aspect, the second aspect, the fifth aspect, the sixth aspect, the ninth aspect, the tenth aspect, the thirteenth aspect, the fourteenth aspect, the seventeenth aspect, or the eighteenth aspect.

According to a twenty-third aspect, a communication apparatus is provided. The apparatus includes a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to implement the method according to the first aspect, the second aspect, the fifth aspect, the sixth aspect, the ninth aspect, the tenth aspect, the thirteenth aspect, the fourteenth aspect, the seventeenth aspect, or the eighteenth aspect.

According to a twenty-fourth aspect, a communication system is provided. The system includes the foregoing first device and/or the foregoing second device.


## BRIEF DESCRIPTION OF DRAWINGS

The following briefly describes accompanying drawings used in descriptions of embodiments or a conventional technology.

FIG. 1A and FIG. 1B are a schematic diagram of mapping a virtual resource unit (virtual resource unit, VRU) to a physical resource unit (physical RU, PRU);
FIG. 2 is a schematic diagram of a linear difference;
FIG. 3 is a diagram of a network architecture of a WLAN according to an embodiment of this application;
FIG. 4 is a schematic diagram of a hardware structure of a communication apparatus applicable to an embodiment of this application;
FIG. 5 is a schematic flowchart of a pilot signal transmission method according to an embodiment of this application;
FIG. 6 is a schematic diagram in which only a single STA transmits a pilot signal in each time unit in a period of 4 according to an embodiment of this application;
FIG. 7 is a schematic diagram in which different stations transmit pilot signals on pilot subcarriers corresponding to different time units according to an embodiment of this application;
FIG. 8 is a schematic diagram of a tone plan and an RU plan of 20 MHz;
FIG. 9 is a diagram of a pilot transmission mode according to an embodiment of this application;
FIG. 10 is a schematic diagram in which different STAs transmit pilot signals by using an example in which 4 stations occupy a discrete 242-tone RU (equivalent to a 20 MHz bandwidth, where the 20 MHz bandwidth includes a maximum of 8 pilot subcarriers) according to an embodiment of this application;

FIG. 11 is a schematic flowchart of another pilot signal transmission method according to an embodiment of this application;

FIG. 12 is a schematic flowchart of a pilot signal demodulation method according to an embodiment of this application;

FIG. 13 is a schematic flowchart of another pilot signal demodulation method according to an embodiment of this application;

FIG. 14 is a schematic flowchart of a method for sending data in a wireless network according to an embodiment of this application;

FIG. 15 shows sequence indices of 18 pilot subcarriers corresponding to a case in which a size of a first frequency band is 20 MHz;

FIG. 16 is a schematic flowchart of another method for sending data in a wireless network according to an embodiment of this application;

FIG. 17 is a schematic flowchart of another method for sending data in a wireless network according to an embodiment of this application; and

FIG. 18 is a schematic diagram of a structure of a communication apparatus according to an embodiment of this application.

## DESCRIPTION OF EMBODIMENTS

The following describes technical solutions in embodiments of this application with reference to accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

The following explains and describes some terms (or communication terms) in this application.

1. Continuous RU (continuous RU, CRU)

In this specification, the continuous RU is an RU including a plurality of continuous subcarriers, or the continuous RU is an RU including two continuous subcarrier groups. A plurality of subcarriers included in each continuous subcarrier group are continuous. The two subcarrier groups are only spaced by one or more of a guard subcarrier, a null subcarrier, or a direct current subcarrier. All RUs supported in the 802.11ax may be understood as continuous RUs. A continuous RU may also be referred to as a regular RU. Certainly, the continuous RU may alternatively have another name. A specific name of the continuous RU is not limited in embodiments of this application.

In embodiments of this application, a continuous RU including K subcarriers is referred to as a continuous K-tone RU. For example, a continuous 26-tone RU is a continuous RU including 26 subcarriers. In other words, a concept of the continuous K-tone RU is the same as a concept of a K-tone RU in the existing 802.11ax standard.

2. Discrete RU (discrete RU, DRU)

Compared with a continuous RU, an RU that includes a plurality of subcarrier groups discrete in frequency domain may be referred to as a discrete RU. In other words, the discrete RU includes a plurality of subcarrier groups, and any two subcarrier groups are discrete in frequency domain. One subcarrier group includes one subcarrier, or one subcarrier group includes at least two continuous subcarriers. In other words, one subcarrier group includes one subcarrier or includes a plurality of continuous subcarriers. The discrete RU may also be referred to as a distributed RU (distributed RU, DRU). Certainly, in another embodiment, the discrete RU may have another name. The name of the discrete RU is not limited in this application. In this application, a quantity of subcarrier groups included in one discrete RU is greater than or equal to 2.

In embodiments of this application, a discrete RU including K subcarriers may be referred to as a discrete K-tone RU. For example, a discrete 26-tone RU refers to a discrete RU including 26 subcarriers. For a value of K, refer to a value of K used for a continuous RU. Certainly, the value of K may be different from the value of K used for the continuous RU. For example, when the bandwidth is 20 MHz, 20 MHz may include a combination of one or more of discrete 26-tone RUs, discrete 52-tone RUs, discrete 106-tone RUs, or discrete 242-tone RUs.

In this application, one discrete RU and another discrete RU may form a discrete MRU. The discrete MRU can be allocated to one or more stations. For example, a discrete 242-tone RU and a discrete 484-tone RU may form a discrete 484+242-tone RU.

In some examples, quantities of subcarriers included in any two of the plurality of subcarrier groups included in the discrete RU may be the same or may be different. For example, a quantity of subcarriers in each subcarrier group may be 1. For another example, quantities of subcarriers in some subcarrier groups are 1, and quantities of subcarriers in the other subcarrier groups are 2. In other words, one discrete RU may include 4 subcarrier groups, and quantities of subcarriers in the 4 subcarrier groups may be 1, 1, 2, and 2 sequentially.

It should be noted that, in this application, one discrete RU may correspond to one continuous RU. For example, one discrete 26-tone RU may correspond to one continuous 26-tone RU, and one discrete 52-tone RU may correspond to one continuous 52-tone RU.

It should be understood that the discrete RU may be obtained by discretely using a continuous RU specified in the 802.11ax or the 802.11be, or may be redefined without depending on a continuous RU specified in the 802.11ax or the 802. 11be.

When an allocation status of a discrete RU and a continuous RU is indicated, same resource allocation indication information, for example, a same index, may indicate an allocated RU. A transmitter and a receiver determine, according to a protocol specification and whether in a discrete RU mode or a continuous RU mode, whether the resource allocation indication information specifically represents the discrete RU or the continuous RU. Briefly, the discrete RU and the continuous RU may reuse resource indication information.

In addition, when the discrete RU is obtained based on the continuous RU, the continuous RU may be referred to as a VRU, and the discrete RU may be referred to as a PRU. In other words, a process of mapping a continuous RU into a discrete RU may be referred to as a process of mapping a VRU into a PRU. The foregoing resource indication information may indicate a corresponding PRU by indicating an index of a VRU.

3. Frequency band

In this application, a frequency band is a frequency band range, and may also be referred to as a bandwidth, for example, 20 MHz, 40 MHz, 80 MHz, 160 MHz, 320 MHz, or 160+160 MHz.

According to the IEEE 802.11ax protocol, a bandwidth of 20 MHz, 40 MHz, 80 MHz, and 160 MHz may be divided into multiple types of resource units (resource unit, RU), including a continuous 26-tone RU, a continuous 52-tone RU, a continuous 106-tone RU, a continuous 242-tone RU (a maximum RU in a 20 MHz bandwidth), a continuous 484-tone RU (a maximum RU in a 40 MHz bandwidth), a continuous 996-tone RU (a maximum RU in an 80 MHz bandwidth), and a continuous $2\times996$-tone RU (a maximum RU in a 160 MHz bandwidth). The entire bandwidth may include, for example, guard (Guard) subcarriers, null subcarriers, direct current (direct current, DC) subcarriers, pilot subcarriers, and data subcarriers.

It should be noted that, in this application, a frequency band is a frequency band range occupied or covered by an allocated RU, and the frequency band range is not equivalent to an operating bandwidth or a system bandwidth. During implementation, the frequency band range may be less than or equal to the operating bandwidth or the system bandwidth.

For example, the operating bandwidth or the system bandwidth may be 40 MHz, and one continuous RU allocated by an AP to a STA may be discrete in 40 MHz. In this case, a corresponding first frequency band in this solution is 40 MHz. A continuous RU allocated by the AP to a STA 1 may be discrete in a first 20 MHz range, and another continuous RU allocated to a STA 2 may be discrete in a second 20 MHz range. In this case, for the STA 1 and the STA 2, first frequency bands occupied or covered by all subcarriers included in discrete RUs allocated to the STA 1 and the STA 2 are both 20 MHz. In a special example, the AP allocates a discrete RU 1 and a discrete RU 2 to the STA 1. The discrete RU 1 is discrete in a first 20 MHz range, and the discrete RU 2 is discrete in a second 20 MHz range. In this case, for the STA 1, the first frequency band is determined based on a sum of the discrete RUs allocated to the STA 1.

The discrete RU 1 and the discrete RU 2 allocated to the STA 1 cover or occupy a 40 MHz bandwidth. Therefore, the first frequency band is 40 MHz.

For another example, the AP allocates a discrete RU 1 to the STA 1, and allocates a discrete RU 2 to the STA 2. The discrete RU 1 is discrete in a first 20 MHz range, and the discrete RU 2 is discrete in a second 20 MHz range. In this case, for the STA 1, the discrete RU 1 allocated to the STA 1 covers or occupies a 20 MHz bandwidth. Therefore, the first frequency band is 20 MHz. In this case, for the STA 2, the discrete RU 1 allocated to the STA 2 covers or occupies a 20 MHz bandwidth. Therefore, the first frequency band is 20 MHz.

4. Time unit

The time unit may be a slot.

5. Linear interpolation (linear interpolation)

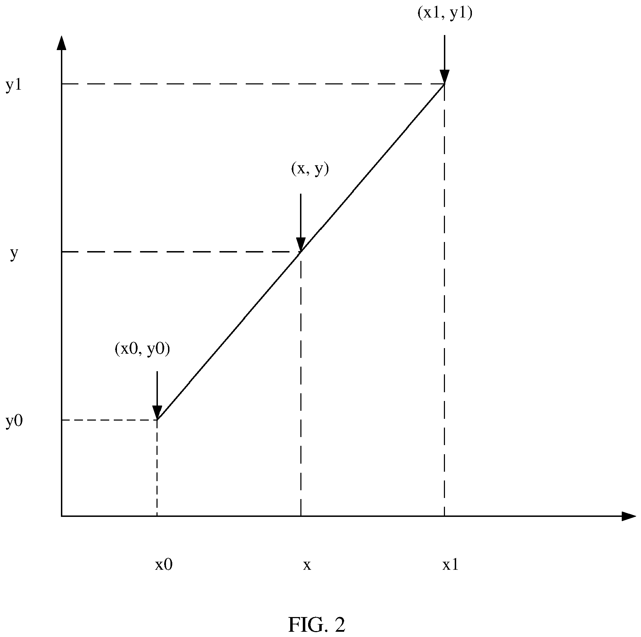

If pilot signals and data signals are transmitted through similar channels, the pilot subcarrier may be used to track some types of signal errors and correct these errors during demodulation at a receiver. This may be referred to as pilot tracking (pilot tracking), for example, tracking of a signal amplitude (signal amplitude), a signal phase (signal phase), and symbol timing (symbol timing). Generally, a commonly used algorithm for tracking is linear interpolation. For a usage of linear interpolation, refer to FIG. 2. As shown in FIG. 2, coordinate values (x0, y0) and (x1, y1) of two points are known. To obtain a value of a location x in an interval [x0, x1] on a straight line, an equation description of the straight line may be first obtained, and then x is substituted into the equation description to obtain y. The process of calculating x by y is similar. The x-axis corresponds to a carrier frequency value of a subcarrier, the y-axis corresponds to a carrier frequency offset of the subcarrier, and (x0, y0) and (x1, y1) may be used as carrier frequency values and carrier frequency offsets of different pilot subcarriers.

6. Hadamard (hadamard) matrix

The Hadamard matrix $H_n$ is a square matrix, and a quantity of rows and a quantity of columns are the same, and both are equal to an order (order) n. A value of an element in the Hadamard matrix may be 1 or -1, and satisfies:

$$H_n H_n^T = \ nI_n$$ , where $I_n$ is a unit matrix.

It should be noted that, in this application, the Hadamard matrix has the following characteristics:
A requirement of the orthogonal matrix is met. A value of an element in the Hadamard matrix may be 1 or -1, so that a transmit power is controlled, and calculation complexity is reduced. A high-order Hadamard matrix may be constructed by using a known low-order Hadamard matrix.

7. P matrix

In this application, the matrix P meets the following characteristics:
A requirement of an orthogonal matrix is met. Optionally, a value of an element in the P matrix may be 1 or -1, so that a transmit power is controlled, and calculation complexity is reduced. A high-order P matrix may be constructed by using a known low-order P matrix.

The foregoing content briefly describes meanings of nouns (communication terms) in embodiments of this application. To better understand the technical solutions provided in embodiments of this application, the foregoing content does not constitute a limitation on the technical solutions provided in embodiments of this application.

It should be understood that embodiments of this application may be applied to a wireless local area network (wireless local area network, WLAN) scenario, and may be applied to an IEEE 802.11 system standard, for example, 802.11a/b/g, 802.11n, 802.11ac, 802.11ax, or a next-generation standard, for example, 802.11be, or a further next-generation standard. Alternatively, embodiments of this application may be applied to a wireless local area network system, for example, an internet of things (internet of things, IoT) network or a vehicle-to-everything (Vehicle to X, V2X) network. Certainly, embodiments of this application may be further applied to another possible communication system, for example, an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a future 6G communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n can also be referred to as high throughput (high throughput, HT), 802.11ac can also be referred to as very high throughput (very high throughput, VHT), 802.11ax can also be referred to as high efficiency (high efficiency, HE) or Wi-Fi 6, and 802.11be can also be referred to as extremely high throughput (extremely high throughput, EHT) or Wi-Fi 7. Standards before HT, such as 802.11a/b/g, are collectively referred to as non-high throughput (Non-HT).

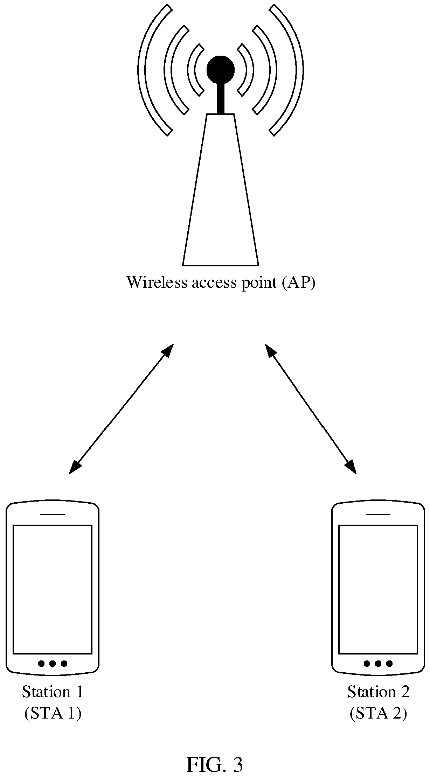

FIG. 3 is a diagram of a network architecture of a WLAN according to an embodiment of this application. In FIG. 1A and FIG. 1B, that the WLAN includes one wireless access point (access point, AP) and two stations (station, STA) is used as an example. A STA associated with an AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1A and FIG. 1B are merely an example. There may be more or less APs and STAs.

The STA in this embodiment of this application may be a user terminal, a user apparatus, an access apparatus, a subscriber station, a subscriber unit, a mobile station, a user agent, a user device, or another device that has a wireless communication function. The user terminal may be a device having a wireless communication function, for example, a handheld device, a vehicle-mounted device, a wearable device, a computing device, and another processing device connected to a wireless modem. The user terminal may alternatively be user equipment (user equipment, UE), a mobile station (mobile station, MS), a terminal (terminal), terminal equipment (terminal equipment), a portable communication device, a handheld device, a portable computing device, an entertainment device, a game device or system, a global positioning system device, or any other suitable device in various forms configured to perform network communication via wireless media. For example, the STA may be a router, a switch, a bridge, or the like. Herein, for ease of description, the devices mentioned above are collectively referred to as a station or a STA.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

In addition, the technical solutions provided in embodiments of this application are applicable to a plurality of system architectures. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Optionally, the wireless access point, the station, and the like in FIG. 3 may be implemented by one device, or may be jointly implemented by a plurality of devices, or may be a functional module in one device. This is not specifically limited in this embodiment of this application. It may be understood that the foregoing functions may be network elements in a hardware device, or may be software functions running on dedicated hardware, or may be virtualization functions instantiated on a platform (for example, a cloud platform).

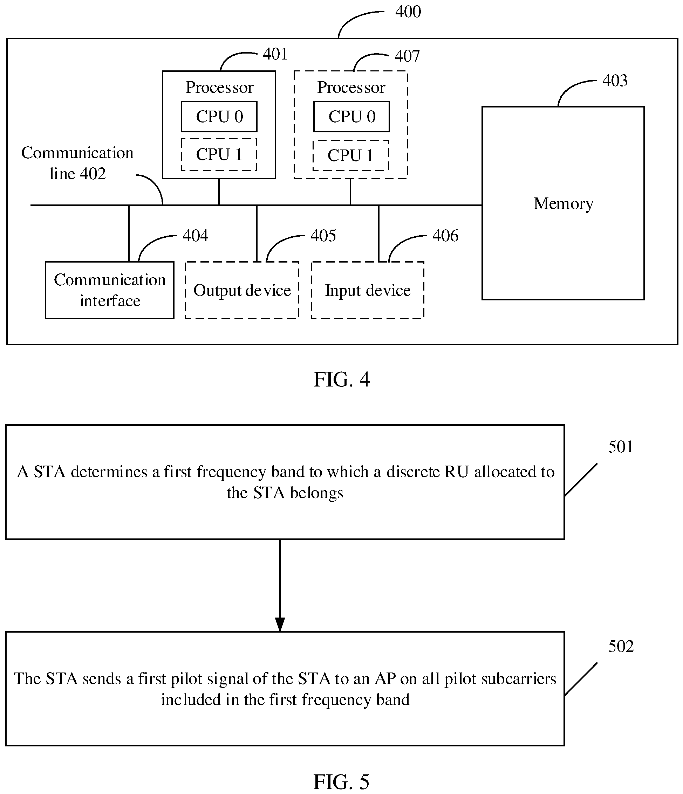

For example, each device in FIG. 3 may be implemented by a communication apparatus 400 in FIG. 4. FIG. 4 is a schematic diagram of a hardware structure of a communication apparatus applicable to an embodiment of this application. The communication apparatus 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for transmitting information between the foregoing components.

The communication interface 404 is an apparatus (such as an antenna) such as any transceiver, and is configured to communicate with another device or a communication network, such as the Ethernet, a RAN, or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 402. The memory may alternatively be integrated with the processor. The memory provided in embodiments of this application may be usually non-volatile. The memory 403 is configured to store computer-executable instructions for performing the solutions in this application, and the processor 401 controls execution. The processor 401 is configured to execute the computer-executable instructions stored in the memory 403, to implement methods provided in the following embodiments of this application.

Optionally, the computer-executable instructions in this embodiment of this application may also be referred to as application program code. This is not specifically limited in this embodiment of this application.

In a possible implementation, the processor 401 may include one or more CPUs, for example, a CPU 0 and a CPU 1 in FIG. 4.

In a possible implementation, the communication apparatus 400 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, a sensing device, or the like.

The foregoing communication apparatus 400 may be a general-purpose device or a special-purpose device. During specific implementation, the communication apparatus 400 may be a portable computer, a network server, a personal digital assistant (personal digital assistant, PDA), a mobile phone, a tablet computer, a wireless terminal device, an embedded device, or a device having a structure similar to that in FIG. 4. A type of the communication apparatus 400 is not limited in this embodiment of this application.

After the communication apparatus is powered on, the processor 401 may read the software program in the memory 403, interpret and execute instructions of the software program, and process data of the software program. When data needs to be sent wirelessly, the processor 401 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using an antenna. When data is sent to the communication apparatus, the radio frequency circuit receives a radio frequency signal by using the antenna, converts the radio frequency signal into a baseband signal, and outputs the baseband signal to the processor 401, and the processor 401 converts the baseband signal into data and processes the data.

In another implementation, the radio frequency circuit and the antenna may be disposed independent of the processor that performs baseband processing. For example, in a distributed scenario, the radio frequency circuit and the antenna may be separately disposed independent of the communication apparatus.

It may be understood that, in this application, a first device may be an AP, and a second device may be a STA or an AP; or a first device may be a STA, and a second device may also be a STA. The following describes the technical solutions provided in embodiments of this application by using an example in which the first device is a STA and the second device is an AP.

FIG. 5 is a schematic flowchart of a pilot signal transmission method according to an embodiment of this application. FIG. 5 mainly resolves the following problems existing in the two manners in FIG. 1A and FIG. 1B.

I. Pilot subcarriers are located close to data subcarriers, or pilot subcarriers are sparsely distributed on a frequency band with a bandwidth of 20 MHz. Therefore, problems such as narrowband interference and frequency selective fading may occur. This may greatly damage transmission of a pilot signal.

II. Pilot subcarriers are sparsely distributed on a frequency band with a bandwidth of 20 MHz. This may result in an inaccurate linear difference result.

III. A phase difference between distributed pilot subcarriers may exceed $2\pi$, which means that pilot phases are not in a same period. This may cause an error in a linear interpolation result.

IV. Pilot subcarriers may be far away from some data subcarriers. As a result, a linear difference implemented by using the pilot subcarriers cannot accurately cover some data subcarriers at a far location. For example, in Manner 2 in FIG. 1B, the pilot subcarriers are far away from some data subcarriers on the right side. As a result, the linear difference implemented by using the pilot subcarriers cannot accurately cover data subcarriers on the right side.

As shown in FIG. 5, the method includes but is not limited to the following steps.

501: A STA determines a first frequency band to which a discrete RU allocated to the STA belongs.

For a discrete RU, refer to the foregoing related descriptions. Details are not described herein again. It may be understood that, in this application, there may be one or more discrete RUs. This is not limited herein.

The first frequency band to which the discrete RU belongs is a frequency band range occupied by the discrete RU after distribution. The frequency band range may be, for example, 20 MHz, 40 MHz, 80 MHz, 160 MHz, 320 MHz, or 160+160 MHz. This is not limited herein.

It should be noted that, in this application, pilot subcarriers included in a continuous RU allocated to the STA may participate in or not participate in VRU-to-PRU distributed mapping. This is not limited herein.

502: The STA sends a first pilot signal of the STA to an AP on all pilot subcarriers included in the first frequency band.

Optionally, the first pilot signal of the STA is related to a preset matrix $\boldsymbol{W}$ and a column vector $\boldsymbol{s}_k^t$, $\boldsymbol{W}$ is a reversible matrix with Nu rows and Nu columns ($\boldsymbol{W}$ is full rank, and a rank is Nu), $\boldsymbol{W}$ satisfies the following equation: $\boldsymbol{W} = [w_1, w_2, ..., w_{Nu}]$, $w_x$ is a column vector, x is an integer greater than or equal to 1 and less than or equal to Nu, Nu is an integer greater than 0, $\boldsymbol{W}$ is used to control pilot signals transmitted by Nu STAs in Nu time units, a column index of $\boldsymbol{W}$ is a time unit index, a row index of $\boldsymbol{W}$ is a STA index, and the Nu STAs include the STA. sk indicates pilot signals corresponding to the STA on all the pilot subcarriers included in the first frequency band in a t$^{th}$ time unit, a quantity of columns of $\boldsymbol{s}_k^t$ is a quantity of all the pilot subcarriers included in the first frequency band, an n$^{th}$ element in $\boldsymbol{s}_k^t$ indicates a pilot signal corresponding to the STA on an n$^{th}$ pilot subcarrier included in the first frequency band, n is an integer greater than 0 and less than or equal to the quantity of columns of $\boldsymbol{s}_k^t$, k is an integer greater than or equal to 1 and less than or equal to Nu, t is an integer greater than or equal to 0, and t is a time unit index.

In this application, the Nu time units may be one period, an i$^{th}$ column of $\boldsymbol{W}$ is used to control pilot signals transmitted by the Nu STAs in an i$^{th}$ time unit, a j$^{th}$ row of $\boldsymbol{W}$ is used to control pilot signals transmitted by a j$^{th}$ STA in the Nu time units, i is an integer greater than or equal to 1 and less than or equal to Nu, and j is an integer greater than or equal to 1 and less than or equal to Nu. It may be understood that, in each time unit in different periods, $\boldsymbol{W}$ may be used to transmit a pilot signal. In different periods, values of elements in sk of a same STA may be the same or different. This is not limited herein. It should be noted that, in this application, a value of an element in $\boldsymbol{s}_k^t$ may be specified in a protocol or redesigned. This is not limited herein. For example, a value of an element in $\boldsymbol{s}_k^t$ may be 0, 1, -1, or the like specified in the section 27.3.12.13 of the 802.11ax-2021 standard. This is not limited herein. In addition, a value of an element in $\boldsymbol{s}_k^t$ may alternatively be a value specified in the 802.11be standard, or the like.

In this application, a value of each element in $\boldsymbol{W}$ may be any value. This is not limited herein. In consideration of transmit power control or to simplify calculation, a value of each element in $\boldsymbol{W}$ may be 0, 1, or -1. A quantity of STAs that can be supported by $\boldsymbol{W}$ to simultaneously transmit pilot signals is less than or equal to Nu.

For example, $\boldsymbol{W}$ is a 2-order Hadamard matrix $\boldsymbol{H_2}$, and $H_2 = \begin{bmatrix} 1 & 1 \\ -1 & 1 \end{bmatrix}$. An element in a 1$^{st}$ row and a 1$^{st}$ column is 1, and an element in a 1$^{st}$ row and a 2$^{nd}$ column is -1. In other words, in a first time unit, two STAs simultaneously send first pilot signals corresponding to the two STAs to an AP on all the pilot subcarriers included in the first frequency band. An element in a 1$^{st}$ row and a 2$^{nd}$ column is 1, and an element in a 2$^{nd}$ row and a 2$^{nd}$ column is -1. In other words, in a second time unit, two STAs simultaneously send first pilot signals corresponding to the two STAs to an AP on all the pilot subcarriers included in the first frequency band. In conclusion, a quantity of STAs that can be supported by $\boldsymbol{W}$ to simultaneously transmit pilot signals is equal to Nu (Nu is 2).

In this application, the quantity of columns of $\boldsymbol{s}_k^t$ is the quantity of all the pilot subcarriers included in the first frequency band. It may be understood that in the t$^{th}$ time unit, the quantity of columns of $\boldsymbol{s}_k^t$ is the quantity of all the pilot subcarriers included in the first frequency band, and the n$^{th}$ element in $\boldsymbol{s}_k^t$ indicates the pilot signal corresponding to the STA on the $n^{th}$ pilot subcarrier included in the first frequency band. For example, $s_k^1$. It may be understood that, in a $1^{st}$ time unit, a quantity of columns of $s_k^1$ is the quantity of all the pilot subcarriers included in the first frequency band, and an $n^{th}$ element in sk indicates the pilot signal corresponding to the STA on the $n^{th}$ pilot subcarrier included in the first frequency band. For example, $s_k^2$. It may be understood that, in a $2^{nd}$ time unit, a quantity of columns of $s_k^2$ is the quantity of all the pilot subcarriers included in the first frequency band, and an $n^{th}$ element in $s_k^2$ indicates the pilot signal corresponding to the STA on the $n^{th}$ pilot subcarrier included in the first frequency band.

Optionally, **W** is an orthogonal matrix;

**W** is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

where $H_n$ is an n-order Hadamard matrix, and n is an integer greater than or equal to 1;
**W** is a 2×n-order P matrix $P_{2n \times 2n}$, and $P_{2n \times 2n}$ satisfies the following equation:

$$P_{2n \times 2n} = \begin{bmatrix} P_{n \times n} & P_{n \times n} \\ P_{n \times n} & -P_{n \times n} \end{bmatrix},$$

where $P_{n \times n}$ is an n-order P matrix; or
**W** is a diagonal matrix, and the diagonal matrix is an identity matrix.

A value of an element in $H_n$ may be 1 or -1, and a value of an element in $P_{n \times n}$ may be 1 or -1. This is not limited herein.

Optionally, n is 1, and

$$H_{2n} = \begin{bmatrix} 1 & 1 \\ -1 & 1 \end{bmatrix};$$

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and

n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

Optionally, in this application, $W$ may be an a×b-order Hadamard matrix $H_{a \times b}$, and $H_{a \times b}$ may be implemented by using any one of the following solutions:

Solution A: Replace all 1 elements in $H_a$ with $H_b$, and replace all -1 elements in $H_a$ with $-H_b$.
Solution B: Replace all 1 elements in $H_b$ with $H_a$, and replace all -1 elements in $H_b$ with $-H_a$.

$H_a$ is an a-order Hadamard matrix, $H_b$ is a b-order Hadamard matrix, a value of an element in $H_a$ may be 1 or -1, a value of an element in $H_b$ may be 1 or -1, and both a and b are integers greater than or equal to 1.

It should be noted that, in this application, $W$ is a Hadamard matrix or a P matrix whose order is Nu, and can simultaneously support less than or equal to Nu STAs to transmit corresponding pilot signals on all pilot subcarriers on a same frequency band. For example, if 7 STAs need to be supported, $W$ may be a Hadamard matrix or a P matrix whose order is 8. A column of elements in the Hadamard matrix or the P matrix whose order is 8 may be any known value, for example, all 0s or all 1s. This is not limited herein. For example, an 8th column of elements in the Hadamard matrix or the P matrix whose order is 8 may be any known value, for example, all 0s or all 1s. If 12 STAs need to be supported, $W$ may be a Hadamard matrix or a P matrix whose order is 16. Four columns of elements in the Hadamard matrix or the P matrix whose order is 16 may be any known value, for example, all 0s or all 1s. This is not limited herein. For example, 12th to 16th columns of elements in the Hadamard matrix or the P matrix whose order is 16 may be any known value, for example, all 0s or all 1s. If 12 STAs need to be supported, $W$ may alternatively be a Hadamard matrix whose order is 12.

In this application, when $W$ is a diagonal matrix, only one STA in each time unit transmits a pilot signal on all the pilot subcarriers included in the first frequency band. For example, $W$ is a diagonal matrix with 2 rows and 2 columns,

that is, $W = \begin{bmatrix} 1 & 0 \\ 0 & 1 \end{bmatrix}$. An element in a 1st row and a 1st column is 1, and an element in a 1st row and a 2nd column is 0. In other words, in a first time unit, only one STA sends a first pilot signal corresponding to the STA to an AP on all the pilot subcarriers included in the first frequency band. An element in a 1st row and a 2nd column is 0, and an element in a 2nd row and a 2nd column is 1. In other words, in a second time unit, only one STA sends a first pilot signal corresponding to the STA to an AP on all the pilot subcarriers included in the first frequency band. In conclusion, a quantity of STAs that can be supported by $W$ to simultaneously transmit pilot signals is equal to 1.

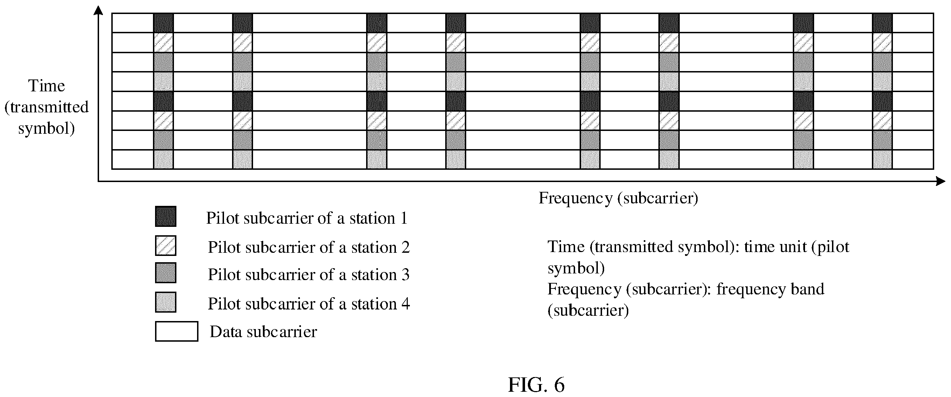

For another example, refer to FIG. 6. FIG. 6 is a schematic diagram in which only a single STA transmits a pilot signal in each time unit in a period of 4 according to an embodiment of this application. As shown in FIG. 6 (FIG. 6 shows only 8 pilot subcarriers, and other subcarriers are data subcarriers (white)), a horizontal axis in FIG. 6 is a first frequency band (locations of subcarriers), and a vertical axis is a time unit (8 time units in total from top to bottom). Only one STA transmits a pilot signal on all pilot subcarriers in each time unit. For example, in a first time unit, only a station 1 transmits a pilot signal on all the pilot subcarriers. In a second time unit, only a station 2 transmits a pilot signal on all the pilot subcarriers. In a third time unit, only a station 3 transmits a pilot signal on all the pilot subcarriers.

Optionally, the first pilot signal of the STA is $s_k^t W_{k,tt}$, where tt = mod(t, Nu) + 1, t is an integer greater than or equal to 0, t is an index of a time unit, and tt is an integer greater than or equal to 1 and less than or equal to Nu. $W_{k,tt}$ is an element in a kth row and a tt[th] column in $W$. tt indicates a tt[th] time unit in $W$.

Optionally, the first pilot signal of the STA is $s_k^t$. For example, $W$ is a diagonal matrix. In this case, the first pilot signal of the STA may be $s_k^t$.

Optionally, partial elements in $s_k^t$ are set to zero. It may be understood that setting to zero means that no pilot signal is sent on a pilot subcarrier at the location. If a 3rd element in $s_k^t$ is set to 0, a pilot subcarrier corresponding to the 3rd element does not send a pilot signal.

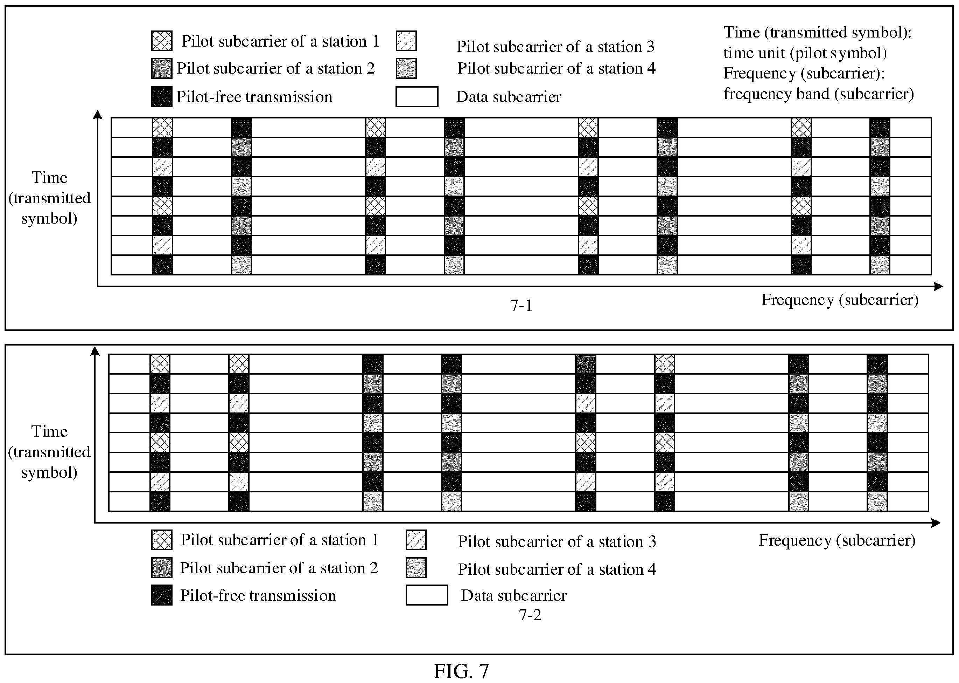

For example, refer to FIG. 7. FIG. 7 is a schematic diagram in which different stations transmit pilot signals on pilot subcarriers corresponding to different time units according to an embodiment of this application. As shown in FIG. 7 (FIG. 7 shows only 8 pilot subcarriers, and other subcarriers are data subcarriers (white)), a horizontal axis in FIG. 7 is a first frequency band (locations of subcarriers), and a vertical axis is a time unit (8 time units in total from top to bottom). In 7-1 in FIG. 7, a station 1 transmits a pilot signal, for example, a first pilot signal $s_1^1 = $ [1 0 1 0 1 0 1 0] of the station 1, on 1st, 3rd, 5th, and 7th (from left to right on a horizontal axis) pilot subcarriers in a first time unit; and a station

$$s_2^2 = \begin{bmatrix} 0 & 1 & 0 & 1 & 0 & 1 & 0 & 1 \end{bmatrix}$$

2 transmits a pilot signal, for example, a first pilot signal of the station 2, on 2nd, 4th, 6th, and 8th (from left to right on the horizontal axis) pilot subcarriers in a second time unit. In 7-2 in FIG. 7, the

$$s_1^1 = \begin{bmatrix} 1 & 1 & 0 & 0 & 1 & 1 & 0 & 0 \end{bmatrix}$$

station 1 transmits a pilot signal, for example, a first pilot signal of the station 1, on 1st, 2nd, 5th, and 6th (from left to right on the horizontal axis) pilot subcarriers in the first time unit; and the station 2 transmits a pilot signal, for example, a first pilot signal $s_2^2 = $ [0 0 1 1 0 0 1 1] of the station 2, on 3rd, 4th, 7th, and 8th (from left to right on the horizontal axis) pilot subcarriers in the second time unit. It should be noted that, in this application, pilot signals transmitted by a station on different pilot subcarriers may be the same or different.

It may be learned that, in the foregoing technical solution, a first frequency band that includes a discrete RU allocated to a STA is determined, so that the STA may send a first pilot signal of the STA to an AP on all pilot subcarriers included in the first frequency band, and the first pilot signal may be transmitted by using fixed and evenly distributed pilot subcarriers on the first frequency band. This avoids problems such as narrowband interference and frequency selective fading caused by sparse distribution of the pilot subcarriers on the frequency band, and improves pilot signal transmission reliability. In this way, a linear difference result is more accurate, a problem that a linear difference result is incorrect when pilot phases are not in a same period is avoided, and a linear difference implemented by using the pilot subcarriers can accurately cover the entire frequency band.

Optionally, first pilot signals $q_t$ of the Nu STAs satisfy the following equation: $q_t = $

$\begin{bmatrix} s_1^t & s_2^t & s_3^t & \dots & s_{Nu}^t \end{bmatrix} w_{tt}$ , $w_{tt}$ indicates a ttth column vector in $W$, $q_t$ is a column vector, a quantity of columns of $q_t$ is a quantity of all the pilot subcarriers included in the first frequency band, and the first pilot signals of the Nu STAs are sent on all the pilot subcarriers included in the first frequency band. In other words, the pilot signals of the Nu STAs are further simultaneously sent on all the pilot subcarriers included in the first frequency band. $s_f^t$ indicates pilot signals corresponding to an fth STA on all the pilot subcarriers included in the first frequency band in a tth time unit, a quantity of columns of $s_f^t$ is a quantity of all the pilot subcarriers included in the first frequency band, an nth element in $s_f^t$ indicates a pilot signal corresponding to the fth STA on an nth pilot subcarrier included in the first frequency band, and f is an integer greater than or equal to 1 and less than or equal to Nu. For example, a quantity of columns of $s_2^t$ is the quantity of all the pilot subcarriers included in the first frequency band, and an nth element in $s_2^t$ indicates the pilot signal corresponding to a STA corresponding to $s_2^t$ (namely, a 2nd STA) on the nth pilot subcarrier included in the first frequency band. A quantity of columns of $s_3^t$ is the quantity of all the pilot subcarriers included in the first frequency band, and an nth element in $s_3^t$ indicates the pilot signal corresponding to a STA corresponding to $s_3^t$ (namely, a 3rd

STA) on the $n^{th}$ pilot subcarrier included in the first frequency band.

It may be understood that the pilot signals transmitted by the Nu STAs on the $n^{th}$ pilot subcarrier are values of an $n^{th}$ row of elements in $q_t$.

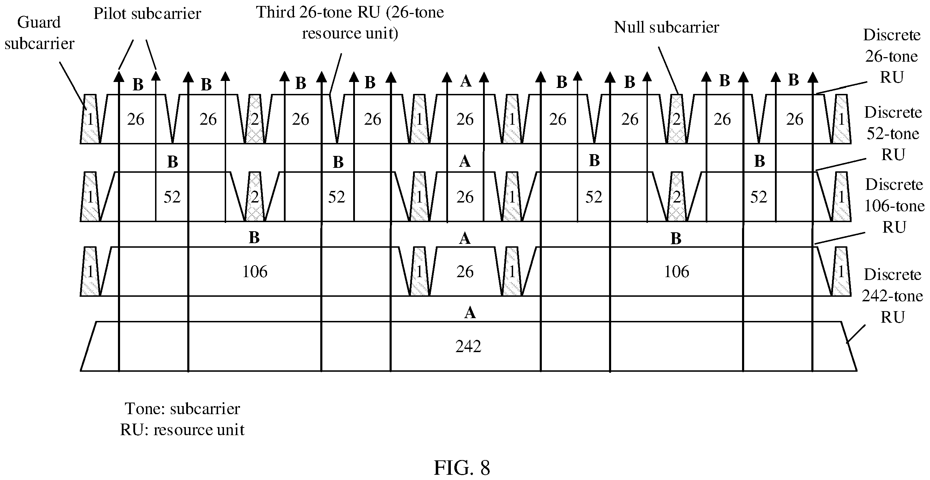

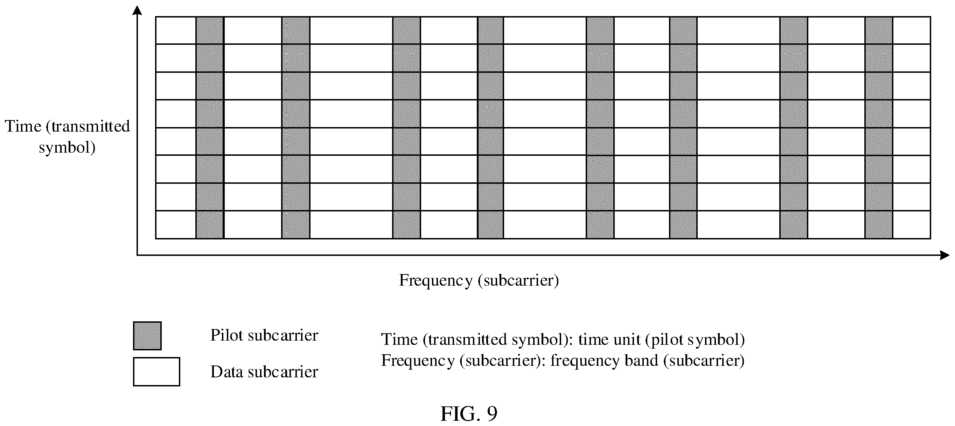

For example, refer to FIG. 8. FIG. 8 is a schematic diagram of a tone plan and an RU plan of 20 MHz. As shown in FIG. 8, when a bandwidth is 20 MHz, the entire bandwidth may include one discrete 242-tone RU, or may include various combinations of a discrete 26-tone RU, a discrete 52-tone RU, and a discrete 106-tone RU. For example, 20 MHz may include 9 discrete 26-tone RUs, 20 MHz may include 4 discrete 52-tone RUs and one discrete 26-tone RU, or 20 MHz may include 2 discrete 106-tone RUs and one discrete 26-tone RU. In addition, as shown in FIG. 8, it may be learned that the entire bandwidth may include 18 pilot subcarriers. If 20 MHz includes 9 discrete 26-tone RUs, and the discrete RU allocated to the STA is a third discrete 26-tone RU from left to right in the entire bandwidth, the STA may transmit the first pilot signal on the 18 pilot subcarriers included in the entire bandwidth. It may be understood that if the other 8 discrete 26-tone RUs are allocated to another STA, the another STA may also transmit a pilot signal on the 18 pilot subcarriers included in the entire bandwidth. It should be noted that, in this application, when the entire bandwidth includes discrete RUs allocated to a plurality of STAs, the plurality of STAs may simultaneously transmit corresponding pilot signals on the 18 pilot subcarriers included in the entire bandwidth. Further, refer to FIG. 9. FIG. 9 is a diagram of a pilot transmission mode according to an embodiment of this application. As shown in FIG. 9 (FIG. 9 shows only 8 pilot subcarriers (gray), and other subcarriers are data subcarriers (white)), a horizontal axis in FIG. 9 is a first frequency band (locations of subcarriers), and a vertical axis is a time unit (8 time units in total from top to bottom). In each time unit, pilot signals of different STAs may be transmitted on each pilot subcarrier. It may be understood that, for another larger RU, for example, a discrete 484-tone RU (the discrete 484-tone RU includes 36 pilot subcarriers), a discrete 996-tone RU (the discrete 996-tone RU includes 72 pilot subcarriers), a discrete $2\times996$-tone RU (the discrete $2\times996$-tone RU includes discrete 996-tone RUs continuous on two frequency bands, and includes 144 pilot subcarriers), and a discrete $4\times996$-tone RU (the discrete $4\times996$-tone RU includes discrete 996-tone RUs continuous on four frequency bands, and includes 288 pilot subcarriers.), refer to a manner of transmitting a pilot signal in FIG. 8 or FIG. 9. Details are not described herein again.

Optionally, the first pilot signal of the STA occupies different pilot subcarriers in different time units in the Nu time units, and a total quantity of pilot subcarriers occupied by the first pilot signal of the STA in the Nu time units is a total quantity of the pilot subcarriers included in the first frequency band. The Nu time units are Nu time units in one period. It may be understood that, in this application, first pilot signals of different STAs transmitted in a same time unit in the Nu time units occupy different pilot subcarriers. First pilot signals of a same STA in different periods occupy a same pilot subcarrier.

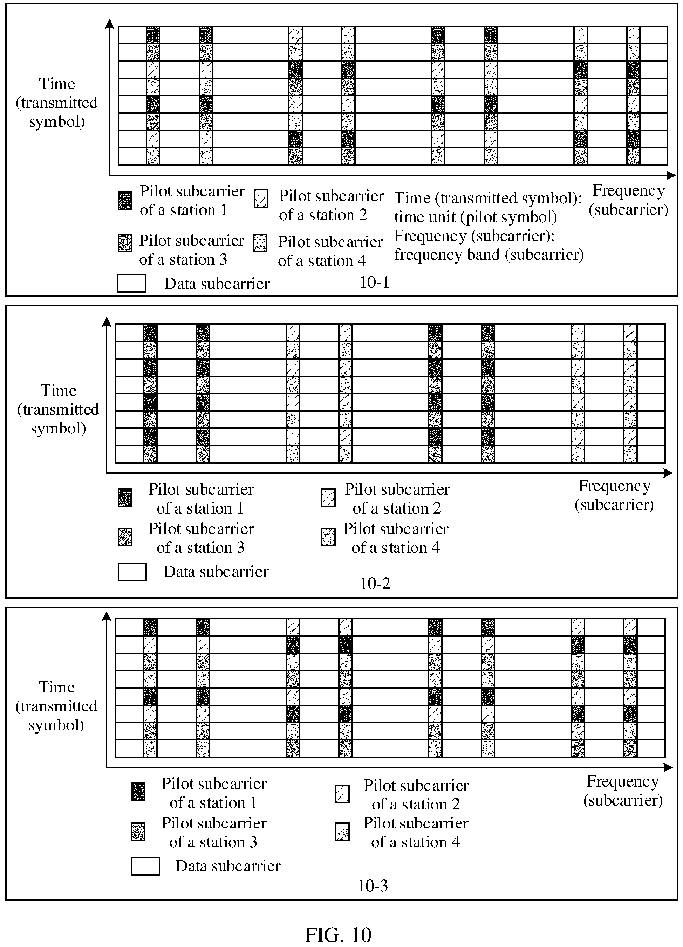

For example, refer to FIG. 10. FIG. 10 is a schematic diagram in which different STAs transmit pilot signals by using an example in which 4 stations occupy a discrete 242-tone RU (equivalent to a 20 MHz bandwidth, where the 20 MHz bandwidth includes a maximum of 8 pilot subcarriers) according to an embodiment of this application. As shown in FIG. 10 (FIG. 10 shows only 8 pilot subcarriers, and other subcarriers are data subcarriers (white)), a horizontal axis in FIG. 10 is a first frequency band (locations of subcarriers), and a vertical axis is a time unit (8 time units in total from top to bottom). It should be noted that a period is 4 in FIG. 10. For example, a first time unit to a fourth time unit (from top to bottom on a vertical axis) in 10-1 in FIG. 10 are one period. In 10-1 in FIG. 10 or 10-3 in FIG. 10, in a period, first pilot signals of a same station in different time units occupy different pilot subcarriers, and a total quantity of pilot subcarriers occupied by the first pilot signals of the same station in the four time units is a total quantity of the pilot subcarriers included in the first frequency band. As shown in 10-1 in FIG. 10, pilot subcarriers occupied by a first pilot signal of a station 1 in a first time unit are different from pilot subcarriers occupied by a first pilot signal of a station 1 in a third time unit, and a total quantity of the pilot subcarriers occupied by the first pilot signal of the station 1 in the first time unit and the pilot subcarriers occupied by the first pilot signal of the station 1 in the third time unit is 8. In 10-1 in FIG. 10, 10-2 in FIG. 10, or 10-3 in FIG. 10, first pilot signals of different stations in a same time unit occupy different pilot subcarriers. For example, in 10-2 in FIG. 10, in a first time unit, pilot subcarriers occupied by a first pilot signal of a station 1 are different from pilot subcarriers occupied by a first pilot signal of a station 2. The station 1 sends the first pilot signal of the station 1 on $1^{st}$, $2^{nd}$, $5^{th}$, and $6^{th}$ pilot subcarriers (from left to right on a horizontal axis). The station 2 sends the first pilot signal of the station 2 on $3^{rd}$, $4^{th}$, $7^{th}$, and $8^{th}$ pilot subcarriers (from left to right on the horizontal axis). In 10-1 in FIG. 10, 10-2 in FIG. 10, or 10-3 in FIG. 10, first pilot signals of a same STA in different periods occupy a same pilot subcarrier. For example, in 10-2 in FIG. 10, in a first period (the first period includes the first time unit to a fourth time unit), the station 1 sends a pilot signal on the $1^{st}$, $2^{nd}$, $5^{th}$, and $6^{th}$ pilot subcarriers. In a second period (the second period includes a fifth time unit to an eighth time unit), the station 1 sends a pilot signal on the $1^{st}$, $2^{nd}$, $5^{th}$, and $6^{th}$ pilot subcarriers.

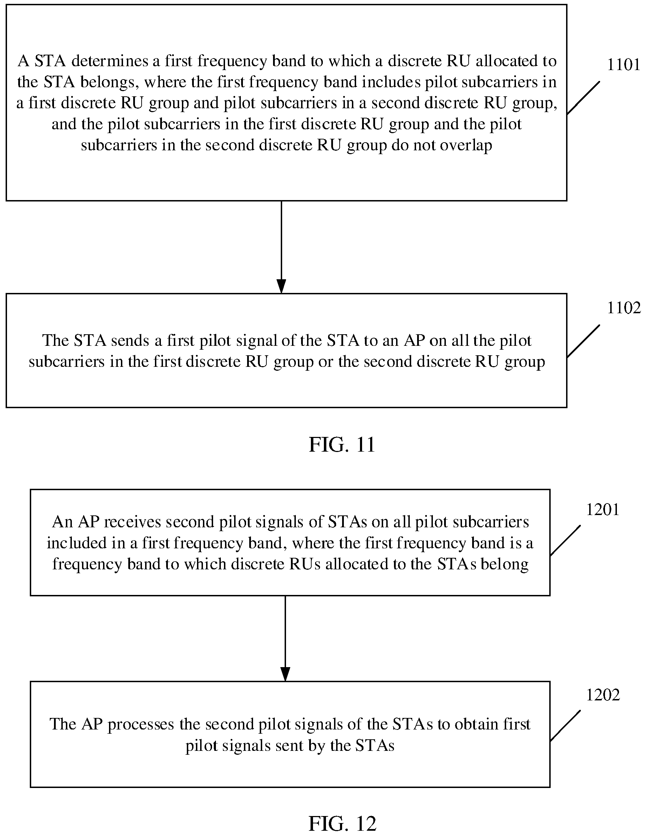

FIG. 11 is a schematic flowchart of another pilot signal transmission method according to an embodiment of this application. It should be noted that a technical problem resolved in FIG. 11 is the same as a technical problem resolved in FIG. 5. Details are not described herein again. As shown in FIG. 11, the method includes but is not limited to the following steps.

1101: A STA determines a first frequency band to which a discrete RU allocated to the STA belongs, where the first frequency band includes pilot subcarriers in a first discrete RU group and pilot subcarriers in a second discrete RU group, and the pilot subcarriers in the first discrete RU group and the pilot subcarriers in the second discrete RU group do not overlap.

A quantity of the pilot subcarriers in the first discrete RU group may be the same as or different from a quantity of the pilot subcarriers in the second discrete RU group. This is not limited herein. It may be understood that a first pilot signal of another STA may be further simultaneously sent on the pilot subcarriers in the first discrete RU group or the second discrete RU group. This is not limited herein.

1102: The STA sends a first pilot signal of the STA to an AP on all the pilot subcarriers in the first discrete RU group or the second discrete RU group.

Optionally, if a STA group to which the STA belongs corresponds to the first discrete RU group, the STA sends the first pilot signal of the STA to the AP on all the pilot subcarriers in the first discrete RU group. The STA group to which the STA belongs may further include another STA. The another STA in the STA group to which the STA belongs may send a corresponding first pilot signal to the AP on all the pilot subcarriers in the first discrete RU group. If a STA group to which the STA belongs corresponds to the second discrete RU group, the STA sends the first pilot signal of the STA to the AP on all the pilot subcarriers in the second discrete RU group. The STA group to which the STA belongs may further include another STA. The another STA in the STA group to which the STA belongs may send a corresponding first pilot signal to the AP on all the pilot subcarriers in the second discrete RU group.

It should be noted that, in this application, quantities of STAs included in different STA groups may be the same or different. This is not limited herein.

For example, if 8 STAs occupy a discrete 242-tone RU (equivalent to a 20 MHz bandwidth, where the 20 MHz bandwidth includes a maximum of 8 pilot subcarriers), the 8 STAs are divided into two groups, each group may include 4 STAs, and 4 pilot subcarriers are allocated to each group. For example, 1st to 4th pilot subcarriers on the first frequency band from left to right are allocated to a first group, and 5th to 8th pilot subcarriers are allocated to a second group. STAs in the first group send pilot signals on the 1st to 4th pilot subcarriers, and STAs in the second group send pilot signals on the 5th to 8th pilot subcarriers. For another example, 1st to 6th pilot subcarriers on the first frequency band from left to right are allocated to a first group, and 7th and 8th pilot subcarriers are allocated to a second group. STAs in the first group send pilot signals on the 1st to 6th pilot subcarriers, and STAs in the second group send pilot signals on the 7th and 8th pilot subcarriers.

Optionally, if the STA sends the first pilot signal of the STA to the AP on all the pilot subcarriers in the first discrete RU group, the first pilot signal of the STA is related to $\boldsymbol{W}$ and $\boldsymbol{s}_k^t$, where $\boldsymbol{W}$ is used to control pilot signals transmitted by Nu STAs in Nu time units in a STA group to which the STA belongs, $\boldsymbol{s}_k^t$ indicates pilot signals corresponding to the STA in a $t^{th}$ time unit on all the pilot subcarriers in the first discrete RU group, a quantity of columns of $\boldsymbol{s}_k^t$ is a quantity of all the pilot subcarriers included in the first discrete RU group, an $n^{th}$ element in $\boldsymbol{s}_k^t$ indicates a pilot signal corresponding to the STA on an $n^{th}$ pilot subcarrier included in the first discrete RU group, a quantity of columns of first pilot signals $\boldsymbol{q}_t$ of Nu devices is a quantity of all the pilot subcarriers included in the first discrete RU group, and the first pilot signals of the Nu STAs are sent on all the pilot subcarriers included in the first discrete RU group. Similarly, if the STA sends a second pilot signal of the STA to the AP on all the pilot subcarriers in the second discrete RU group, the first pilot signal of the STA is related to $\boldsymbol{W}$ and $\boldsymbol{s}_k^t$, where $\boldsymbol{W}$ is used to control pilot signals transmitted by Nu STAs in Nu time units in a STA group to which the STA belongs, $\boldsymbol{s}_k^t$ indicates pilot signals corresponding to the STA in a $t^{th}$ time unit on all the pilot subcarriers in the second discrete RU group, a quantity of columns of $\boldsymbol{s}_k^t$ is a quantity of all the pilot subcarriers included in the second discrete RU group, an $n^{th}$ element in $\boldsymbol{s}_k^t$ indicates a pilot signal corresponding to the STA on an $n^{th}$ pilot subcarrier included in the second discrete RU group, a quantity of columns of first pilot signals $\boldsymbol{q}_t$ of Nu devices is a quantity of all the pilot subcarriers included in the second discrete RU group, and the second pilot signals of the Nu STAs are sent on all the pilot subcarriers included in the second discrete RU group.

FIG. 12 is a schematic flowchart of a pilot signal demodulation method according to an embodiment of this application. It should be noted that FIG. 12 mainly resolves how to separate pilot signals transmitted by different STAs on a same pilot subcarrier. As shown in FIG. 12, the method includes but is not limited to the following steps.

1201: An AP receives second pilot signals of at least two STAs on all pilot subcarriers included in a first frequency band, where the first frequency band is a frequency band to which discrete RUs allocated to the at least two STAs belong.

For the first frequency band and the discrete RU, refer to related descriptions of step 501 in FIG. 5. Details are not described herein again.

Frequency bands to which the discrete RUs of the at least two STAs belong are the same. In other words, the frequency bands to which the discrete RUs of the at least two STAs belong are the first frequency band.

Optionally, the second pilot signals $X$ of the at least two STAs satisfy the following equation:

$$X = G[s_1 \quad s_2 \quad s_3 \quad ... \quad s_{Nu}]W \text{ or } X = G[s_1 \quad s_2 \quad s_3 \quad ... \quad s_{Nu}]W + Z. \text{ } G$$

is a channel parameter (channel coefficients), $Z$ is a noise, $W$ satisfies the following equation: $W = [w_1, w_2, ..., w_{Nu}]$, $w_x$ is a column vector, x is an integer greater than or equal to 1 and less than or equal to Nu, Nu is an integer greater than 1, $W$ is used to control pilot signals transmitted by the at least two STAs in Nu time units, a column index of $W$ is a time unit index, and a row index of $W$ is a device index. A quantity of columns of $s_k$ is a quantity of all the pilot subcarriers included in the first frequency band, an nth element in $s_k$ indicates a pilot signal corresponding to a kth STA in the at least two STAs on an nth pilot subcarrier included in the first frequency band, n is an integer greater than 0 and less than or equal to the quantity of columns of $s_k$, k is an integer greater than or equal to 1 and less than or equal to Nu, t is an integer greater than or equal to 0, and t is a time unit index.

In this application, **G** may be a channel parameter between a STA and an AP.

$s_k$ indicates that in different time units in a same period, the kth STA sends a same pilot signal on all the pilot subcarriers included in the first frequency band. For example, $s_k^0 = s_k^1 = ... = s_k^{Nu-1} = s_k$.

For $W$, refer to related descriptions of step 502 in FIG. 5. Details are not described herein again.

1202: The AP processes the second pilot signals of the at least two STAs to obtain first pilot signals sent by the at least two STAs.

Optionally, the first pilot signals sent by the at least two STAs are $[s_1 \ s_2 \ s_3 \ ... \ s_{Nu}]W$.

Optionally, partial elements of partial or all column vectors in $[s_1 \ s_2 \ s_3 \ ... \ s_{Nu}]$ are set to zero. For example, partial elements of each column vector in $s_1$ to $s_{Nu}$ are set to zero, or partial elements of partial column vectors in $s_1$ to $s_{Nu}$ are set to zero.

The AP may obtain $G^*XW^{-1} = G^*G[s_1 \ s_2 \ s_3 \ ... \ s_{Nu}]WW^{-1}$ according to $X = G[s_1 \ s_2 \ s_3 \ ... \ s_{Nu}]W$. It may be understood that $W^{-1}$ may be obtained based on $W$ ($W$ reversible), so that $G^*XW^{-1}$, $G^*G$, and $WW^{-1}$ may be obtained, and $[s_1 \ s_2 \ s_3 \ ... \ s_{Nu}]$ may be further obtained.

Optionally, if $W$ is an orthogonal matrix, the AP may obtain $G^*XW^* = G^*G[s_1 \ s_2 \ s_3 \ ... \ s_{Nu}]WW^*$ according to $X = G[s_1 \ s_2 \ s_3 \ ... \ s_{Nu}]W$. $W$ is an orthogonal matrix, and $WW^*$ is a unit matrix. Therefore, $G^*XW^* = G^*G[s_1 \ s_2 \ s_3 \ ... \ s_{Nu}]$ may be obtained, and $[s_1 \ s_2 \ s_3 \ ... \ s_{Nu}]$ may be further obtained.

It may be learned that, in the foregoing technical solution, the AP may receive the second pilot signals of the at least two STAs on all the pilot subcarriers included in the first frequency band, so that the AP may process the second pilot signals of the at least two STAs, to obtain a first pilot signal sent by each STA, thereby separating a pilot signal of a single STA.

Optionally, the first pilot signal of one first device in the at least two first devices occupies different pilot subcarriers in different time units in the Nu time units, and a total quantity of pilot subcarriers occupied by the first pilot signal of one first device in the Nu time units is a total quantity of the pilot subcarriers included in the first frequency band.

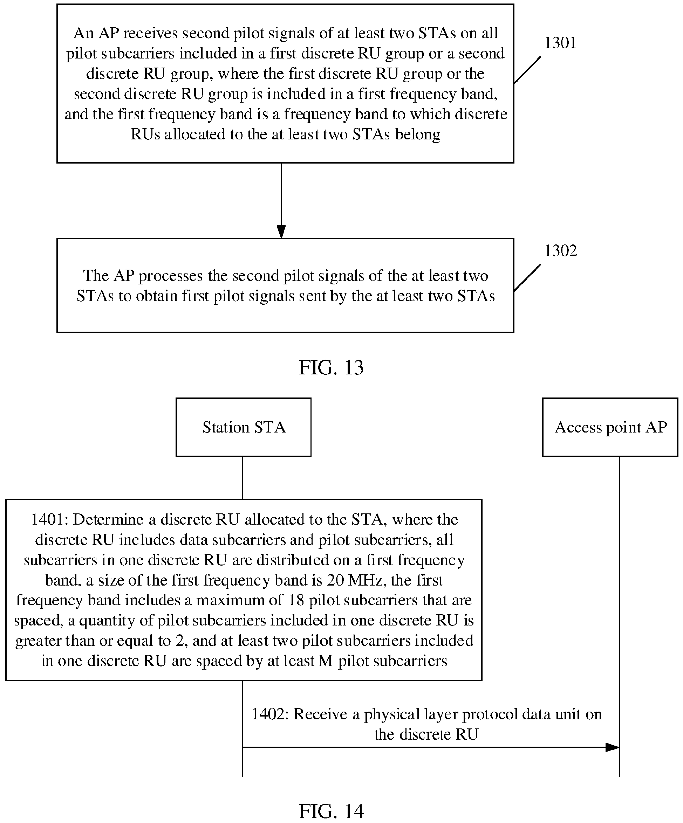

FIG. 13 is a schematic flowchart of another pilot signal demodulation method according to an embodiment of this application. It should be noted that FIG. 13 mainly resolves how to separate pilot signals transmitted by different STAs on a same pilot subcarrier. As shown in FIG. 13, the method includes but is not limited to the following steps.

1301: An AP receives second pilot signals of at least two STAs on all pilot subcarriers included in a first discrete RU group or a second discrete RU group, where the first discrete RU group or the second discrete RU group is included in a first frequency band, and the first frequency band is a frequency band to which discrete RUs allocated to the at least two STAs belong.

Frequency bands to which the discrete RUs of the at least two STAs belong are the same. In other words, the frequency bands to which the discrete RUs of the at least two STAs belong are the first frequency band.

Optionally, if a STA group to which the at least two STAs belong corresponds to the first discrete RU group, the AP receives the second pilot signals of the at least two STAs on all the pilot subcarriers in the first discrete RU group. If a STA group to which the at least two STAs belong corresponds to the second discrete RU group, the AP receives the second pilot signals of the at least two STAs on all the pilot subcarriers in the second discrete RU group.

For the second pilot signals of the at least two STAs, refer to related descriptions of step 1201 in FIG. 12. Details are not described herein again. A difference lies in that, in FIG. 13, a quantity of columns of $s_k$ is a quantity of all the pilot subcarriers included in the first discrete RU group, and an $n^{th}$ element in $\boldsymbol{s}_k$ indicates a pilot signal corresponding to a $k^{th}$ STA in the at least two STAs on an $n^{th}$ pilot subcarrier included in the first discrete RU group. Alternatively, a quantity of columns of $\boldsymbol{s}_k$ is a quantity of all the pilot subcarriers included in the second discrete RU group, and an $n^{th}$ element in $\boldsymbol{s}_k$ indicates a pilot signal corresponding to a $k^{th}$ STA in the at least two STAs on an $n^{th}$ pilot subcarrier included in the second discrete RU group.

1302: The AP processes the second pilot signals of the at least two STAs to obtain first pilot signals sent by the at least two STAs.

For the first discrete RU group and the second discrete RU group, refer to related descriptions of step 501 in FIG. 5. Details are not described herein again.

Optionally, if a STA group to which the at least two STAs belong corresponds to the first discrete RU group, the AP receives the second pilot signals of the at least two STAs on all the pilot subcarriers in the first discrete RU group. If a STA group to which the at least two STAs belong corresponds to the second discrete RU group, the AP receives the second pilot signals of the at least two STAs on all the pilot subcarriers in the second discrete RU group.

For the first pilot signals sent by the at least two STAs, refer to related descriptions of step 1202 in FIG. 12. Details are not described herein again.

It may be learned that, in the foregoing technical solution, the AP may receive the second pilot signals of the at least two STAs on all the pilot subcarriers included in the first discrete RU group or the second discrete RU group, so that the AP may process the second pilot signals of the at least two STAs, to obtain a first pilot signal sent by each STA, thereby separating a pilot signal of a single STA.

It may be understood that, in this application, technical problems mainly resolved in FIG. 14, FIG. 16, and FIG. 17 are the same as the technical problems resolved in FIG. 5. Details are not described herein again.

FIG. 14 is a schematic flowchart of a method for sending data in a wireless network according to an embodiment of this application. As shown in FIG. 14, the method includes but is not limited to the following steps.

1401: A STA determines a discrete RU allocated to the STA, where the discrete RU includes data subcarriers and pilot subcarriers, all subcarriers in one discrete RU are distributed on a first frequency band, a size of the first frequency band is 20 MHz, the first frequency band includes a maximum of 18 pilot subcarriers that are spaced, a quantity of pilot subcarriers included in one discrete RU is greater than or equal to 2, and at least two pilot subcarriers included in one discrete RU are spaced by at least M pilot subcarriers.

For a discrete RU, refer to the foregoing related descriptions. Details are not described herein again. It may be understood that, in this application, there may be one or more discrete RUs. This is not limited herein.

That a size of the first frequency band is 20 MHz may be understood as that the first frequency band is equivalent to a continuous 242-tone RU in size. This is not limited herein.

M may be 9.

1402: An AP receives a physical layer protocol data unit (physical layer protocol data unit, PPDU) on the discrete RU.

Correspondingly, the STA sends the PPDU on the discrete RU.

Optionally, step 1402 may include: The AP receives the PPDU from the STA on the discrete RU. Correspondingly, the STA sends the PPDU to the AP on the discrete RU.

It may be learned that, in the foregoing technical solution, all subcarriers in a discrete RU allocated to a STA are distributed on a 20 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

Optionally, the maximum of 18 pilot subcarriers spaced in the first frequency band are the same as pilot subcarriers in a continuous RU mode. Specifically, refer to Table 1. Table 1 describes indices of 18 pilot subcarriers corresponding to a case in which the size of the first frequency band is 20 MHz. In this application, a sequence index of a pilot subcarrier may be an index of all pilot subcarriers in a frequency band range, and a frequency band index of a pilot subcarrier is a real index of all subcarriers included in a frequency band range. In addition, it should be noted that, in this application, index numbers enumerated by all frequency band indices of pilot subcarriers are merely examples. During specific implementation, index numbers of frequency band indices of pilot subcarriers similar to the example in this application may also be used, may be, merely for example, -116, -102, -90, -76, -62, and the like in Table 1, and may also be -117, -103, -91, -77, -63, and the like. Index numbers of frequency band indices of pilot subcarriers in other tables or descriptions are similar to those described above, and fall within the coverage scope of specific embodiments of this application provided that the frequency band indices satisfy the spacing rule described in this application. It should be understood that, for ease of description, in this application, the sequence index of the pilot subcarrier corresponding to the frequency band index of the pilot subcarrier is used to describe some pairing relationships and spacing rules that are satisfied between the frequency band indices of the pilot subcarriers. This does not indicate that pilot subcarriers need to be numbered with sequence indices.

**Table 1: Correspondences between sequence indices of 18 pilot subcarriers and frequency band indices of the 18 pilot subcarriers in a case in which the size of the first frequency band is 20 MHz**

| Sequence index of a pilot subcarrier | 1 | 2 | 3 | 4 | 5 | 6 | 7 | 8 | 9 |
|---|---|---|---|---|---|---|---|---|---|
| Frequency band index of a pilot subcarrier | -116 | -102 | -90 | -76 | -62 | -48 | -36 | -22 | -10 |
| Sequence index of a pilot subcarrier | 10 | 11 | 12 | 13 | 14 | 15 | 16 | 17 | 18 |
| Frequency band index of a pilot subcarrier | 10 | 22 | 36 | 48 | 62 | 76 | 90 | 102 | 116 |

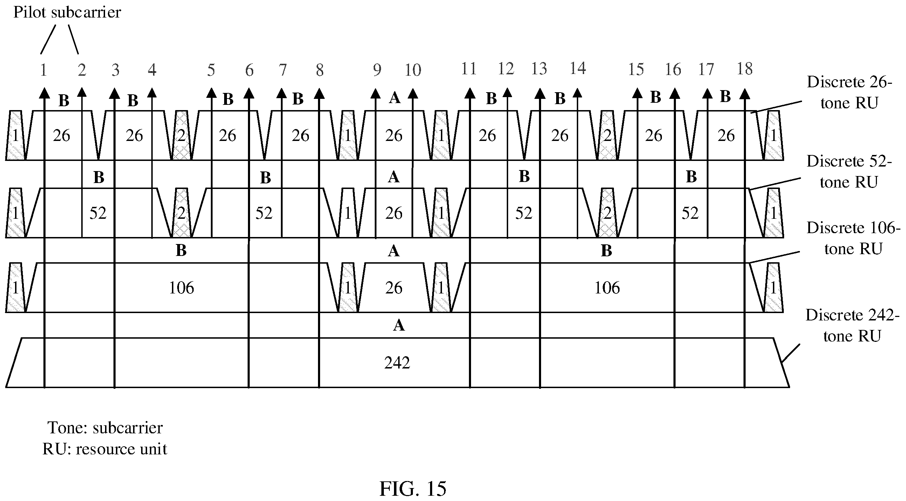

The frequency band indices of the 18 pilot subcarriers in Table 1 are the same as those of the pilot subcarriers in the continuous RU mode. For example, a frequency band index of a first pilot subcarrier from left to right in the first frequency band may be -116, and a frequency band index of a second pilot subcarrier from left to right in the first frequency band may be -102. For frequency band indices of other pilot subcarriers, refer to Table 1. Details are not described herein again. It may be understood that the sequence indices of the 18 pilot subcarriers one-to-one correspond to the frequency band indices of the 18 pilot subcarriers. For example, a sequence index 1 of a pilot subcarrier corresponds to a frequency band index -116 of the pilot subcarrier. The sequence indices of the 18 pilot subcarriers in Table 1 are sequence numbers of the 18 pilot subcarriers in the first frequency band from left to right when the size of the first frequency band is 20 MHz. For example, refer to FIG. 15. FIG. 15 shows sequence indices of 18 pilot subcarriers corresponding to a case in which the size of the first frequency band is 20 MHz. As shown in FIG. 15, a sequence index of a first pilot subcarrier from left to right may be 1, and a sequence index of a second pilot subcarrier from left to right may be 2. For sequence indices of other pilot subcarriers, refer to FIG. 15. Details are not described herein again. It may be understood that, in this application, the sequence index of the pilot subcarrier is a sequence number of the pilot subcarrier from left to right in the first frequency band.

Optionally, one discrete RU corresponds to one continuous RU, one continuous RU includes at least two pilot subcarriers, and there is an intersection set between indices of pilot subcarriers in one discrete RU and indices of pilot subcarriers in the continuous RU.

For example, a sequence index of a pilot subcarrier in one discrete RU may be, for example, one of the following: {1, 11}, {2, 12}, {3, 13}, {4, 14}, {5, 15}, {6, 16}, {7, 17}, {8, 18}, and {9, 10}. In other words, a frequency band index of a pilot subcarrier in one discrete RU may be, for example, one of the following: {-116, 22}, {-90, 48}, {-62, 76}, {-36, 102}, {-10, 10}, {-102, 36}, {-76, 62}, {-48, 90}, and {-22, 116}. A frequency band index of a pilot subcarrier in one continuous RU may be, for example, one of the following: {-116, -102}, {-90, -76}, {-62, -48}, {-36, -22}, {-10, 10}, {22, 36}, {48, 62}, {76, 90}, and {102, 116}. If a frequency band index of a pilot subcarrier in one discrete RU is {-116, 22}, and a frequency band index of a pilot subcarrier in one continuous RU corresponding to the discrete RU is {-116, -102}, there is an intersection set between the indices of the pilot subcarriers in the discrete RU and the indices of the pilot subcarriers in the continuous RU.

Optionally, the discrete RU is a discrete 26-tone RU, the discrete 26-tone RU includes 24 data subcarriers and 2 pilot subcarriers, and the 2 pilot subcarriers are spaced by at least 9 pilot subcarriers.

For example, refer to Table 2. Table 2 describes a correspondence between a discrete 26-tone RU and sequence indices of 2 pilot subcarriers included in the discrete 26-tone RU when the size of the first frequency band is 20 MHz. It should be noted that, in this application, one discrete RU corresponds to one continuous RU. In other words, there is also a correspondence between one continuous RU and sequence indices of 2 pilot subcarriers included in one discrete RU. In Table 2, a discrete 26-tone RU whose index is 1 corresponds to a sequence index {1, 11} of a pilot subcarrier. In this case, a continuous 26-tone RU corresponding to the discrete 26-tone RU whose index is 1 may also correspond to the sequence index {1, 11} of the pilot subcarrier.

**Table 2: Correspondence between a discrete 26-tone RU and sequence indices of 2 pilot subcarriers included in the discrete 26-tone RU when the size of the first frequency band is 20 MHz**

| Index of a discrete 26-tone RU | Sequence indices of pilot subcarriers |
|---|---|
| 1 | {1, 11} |

(continued)

| Index of a discrete 26-tone RU | Sequence indices of pilot subcarriers |
| --- | --- |
| 2 | {3, 13} |
| 3 | {5, 15} |
| 4 | {7, 17} |
| 5 | {9, 10} |
| 6 | {2, 12} |
| 7 | {4, 14} |
| 8 | {6, 16} |
| 9 | {8, 18} |

With reference to Table 2, it may be learned that spacings between sequence indices of pilot subcarriers corresponding to discrete 26-tone RUs other than a discrete 26-tone RU whose index is 5 are all 10. In other words, 2 pilot subcarriers included in the discrete 26-tone RUs are spaced by 10 pilot subcarriers. In this application, an index of a discrete 26-tone RU is a sequence number of the discrete 26-tone RU from left to right in the first frequency band. For example, the discrete 26-tone RU whose index is 1 is a first discrete 26-tone RU from left to right in the first frequency band, and a discrete 26-tone RU whose index is 2 is a second discrete 26-tone RU from left to right in the first frequency band. It may be understood that, in this application, a sequence index of a pilot subcarrier specifically corresponding to the discrete 26-tone RUs other than the discrete 26-tone RU whose index is 5 is not limited herein. For example, a sequence index of a pilot subcarrier corresponding to the discrete 26-tone RU whose index is 1 may be one of the following: {1,11}, {2, 12}, {3, 13}, {4, 14}, {5, 15}, {6, 16}, {7, 17}, and {8, 18}; and a sequence index of a pilot subcarrier corresponding to the discrete 26-tone RU whose index is 2 may be one of the following: {1, 11}, {2, 12}, {3, 13}, {4, 14}, {5, 15}, {6, 16}, {7, 17}, and {8, 18}. It should be noted that, in this application, discrete 26-tone RUs with different indices correspond to different sequence indices of pilot subcarriers. For example, refer to Table 3. Table 3 describes another correspondence between a discrete 26-tone RU and sequence indices of 2 pilot subcarriers included in the discrete 26-tone RU when the size of the first frequency band is 20 MHz. With reference to Table 3, it may be learned that spacings between sequence indices of pilot subcarriers corresponding to discrete 26-tone RUs other than a discrete 26-tone RU whose index is 5 are all 10. In other words, 2 pilot subcarriers included in the discrete 26-tone RUs are spaced by 10 pilot subcarriers.

**Table 3: Another correspondence between a discrete 26-tone RU and sequence indices of 2 pilot subcarriers included in the discrete 26-tone RU when the size of the first frequency band is 20 MHz**

| Index of a discrete 26-tone RU | Sequence indices of pilot subcarriers |
| --- | --- |
| 1 | {2, 12} |
| 2 | {4, 14} |
| 3 | {6, 16} |
| 4 | {8, 18} |
| 5 | {9, 10} |
| 6 | {1, 11} |
| 7 | {3, 13} |
| 8 | {5, 15} |
| 9 | {7, 17} |

For example, refer to Table 4. Table 4 describes another correspondence between a discrete 26-tone RU and sequence indices of 2 pilot subcarriers included in the discrete 26-tone RU when the size of the first frequency band is 20 MHz.

**Table 4: Another correspondence between a discrete 26-tone RU and sequence indices of 2 pilot subcarriers included in the discrete 26-tone RU when the size of the first frequency band is 20 MHz**

| Index of a discrete 26-tone RU | Sequence indices of pilot subcarriers |
|---|---|
| 1 | {1, 10} |
| 2 | {3, 12} |
| 3 | {5, 14} |
| 4 | {7, 16} |
| 5 | {9, 18} |
| 6 | {2, 11} |
| 7 | {4, 13} |
| 8 | {6, 15} |
| 9 | {8, 17} |

With reference to Table 4, it may be learned that spacings between sequence indices of pilot subcarriers corresponding to indices of the 9 discrete 26-tone RUs are all 9. In other words, 2 pilot subcarriers included in the 9 discrete 26-tone RUs are spaced by 9 pilot subcarriers. It may be understood that, in this application, a sequence index of a pilot subcarrier corresponding to each discrete 26-tone RU of the 9 discrete 26-tone RUs is not limited herein. For example, a sequence index of a pilot subcarrier corresponding to a discrete 26-tone RU whose index is 1 may be one of the following: {1,10}, {2, 11}, {3, 12}, {4, 13}, {5, 14}, {6, 15}, {7, 16}, {8, 17}, and {9, 18}; and a sequence index of a pilot subcarrier corresponding to a discrete 26-tone RU whose index is 2 may be one of the following: {1, 10}, {2, 11}, {3, 12}, {4, 13}, {5, 14}, {6, 15}, {7, 16}, {8, 17}, and {9, 18}. It should be noted that, in this application, discrete 26-tone RUs with different indices correspond to different sequence indices of pilot subcarriers. For example, refer to Table 5. Table 5 describes another correspondence between a discrete 26-tone RU and sequence indices of 2 pilot subcarriers included in the discrete 26-tone RU when the size of the first frequency band is 20 MHz. With reference to Table 5, it may be learned that spacings between sequence indices of pilot subcarriers corresponding to indices of the 9 discrete 26-tone RUs are all 9. In other words, 2 pilot subcarriers included in the 9 discrete 26-tone RUs are spaced by 9 pilot subcarriers.

**Table 5: Another correspondence between a discrete 26-tone RU and sequence indices of 2 pilot subcarriers included in the discrete 26-tone RU when the size of the first frequency band is 20 MHz**

| Index of a discrete 26-tone RU | Sequence indices of pilot subcarriers |
|---|---|
| 1 | {2, 11} |
| 2 | {4, 13} |
| 3 | {6, 15} |
| 4 | {8, 17} |
| 5 | {1, 10} |
| 6 | {3, 12} |
| 7 | {5, 14} |
| 8 | {7, 16} |
| 9 | {9, 18} |

Optionally, in this application, a quantity of pilot subcarriers between 2 pilot subcarriers included in one discrete 26-tone RU in the first frequency band is not limited. For example, 2 pilot subcarriers included in one discrete 26-tone RU in the first frequency band may be spaced by 11 pilot subcarriers, or 2 pilot subcarriers included in one discrete 26-tone RU in the first frequency band may be spaced by 8 pilot subcarriers.

Optionally, the discrete RU is a 52-tone RU, the discrete 52-tone RU includes two discrete 26-tone RUs, and pilot subcarriers in the discrete 52-tone RU include some or all of pilot subcarriers in the two discrete 26-tone RUs.

For example, refer to Table 6. Table 6 describes a correspondence between a discrete 52-tone RU and indices of discrete 26-tone RUs included in the discrete 52-tone RU when the size of the first frequency band is 20 MHz.

**Table 6: Correspondence between a discrete 52-tone RU and indices of discrete 26-tone RUs included in the discrete 52-tone RU when the size of the first frequency band is 20 MHz**

| Index of a discrete 52-tone RU | Indices of two discrete 26-tone RUs |
|---|---|
| 1 | {1, 2} |
| 2 | {3, 4} |
| 3 | {6, 7} |
| 4 | {8, 9} |

With reference to Table 6, it may be learned that a discrete 52-tone RU whose index is 1 corresponds to discrete 26-tone RUs whose indices are 1 and 2, a discrete 52-tone RU whose index is 2 corresponds to discrete 26-tone RUs whose indices are 3 and 4, a discrete 52-tone RU whose index is 3 corresponds to discrete 26-tone RUs whose indices are 6 and 7, and a discrete 52-tone RU whose index is 4 corresponds to discrete 26-tone RUs whose indices are 8 and 9. In this application, an index of a discrete 52-tone RU is a sequence number of the discrete 52-tone RU from left to right in the first frequency band. For example, the discrete 52-tone RU whose index is 1 is a first discrete 52-tone RU from left to right in the first frequency band, and a discrete 52-tone RU whose index is 2 is a second discrete 52-tone RU from left to right in the first frequency band. It may be understood that pilot subcarriers included in the discrete 52-tone RU whose index is 1 may be a subset or a universal set of pilot subcarriers included in a discrete 26-tone RU whose index is 1 and the discrete 26-tone RU whose index is 2; pilot subcarriers included in the discrete 52-tone RU whose index is 2 may be a subset or a universal set of pilot subcarriers included in the discrete 26-tone RU whose index is 3 and the discrete 26-tone RU whose index is 4; pilot subcarriers included in the discrete 52-tone RU whose index is 3 may be a subset or a universal set of pilot subcarriers included in the discrete 26-tone RU whose index is 6 and the discrete 26-tone RU whose index is 7; and pilot subcarriers included in the discrete 52-tone RU whose index is 4 may be a subset or a universal set of pilot subcarriers included in the discrete 26-tone RU whose index is 8 and the discrete 26-tone RU whose index is 9.

For example, sequence indices of pilot subcarriers included in the discrete 52-tone RU whose index is 1 may be, for example, one of the following: { 1, 3, 11, 13}, { 1, 11}, {3, 13}, or the like. This is not limited herein. In other words, pilot subcarriers in a discrete 52-tone RU may include some or all of pilot subcarriers in two discrete 26-tone RUs.

Optionally, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 9 pilot subcarriers.

Optionally, the discrete RU is a discrete 106-tone RU, the discrete 106-tone RU includes four discrete 26-tone RUs, and pilot subcarriers in the discrete 106-tone RU include some or all of pilot subcarriers in the four discrete 26-tone RUs.

For example, refer to Table 7. Table 7 describes a correspondence between a discrete 106-tone RU and indices of discrete 26-tone RUs included in the discrete 106-tone RU when the size of the first frequency band is 20 MHz.

**Table 7: Correspondence between a discrete 106-tone RU and indices of discrete 26-tone RUs included in the discrete 106-tone RU when the size of the first frequency band is 20 MHz**

| Index of a discrete 106-tone RU | Indices of four discrete 26-tone RUs |
|---|---|
| 1 | {1, 2, 3, 4} |
| 2 | {6, 7, 8, 9} |

With reference to Table 7, it may be learned that a discrete 106-tone RU whose index is 1 corresponds to discrete 26-tone RUs whose indices are 1, 2, 3, and 4, and a discrete 106-tone RU whose index is 2 corresponds to discrete 26-tone RUs whose indices are 6, 7, 8, and 9. In this application, an index of a discrete 106-tone RU is a sequence number of the discrete 106-tone RU from left to right in the first frequency band. For example, the discrete 106-tone RU whose index is 1 is a first discrete 106-tone RU from left to right in the first frequency band, and the discrete 106-tone RU whose index is 2 is a second discrete 106-tone RU from left to right in the first frequency band. It may be understood that pilot subcarriers included in the discrete 106-tone RU whose index is 1 may be a subset or a universal set of pilot subcarriers included in a discrete 26-tone RU whose index is 1, the discrete 26-tone RU whose index is 2, the discrete 26-tone RU whose index is 3, and the discrete 26-tone RU whose index is 4; and pilot subcarriers included in the discrete 106-tone RU whose index is 2 may be a subset or a universal set of pilot subcarriers included in the discrete 26-tone RU whose index is 6, the discrete 26-tone RU whose index is 7, the discrete 26-tone RU whose index is 8, and the discrete 26-tone RU whose index is 9.

For example, sequence indices of pilot subcarriers included in the discrete 106-tone RU whose index is 1 may be, for example, one of the following: { 1, 3, 5, 7, 11, 13, 15, 17}, { 1, 3, 11, 13}, or the like. This is not limited herein. In other words, pilot subcarriers in a discrete 106-tone RU may include some or all of pilot subcarriers in four discrete 26-tone RUs.

Optionally, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

For example, refer to Table 8. Table 8 describes a correspondence between a discrete 106-tone RU and indices of discrete 52-tone RUs included in the discrete 106-tone RU when the size of the first frequency band is 20 MHz.

**Table 8: Correspondence between a discrete 106-tone RU and indices of discrete 52-tone RUs included in the discrete 106-tone RU when the size of the first frequency band is 20 MHz**

| Index of a discrete 106-tone RU | Indices of two discrete 52-tone RUs |
|---|---|
| 1 | {1, 2} |
| 2 | {3, 4} |

With reference to Table 8, it may be learned that a discrete 106-tone RU whose index is 1 corresponds to discrete 52-tone RUs whose indices are 1 and 2, and a discrete 106-tone RU whose index is 2 corresponds to discrete 52-tone RUs whose indices are 3 and 4. It may be understood that pilot subcarriers included in the discrete 106-tone RU whose index is 1 may be a subset or a universal set of pilot subcarriers included in the discrete 52-tone RU whose index is 1 and the discrete 52-tone RU whose index is 2; and pilot subcarriers included in the discrete 106-tone RU whose index is 2 may be a subset or a universal set of pilot subcarriers included in the discrete 52-tone RU whose index is 3 and the discrete 52-tone RU whose index is 4.

For example, sequence indices of pilot subcarriers included in the discrete 106-tone RU whose index is 1 may be, for example, one of the following: { 1, 3, 5, 7, 11, 13, 15, 17}, { 1, 3, 11, 13}, or the like. This is not limited herein. In other words, pilot subcarriers in a discrete 106-tone RU may include some or all of pilot subcarriers in two discrete 52-tone RUs.

Optionally, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 9 pilot subcarriers.

Optionally, a quantity of data subcarriers included in the discrete 106-tone RU may be, for example, 102, and a quantity of pilot subcarriers included in the discrete 106-tone RU may be, for example, 4. This is not limited herein.

It should be noted that, in this application, based on the one-to-one correspondence between the sequence indices of the 18 pilot subcarriers and the frequency band indices of the 18 pilot subcarriers in Table 1, frequency band indices of pilot subcarriers corresponding to different discrete RUs when the first frequency band is 20 MHz may be obtained.

For example, with reference to Table 2, frequency band indices of pilot subcarriers corresponding to different discrete RUs when the first frequency band is 20 MHz may be obtained. Specifically, refer to Table 9. Table 9 describes frequency band indices of pilot subcarriers corresponding to different discrete RUs when the size of the first frequency band is 20 MHz.

**Table 9: Frequency band indices of pilot subcarriers corresponding to different discrete RUs when the size of the first frequency band is 20 MHz**

| Size of the first frequency band | RU size (size) | Frequency band indices of pilot subcarriers |
|---|---|---|
| 20 MHz | $1^{st}$ to $9^{th}$ discrete 26-tone RUs | {-116, 22}, {-90, 48}, {-62, 76}, {-36, 102}, {-10, 10}, {-102, 36}, {-76, 62}, {-48, 90}, {-22, 116} |
| | $1^{st}$ to $4^{th}$ discrete 52-tone RUs | A subset or a universal set of {-116, 22, -90, 48}, a subset or a universal set of {-62, 76, -36, 102}, a subset or a universal set of {-102, 36, -76, 62}, and a subset or a universal set of {-48, 90, -22, 116} |
| | $1^{st}$ and $2^{nd}$ discrete 106-tone RUs | A subset or a universal set of {-116, 22, -90, 48, -62, 76, -36, 102} and a subset or a universal set of {-102, 36, -76, 62, -48, 90, -22, 116} |

With reference to Table 9, it may be learned that frequency band indices of pilot subcarriers included in a $1^{st}$ discrete 26-tone RU (namely, the discrete 26-tone RU whose index is 1) are {-116, 22}, frequency band indices of pilot subcarriers included in a $2^{nd}$ discrete 26-tone RU (namely, the discrete 26-tone RU whose index is 2) are {-90, 48}, frequency band indices of pilot subcarriers included in a $3^{rd}$ discrete 26-tone RU (namely, the discrete 26-tone RU whose index is 3) are {-62, 76}, and frequency band indices of pilot subcarriers included in each of other discrete 26-tone RUs are deduced by analogy. Details are not described herein. Frequency band indices of pilot subcarriers included in a $1^{st}$ discrete 52-tone RU (namely, a discrete 52-tone RU whose index is 1) are a subset or a universal set of {-116, 22, -90, 48}, frequency band indices of pilot subcarriers included in a $2^{nd}$ discrete 52-tone RU (namely, a discrete 52-tone RU whose index is 2) are a subset or a universal set of {-62, 76, -36, 102}, and frequency band indices of pilot subcarriers included in each of other discrete 52-tone RUs are deduced by analogy. Details are not described herein again. A frequency band index of a pilot subcarrier included in a $1^{st}$ discrete 106-tone RU (namely, a discrete 106-tone RU whose index is 1) is a subset or a universal set of {-116, 22, -90, 48, -62, 76, -36, 102}, and a frequency band index of a pilot subcarrier included in a $2^{nd}$ discrete 106-tone RU (namely, a discrete 106-tone RU whose index is 2) is a subset or a universal set of {-102, 36, -76, 62, -48, 90, -22, 116}.

For example, with reference to Table 3, frequency band indices of pilot subcarriers corresponding to different discrete RUs when the first frequency band is 20 MHz may be obtained. Specifically, refer to Table 10. Table 10 describes other frequency band indices of pilot subcarriers corresponding to different discrete RUs when the size of the first frequency band is 20 MHz.

**Table 10: Other frequency band indices of pilot subcarriers corresponding to different discrete RUs when the size of the first frequency band is 20 MHz**

| Size of the first frequency band | RU size (size) | Frequency band indices of pilot subcarriers |
|---|---|---|
| 20 MHz | $1^{st}$ to $9^{th}$ discrete 26-tone RUs | {-102, 36}, {-76, 62}, {-48, 90}, {-22, 116}, {-10, 10}, {-116, 22}, {-90, 48}, {-62, 76}, {-36, 102} |
| | $1^{st}$ to $4^{th}$ discrete 52-tone RUs | A subset or a universal set of {-102, 36, -76, 62}, a subset or a universal set of {-48, 90, -22, 116}, a subset or a universal set of {-116, 22, -90, 48}, and a subset or a universal set of {-62, 76, -36, 102} |
| | $1^{st}$ and $2^{nd}$ discrete 106-tone RUs | A subset or a universal set of {-102, 36, -76, 62, -48, 90, -22, 116} and a subset or a universal set of {-116, 22, -90, 48, -62, 76, -36, 102} |

With reference to Table 10, it may be learned that frequency band indices of pilot subcarriers included in a $1^{st}$ discrete 26-tone RU (namely, the discrete 26-tone RU whose index is 1) are {-102, 36}, frequency band indices of pilot subcarriers included in a $2^{nd}$ discrete 26-tone RU (namely, the discrete 26-tone RU whose index is 2) are {-76, 62}, frequency band indices of pilot subcarriers included in a $3^{rd}$ discrete 26-tone RU (namely, the discrete 26-tone RU whose index is 3) are {-48, 90}, and frequency band indices of pilot subcarriers included in each of other discrete 26-tone RUs are deduced by analogy. Details are not described herein. Frequency band indices of pilot subcarriers included in a $1^{st}$

discrete 52-tone RU (namely, the discrete 52-tone RU whose index is 1) are a subset or a universal set of {-102, 36, -76, 62}, frequency band indices of pilot subcarriers included in a 2nd discrete 52-tone RU (namely, the discrete 52-tone RU whose index is 2) are a subset or a universal set of {-48, 90, -22, 116}, and frequency band indices of pilot subcarriers included in each of other discrete 52-tone RUs are deduced by analogy. Details are not described herein again. A frequency band index of a pilot subcarrier included in a 1st discrete 106-tone RU (namely, a discrete 106-tone RU whose index is 1) is a subset or a universal set of {-102, 36, -76, 62, -48, 90, -22, 116}, and a frequency band index of a pilot subcarrier included in a 2nd discrete 106-tone RU (namely, a discrete 106-tone RU whose index is 2) is a subset or a universal set of {-116, 22, -90, 48, -62, 76, -36, 102}.

For example, with reference to Table 4, frequency band indices of pilot subcarriers corresponding to different discrete RUs when the first frequency band is 20 MHz may be obtained. Specifically, refer to Table 11. Table 11 describes other frequency band indices of pilot subcarriers corresponding to different discrete RUs when the size of the first frequency band is 20 MHz.

**Table 11: Other frequency band indices of pilot subcarriers corresponding to different discrete RUs when the size of the first frequency band is 20 MHz**

| Size of the first frequency band | RU size (size) | Frequency band indices of pilot subcarriers |
|---|---|---|
| 20 MHz | 1st to 9th discrete 26-tone RUs | {-116, 10}, {-90, 36}, {-62, 62}, {-36, 90}, {-10, 116}, {-102, 22}, {-76, 48}, {-48, 76}, {-22, 102} |
| | 1st to 4th discrete 52-tone RUs | A subset or a universal set of {-116, 10, -90, 36}, a subset or a universal set of {-62, 62, -36, 90}, a subset or a universal set of {-102, 22, -76, 48}, and a subset or a universal set of {-48, 76, -22, 102} |
| | 1st and 2nd discrete 106-tone RUs | A subset or a universal set of {-116, 10, -90, 36, -62, 62, -36, 90} and a subset or a universal set of {-102, 22, -76, 48, -48, 76, -22, 102} |

With reference to Table 11, it may be learned that frequency band indices of pilot subcarriers included in a 1st discrete 26-tone RU (namely, a discrete 26-tone RU whose index is 1) are {-116, 10}, frequency band indices of pilot subcarriers included in a 2nd discrete 26-tone RU (namely, a discrete 26-tone RU whose index is 2) are {-90, 36}, frequency band indices of pilot subcarriers included in a 3rd discrete 26-tone RU (namely, a discrete 26-tone RU whose index is 3) are {-62, 62}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-116, 10, -90, 36}, frequency band indices of pilot subcarriers included in a 2nd discrete 52-tone RU (namely, a discrete 52-tone RU whose index is 2) are a subset or a universal set of {-62, 62, -36, 90}, and frequency band indices of pilot subcarriers included in each of other discrete 52-tone RUs are deduced by analogy. Details are not described herein again. A frequency band index of a pilot subcarrier included in a 1st discrete 106-tone RU (namely, a discrete 106-tone RU whose index is 1) is a subset or a universal set of {-116, 10, -90, 36, -62, 62, -36, 90}, and a frequency band index of a pilot subcarrier included in a 2nd discrete 106-tone RU (namely, a discrete 106-tone RU whose index is 2) is a subset or a universal set of {-102, 22, -76, 48, -48, 76, -22, 102}.

For example, with reference to Table 5, frequency band indices of pilot subcarriers corresponding to different discrete RUs when the first frequency band is 20 MHz may be obtained. Specifically, refer to Table 12. Table 12 describes other frequency band indices of pilot subcarriers corresponding to different discrete RUs when the size of the first frequency band is 20 MHz.

**Table 12: Other frequency band indices of pilot subcarriers corresponding to different discrete RUs when the size of the first frequency band is 20 MHz**

| Size of the first frequency band | RU size (size) | Frequency band indices of pilot subcarriers |
|---|---|---|
| 20 MHz | 1st to 9th discrete 26-tone RUs | {-102, 22}, {-76, 48}, {-48, 76}, {-22, 102}, {-116, 10}, {-90, 36}, {-62, 62}, {-36, 90}, {-10, 116} |
| | 1st to 4th discrete 52-tone RUs | A subset or a universal set of {-102, 22, -76, 48}, a subset or a universal set of {-48, 76, -22, 102}, a subset or a universal set of {-90, 36, -62, 62}, and a subset or a universal set of {-36, 90, -10, 116} |
| | 1st and 2nd discrete 106-tone RUs | A subset or a universal set of {-102, 22, -76, 48, -48, 76, -22, 102} and a subset or a universal set of {-90, 36, -62, 62, -36, 90, -10, 116} |

With reference to Table 12, it may be learned that frequency band indices of pilot subcarriers included in a 1st discrete 26-tone RU (namely, a discrete 26-tone RU whose index is 1) are {-102, 22}, frequency band indices of pilot subcarriers included in a 2nd discrete 26-tone RU (namely, a discrete 26-tone RU whose index is 2) are {-76, 48}, frequency band indices of pilot subcarriers included in a 3rd discrete 26-tone RU (namely, a discrete 26-tone RU whose index is 3) are {-48, 76}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-102, 22, -76, 48}, frequency band indices of pilot subcarriers included in a 2nd discrete 52-tone RU (namely, a discrete 52-tone RU whose index is 2) are a subset or a universal set of {-48, 76, -22, 102}, and frequency band indices of pilot subcarriers included in each of other discrete 52-tone RUs are deduced by analogy. Details are not described herein again. A frequency band index of a pilot subcarrier included in a 1st discrete 106-tone RU (namely, a discrete 106-tone RU whose index is 1) is a subset or a universal set of {-102, 22, -76, 48, -48, 76, -22, 102}, and a frequency band index of a pilot subcarrier included in a 2nd discrete 106-tone RU (namely, a discrete 106-tone RU whose index is 2) is a subset or a universal set of {-90, 36, -62, 62, -36, 90, -10, 116}.

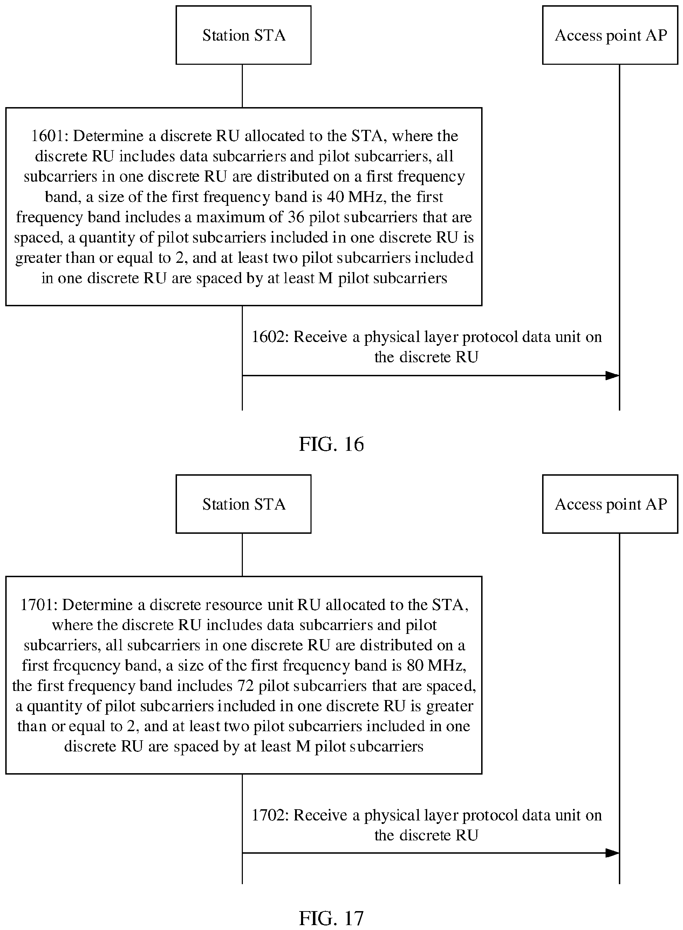

FIG. 16 is a schematic flowchart of another method for sending data in a wireless network according to an embodiment of this application. As shown in FIG. 16, the method includes but is not limited to the following steps.

1601: A STA determines a discrete RU allocated to the STA, where the discrete RU includes data subcarriers and pilot subcarriers, all subcarriers in one discrete RU are distributed on a first frequency band, a size of the first frequency band is 40 MHz, the first frequency band includes a maximum of 36 pilot subcarriers that are spaced, a quantity of pilot subcarriers included in one discrete RU is greater than or equal to 2, and at least two pilot subcarriers included in one discrete RU are spaced by at least M pilot subcarriers.

For a discrete RU, refer to the foregoing related descriptions. Details are not described herein again. It may be understood that, in this application, there may be one or more discrete RUs. This is not limited herein.

That a size of the first frequency band is 40 MHz may be understood as that the first frequency band is equivalent to a continuous 484-tone RU in size. This is not limited herein.

M may be 18.

1602: An AP receives a physical layer protocol data unit (physical layer protocol data unit, PPDU) on the discrete RU.

Correspondingly, the STA sends the PPDU on the discrete RU.

Optionally, step 1602 may include: The AP receives the PPDU from the STA on the discrete RU. Correspondingly, the STA sends the PPDU to the AP on the discrete RU.

It may be learned that, in the foregoing technical solution, all subcarriers in a discrete RU allocated to a STA are distributed on a 40 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

Optionally, the discrete RU is a discrete 26-tone RU, the discrete 26-tone RU includes 24 data subcarriers and 2 pilot subcarriers, and the 2 pilot subcarriers are spaced by at least 18 pilot subcarriers.

For example, refer to Table 13. Table 13 describes a correspondence between a discrete 26-tone RU and sequence indices of 2 pilot subcarriers included in the discrete 26-tone RU when the size of the first frequency band is 40 MHz.

**Table 13: Correspondence between a discrete 26-tone RU and sequence indices of 2 pilot subcarriers included in the discrete 26-tone RU when the size of the first frequency band is 40 MHz**

| Index of a discrete 26-tone RU | Sequence indices of pilot subcarriers |
| --- | --- |
| 1 | {1, 19} |
| 2 | {3, 21} |
| 3 | {5, 23} |
| 4 | {7, 25} |
| 5 | {9, 10} |
| 6 | {11, 29} |
| 7 | {13, 31} |
| 8 | {15, 33} |
| 9 | {17, 35} |
| 10 | {2, 20} |
| 11 | {4, 22} |
| 12 | {6, 24} |
| 13 | {8, 26} |
| 14 | {27, 28} |
| 15 | {12, 30} |
| 16 | {14, 32} |
| 17 | {16, 34} |
| 18 | {18, 36} |

With reference to Table 13, it may be learned that spacings between sequence indices of pilot subcarriers corresponding to discrete 26-tone RUs other than a discrete 26-tone RU whose index is 5 and a discrete 26-tone RU whose index is 14 are all 18. In other words, 2 pilot subcarriers included in the discrete 26-tone RUs are spaced by 18 pilot subcarriers. It may be understood that, in this application, a sequence index of a pilot subcarrier specifically corresponding to the discrete 26-tone RUs other than the discrete 26-tone RU whose index is 5 and the discrete 26-tone RU whose index is 14 is not limited herein. For example, a sequence index of a pilot subcarrier corresponding to a discrete 26-tone RU whose index is 1 may be one of the following: {1, 19}, {2, 20}, {3, 21}, {4, 22}, {5, 23}, {6, 24}, {7, 25}, {8, 26}, {11, 29}, {12, 30}, {13, 31}, {14, 32}, {15, 33}, {16, 34}, {17, 35}, and {18, 36}; and a sequence index of a pilot subcarrier corresponding to a discrete 26-tone RU whose index is 2 may be one of the following: {1, 19}, {2, 20}, {3, 21}, {4, 22}, {5, 23}, {6, 24}, {7, 25}, {8, 26}, {11, 29}, {12, 30}, {13, 31}, {14, 32}, {15, 33}, {16, 34}, {17, 35}, and {18, 36}. It should be noted that, in this application, discrete 26-tone RUs with different indices correspond to different sequence indices of pilot subcarriers. For example, refer to Table 14. Table 14 describes another correspondence between a discrete 26-tone RU and sequence indices of 2 pilot subcarriers included in the discrete 26-tone RU when the size of the first frequency band is 40 MHz. With reference to Table 14, it may be learned that spacings between sequence indices of pilot subcarriers corresponding to discrete 26-tone RUs other than a discrete 26-tone RU whose index is 5 and a discrete 26-tone RU whose index is 14 are all 18. In other words, 2 pilot subcarriers included in the discrete 26-tone RUs are spaced by 18 pilot subcarriers.

**Table 14: Another correspondence between a discrete 26-tone RU and sequence indices of 2 pilot subcarriers included in the discrete 26-tone RU when the size of the first frequency band is 40 MHz**

| Index of a discrete 26-tone RU | Sequence indices of pilot subcarriers |
| --- | --- |
| 1 | {2, 20} |

(continued)

| Index of a discrete 26-tone RU | Sequence indices of pilot subcarriers |
| --- | --- |
| 2 | {4, 22} |
| 3 | {6, 24} |
| 4 | {8, 26} |
| 5 | {9, 10} |
| 6 | {12, 30} |
| 7 | {14, 32} |
| 8 | {16, 34} |
| 9 | {18, 36} |
| 10 | {1, 19} |
| 11 | {3, 21} |
| 12 | {5, 23} |
| 13 | {7, 25} |
| 14 | {27, 28} |
| 15 | {11, 29} |
| 16 | {13, 31} |
| 17 | {15, 33} |
| 18 | {17, 35} |

For example, refer to Table 15. Table 15 describes another correspondence between a discrete 26-tone RU and sequence indices of 2 pilot subcarriers included in the discrete 26-tone RU when the size of the first frequency band is 40 MHz.

**Table 15: Another correspondence between a discrete 26-tone RU and sequence indices of 2 pilot subcarriers included in the discrete 26-tone RU when the size of the first frequency band is 40 MHz**

| Index of a discrete 26-tone RU | Sequence indices of pilot subcarriers |
| --- | --- |
| 1 | {1, 19} |
| 2 | {3, 21} |
| 3 | {5, 23} |
| 4 | {7, 25} |
| 5 | {9, 27} |
| 6 | {11, 29} |
| 7 | {13, 31} |
| 8 | {15, 33} |
| 9 | {17, 35} |
| 10 | {2, 20} |
| 11 | {4, 22} |
| 12 | {6, 24} |
| 13 | {8, 26} |
| 14 | {10, 28} |
| 15 | {12, 30} |

(continued)

| Index of a discrete 26-tone RU | Sequence indices of pilot subcarriers |
| --- | --- |
| 16 | {14, 32} |
| 17 | {16, 34} |
| 18 | {18, 36} |

With reference to Table 15, it may be learned that spacings between sequence indices of pilot subcarriers corresponding to indices of the 18 discrete 26-tone RUs are all 18. In other words, 2 pilot subcarriers included in the 18 discrete 26-tone RUs are spaced by 18 pilot subcarriers. It may be understood that, in this application, a sequence index of a pilot subcarrier corresponding to each discrete 26-tone RU of the 18 discrete 26-tone RUs is not limited herein. For example, a sequence index of a pilot subcarrier corresponding to a discrete 26-tone RU whose index is 1 may be one of the following: {1, 19}, {2, 20}, {3, 21}, {4, 22}, {5, 23}, {6, 24}, {7, 25}, {8, 26}, {9, 27}, {10, 28}, {11, 29}, {12, 30}, {13, 31}, {14, 32}, {15, 33}, {16, 34}, {17, 35}, and {18, 36}; and a sequence index of a pilot subcarrier corresponding to a discrete 26-tone RU whose index is 2 may be one of the following: {1, 19}, {2, 20}, {3, 21}, {4, 22}, {5, 23}, {6, 24}, {7, 25}, {8, 26}, {9, 27}, {10, 28}, {11, 29}, {12, 30}, {13, 31}, {14, 32}, {15, 33}, {16, 34}, {17, 35}, and {18, 36}. It should be noted that, in this application, discrete 26-tone RUs with different indices correspond to different sequence indices of pilot subcarriers. For example, refer to Table 16. Table 16 describes another correspondence between a discrete 26-tone RU and sequence indices of 2 pilot subcarriers included in the discrete 26-tone RU when the size of the first frequency band is 40 MHz. With reference to Table 16, it may be learned that spacings between sequence indices of pilot subcarriers corresponding to indices of the 18 discrete 26-tone RUs are all 18. In other words, 2 pilot subcarriers included in the 18 discrete 26-tone RUs are spaced by 18 pilot subcarriers.

**Table 16: Another correspondence between a discrete 26-tone RU and sequence indices of 2 pilot subcarriers included in the discrete 26-tone RU when the size of the first frequency band is 40 MHz**

| Index of a discrete 26-tone RU | Sequence indices of pilot subcarriers |
| --- | --- |
| 1 | {2, 20} |
| 2 | {4, 22} |
| 3 | {6, 24} |
| 4 | {8, 26} |
| 5 | {10, 28} |
| 6 | {12, 30} |
| 7 | {14, 32} |
| 8 | {16, 34} |
| 9 | {18, 36} |
| 10 | {1, 19} |
| 11 | {3, 21} |
| 12 | {5, 23} |
| 13 | {7, 25} |
| 14 | {9, 27} |
| 15 | {11, 29} |
| 16 | {13, 31} |
| 17 | {15, 33} |
| 18 | {17, 35} |

Optionally, in this application, a quantity of pilot subcarriers between 2 pilot subcarriers included in one discrete 26-tone RU in the first frequency band is not limited. For example, 2 pilot subcarriers included in one discrete 26-tone RU in the first frequency band may be spaced by 16 pilot subcarriers, 2 pilot subcarriers included in one discrete 26-tone RU in the first frequency band may be spaced by 17 pilot subcarriers, 2 pilot subcarriers included in one discrete 26-tone RU in the first frequency band may be spaced by 19 pilot subcarriers, or 2 pilot subcarriers included in one discrete 26-tone RU in the first frequency band may be spaced by 20 pilot subcarriers.

Optionally, the discrete RU is a discrete 52-tone RU, the discrete 52-tone RU includes two discrete 26-tone RUs, and pilot subcarriers in the discrete 52-tone RU include some or all of pilot subcarriers in the two discrete 26-tone RUs.

For example, refer to Table 17. Table 17 describes a correspondence between a discrete 52-tone RU and indices of discrete 26-tone RUs included in the discrete 52-tone RU when the size of the first frequency band is 40 MHz.

**Table 17: Correspondence between a discrete 52-tone RU and indices of discrete 26-tone RUs included in the discrete 52-tone RU when the size of the first frequency band is 40 MHz**

| Index of a discrete 52-tone RU | Indices of two discrete 26-tone RUs |
| --- | --- |
| 1 | {1, 2} |
| 2 | {3, 4} |
| 3 | {6, 7} |
| 4 | {8, 9} |
| 5 | {10, 11} |
| 6 | {12, 13} |
| 7 | {15, 16} |
| 8 | {17, 18} |

With reference to Table 17, it may be learned that a discrete 52-tone RU whose index is 1 corresponds to discrete 26-tone RUs whose indices are 1 and 2, a discrete 52-tone RU whose index is 2 corresponds to discrete 26-tone RUs whose indices are 3 and 4, a discrete 52-tone RU whose index is 3 corresponds to discrete 26-tone RUs whose indices are 6 and 7, a discrete 52-tone RU whose index is 4 corresponds to discrete 26-tone RUs whose indices are 8 and 9, and frequency band indices of pilot subcarriers included in each of other discrete 52-tone RUs are deduced by analogy. Details are not described herein. It may be understood that pilot subcarriers included in the discrete 52-tone RU whose index is 1 may be a subset or a universal set of pilot subcarriers included in the discrete 26-tone RU whose index is 1 and the discrete 26-tone RU whose index is 2; pilot subcarriers included in the discrete 52-tone RU whose index is 2 may be a subset or a universal set of pilot subcarriers included in the discrete 26-tone RU whose index is 3 and the discrete 26-tone RU whose index is 4; pilot subcarriers included in the discrete 52-tone RU whose index is 3 may be a subset or a universal set of pilot subcarriers included in the discrete 26-tone RU whose index is 6 and the discrete 26-tone RU whose index is 7; pilot subcarriers included in the discrete 52-tone RU whose index is 4 may be a subset or a universal set of pilot subcarriers included in the discrete 26-tone RU whose index is 8 and the discrete 26-tone RU whose index is 9; and frequency band indices of pilot subcarriers included in each of other discrete 52-tone RUs are deduced by analogy. Details are not described herein.

For example, sequence indices of pilot subcarriers included in the discrete 52-tone RU whose index is 1 may be, for example, one of the following: { 1, 3, 19, 21}, { 1, 19}, {3, 21}, { 1, 21}, {3, 19}, or the like. This is not limited herein. In other words, pilot subcarriers in a discrete 52-tone RU may include some or all of pilot subcarriers in two discrete 26-tone RUs.

Optionally, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 18 pilot subcarriers.

Optionally, the discrete RU is a discrete 106-tone RU, the discrete 106-tone RU includes four discrete 26-tone RUs, and pilot subcarriers in the discrete 106-tone RU include some or all of pilot subcarriers in the four discrete 26-tone RUs.

For example, refer to Table 18. Table 18 describes a correspondence between a discrete 106-tone RU and indices of discrete 26-tone RUs included in the discrete 106-tone RU when the size of the first frequency band is 40 MHz.

**Table 18: Correspondence between a discrete 106-tone RU and indices of discrete 26-tone RUs included in the discrete 106-tone RU when the size of the first frequency band is 40 MHz**

| Index of a discrete 106-tone RU | Indices of four discrete 26-tone RUs |
|---|---|
| 1 | {1, 2, 3, 4} |
| 2 | {6, 7, 8, 9} |
| 3 | {10, 11, 12, 13} |
| 4 | {15, 16, 17, 18} |

With reference to Table 18, it may be learned that a discrete 106-tone RU whose index is 1 corresponds to discrete 26-tone RUs whose indices are 1, 2, 3, and 4, a discrete 106-tone RU whose index is 2 corresponds to discrete 26-tone RUs whose indices are 6, 7, 8, and 9, and other discrete 106-tone RUs are deduced by analogy. Details are not described herein. It may be understood that pilot subcarriers included in the discrete 106-tone RU whose index is 1 may be a subset or a universal set of pilot subcarriers included in the discrete 26-tone RU whose index is 1, the discrete 26-tone RU whose index is 2, the discrete 26-tone RU whose index is 3, and the discrete 26-tone RU whose index is 4; pilot subcarriers included in the discrete 106-tone RU whose index is 2 may be a subset or a universal set of pilot subcarriers included in the discrete 26-tone RU whose index is 6, the discrete 26-tone RU whose index is 7, the discrete 26-tone RU whose index is 8, and the discrete 26-tone RU whose index is 9; and pilot subcarriers included in each of other discrete 106-tone RUs are deduced by analogy. Details are not described herein.

For example, sequence indices of pilot subcarriers included in the discrete 106-tone RU whose index is 1 may be, for example, one of the following: { 1, 3, 5, 7, 19, 21, 23, 25}, { 1, 3, 19, 21}, {5, 7, 23, 25}, {1, 5, 19, 23}, {3, 7, 21, 25}, {1, 7, 19, 25}, {3, 5, 21, 23}, or the like. This is not limited herein. In other words, pilot subcarriers in a discrete 106-tone RU may include some or all of pilot subcarriers in four discrete 26-tone RUs.

Optionally, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

For example, refer to Table 19. Table 19 describes a correspondence between a discrete 106-tone RU and indices of discrete 52-tone RUs included in the discrete 106-tone RU when the size of the first frequency band is 40 MHz.

**Table 19: Correspondence between a discrete 106-tone RU and indices of discrete 52-tone RUs included in the discrete 106-tone RU when the size of the first frequency band is 40 MHz**

| Index of a discrete 106-tone RU | Indices of two discrete 52-tone RUs |
|---|---|
| 1 | {1, 2} |
| 2 | {3, 4} |
| 3 | {5, 6} |
| 4 | {7, 8} |

With reference to Table 19, it may be learned that a discrete 106-tone RU whose index is 1 corresponds to discrete 52-tone RUs whose indices are 1 and 2, a discrete 106-tone RU whose index is 2 corresponds to discrete 52-tone RUs whose indices are 3 and 4, and other discrete 106-tone RUs are deduced by analogy. Details are not described herein. It may be understood that pilot subcarriers included in the discrete 106-tone RU whose index is 1 may be a subset or a universal set of pilot subcarriers included in the discrete 52-tone RU whose index is 1 and the discrete 52-tone RU whose index is 2; pilot subcarriers included in the discrete 106-tone RU whose index is 2 may be a subset or a universal set of pilot subcarriers included in the discrete 52-tone RU whose index is 3 and the discrete 52-tone RU whose index is 4; and pilot subcarriers included in each of other discrete 106-tone RUs are deduced by analogy. Details are not described herein.

For example, sequence indices of pilot subcarriers included in the discrete 106-tone RU whose index is 1 may be, for example, one of the following: { 1, 3, 5, 7, 19, 21, 23, 25}, { 1, 3, 19, 21}, {5, 7, 23, 25}, {1,5, 19, 23}, {3, 7, 21, 25}, {1, 7, 19, 25}, {3, 5, 21, 23}, or the like. This is not limited herein. In other words, pilot subcarriers in a discrete 106-tone RU may include some or all of pilot subcarriers in two discrete 52-tone RUs.

Optionally, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 18 pilot subcarriers.

Optionally, a quantity of data subcarriers included in the discrete 106-tone RU may be, for example, 102, and a quantity of pilot subcarriers included in the discrete 106-tone RU may be, for example, 4. This is not limited herein.

Optionally, the discrete RU is a discrete 242-tone RU, the discrete 242-tone RU includes two discrete 106-tone RUs, and pilot subcarriers in the discrete 242-tone RU include some or all of pilot subcarriers in the two discrete 106-tone RUs.

For example, refer to Table 20. Table 20 describes a correspondence between a discrete 242-tone RU and indices of discrete 106-tone RUs included in the discrete 242-tone RU when the size of the first frequency band is 40 MHz.

**Table 20: Correspondence between a discrete 242-tone RU and indices of discrete 106-tone RUs included in the discrete 242-tone RU when the size of the first frequency band is 40 MHz**

| Index of a discrete 242-tone RU | Indices of two discrete 106-tone RUs |
| --- | --- |
| 1 | {1, 2} |
| 2 | {3, 4} |

With reference to Table 20, it may be learned that a discrete 242-tone RU whose index is 1 corresponds to discrete 106-tone RUs whose indices are 1 and 2, and a discrete 242-tone RU whose index is 2 corresponds to discrete 106-tone RUs whose indices are 3 and 4. It may be understood that pilot subcarriers included in the discrete 242-tone RU whose index is 1 may be a subset or a universal set of pilot subcarriers included in the discrete 106-tone RU whose index is 1 and the discrete 106-tone RU whose index is 2; and pilot subcarriers included in the discrete 242-tone RU whose index is 2 may be a subset or a universal set of pilot subcarriers included in the discrete 106-tone RU whose index is 3 and the discrete 106-tone RU whose index is 4.

For example, sequence indices of pilot subcarriers included in the discrete 242-tone RU whose index is 1 may be, for example, one of the following: { 1, 3, 5, 7, 9, 10, 11, 13, 15, 17, 19, 21, 23, 25, 29, 31, 33, 35}, { 1, 3, 5, 7, 11, 13, 15, 17, 19, 21, 23, 25, 29, 31, 33, 35}, { 1, 3, 5, 7, 19, 21, 23, 25}, { 11, 13, 15, 17, 29, 31, 33, 35}, { 1, 3, 11, 13, 19, 21, 29, 31}, {5, 7, 15, 17, 23, 25, 33, 35}, { 1, 5, 11, 15, 19, 23, 29, 33}, {3, 7, 13, 17, 21, 25, 31, 35}, { 1, 7, 11, 17, 19, 25, 29, 35}, {3, 5, 13, 15, 21, 23, 31, 33}, or the like. This is not limited herein. In other words, pilot subcarriers in a discrete 242-tone RU may include some or all of pilot subcarriers in two discrete 106-tone RUs.

Optionally, the discrete RU is a discrete 242-tone RU, the discrete 242-tone RU includes four discrete 52-tone RUs, and pilot subcarriers in the discrete 242-tone RU include some or all of pilot subcarriers in the four discrete 52-tone RUs.

Optionally, the discrete RU is a discrete 242-tone RU, the discrete 242-tone RU includes eight discrete 26-tone RUs, and pilot subcarriers in the discrete 242-tone RU include some or all of pilot subcarriers in the eight discrete 26-tone RUs.

Optionally, the discrete RU is a discrete 242-tone RU, a quantity of data subcarriers included in the discrete 242-tone RU is greater than or equal to 224, a quantity of pilot subcarriers included in the discrete 242-tone RU is greater than or equal to 2 and less than or equal to 18, and at least two pilot subcarriers in a maximum of 18 pilot subcarriers are spaced by at least 18 pilot subcarriers.

Optionally, a quantity of pilot subcarriers included in the discrete 242-tone RU may be, for example, 8. This is not limited herein.

It should be noted that, in this application, based on the one-to-one correspondence between the sequence indices of the 36 pilot subcarriers and the frequency band indices of the 36 pilot subcarriers, frequency band indices of pilot subcarriers corresponding to different discrete RUs when the first frequency band is 40 MHz may be obtained.

Refer to Table 21. Table 21 describes correspondences between sequence indices of 36 pilot subcarriers and frequency band indices of the 36 pilot subcarriers corresponding to a case in which the size of the first frequency band is 40 MHz. For example, a sequence index 1 of a pilot subcarrier corresponds to a frequency band index -238 of the pilot subcarrier.

**Table 21: Correspondences between sequence indices of 36 pilot subcarriers and frequency band indices of the 36 pilot subcarriers in a case in which the size of the first frequency band is 40 MHz**

| Sequence index of a pilot subcarrier | 1 | 2 | 3 | 4 | 5 | 6 | 7 | 8 | 9 |
| --- | --- | --- | --- | --- | --- | --- | --- | --- | --- |
| Frequency band index of a pilot subcarrier | -238 | -224 | -212 | -198 | -184 | -170 | -158 | -144 | -130 |

(continued)

| Sequence index of a pilot subcarrier | 1 | 2 | 3 | 4 | 5 | 6 | 7 | 8 | 9 |
|---|---|---|---|---|---|---|---|---|---|
| Sequence index of a pilot subcarrier | 10 | 11 | 12 | 13 | 14 | 15 | 16 | 17 | 18 |
| Frequency band index of a pilot subcarrier | -116 | -104 | -90 | -78 | -64 | -50 | -36 | -24 | -10 |
| Sequence index of a pilot subcarrier | 19 | 20 | 21 | 22 | 23 | 24 | 25 | 26 | 27 |
| Frequency band index of a pilot subcarrier | 10 | 24 | 36 | 50 | 64 | 78 | 90 | 104 | 116 |
| Sequence index of a pilot subcarrier | 28 | 29 | 30 | 31 | 32 | 33 | 34 | 35 | 36 |
| Frequency band index of a pilot subcarrier | 130 | 144 | 158 | 170 | 184 | 198 | 212 | 224 | 238 |

For example, with reference to Table 13 or Table 15, frequency band indices of pilot subcarriers corresponding to different discrete RUs when the first frequency band is 40 MHz may be obtained. Specifically, refer to Table 22. Table 22 describes frequency band indices of pilot subcarriers corresponding to different discrete RUs when the size of the first frequency band is 40 MHz.

**Table 22: Frequency band indices of pilot subcarriers corresponding to different discrete RUs when the size of the first frequency band is 40 MHz**

| Size of the first frequency band | RU size (size) | Frequency band indices of pilot subcarriers |
|---|---|---|
| 40 MHz | 1st to 18th discrete 26-tone RUs | {-238, 10}, {-212, 36}, {-184, 64}, {-158, 90}, {-130, -116}, {-104, 144}, {-78, 170}, {-50, 198}, {-24, 224}, {-224, 24}, {-198, 50}, {-170, 78}, {-144, 104}, {116, 130}, {-90, 158}, {-64, 184}, {-36, 212}, {-10, 238} |
| | 1st to 8th discrete 52-tone RUs | A subset or a universal set of {-238, 10, -212, 36}, a subset or a universal set of {-184, 64, -158, 90}, a subset or a universal set of {-104, 144, -78, 170}, a subset or a universal set of {-50, 198, -24, 224}, a subset or a universal set of {-224, 24, -198, 50}, a subset or a universal set of {-170, 78, -144, 104}, a subset or a universal set of {-90, 158, -64, 184}, and a subset or a universal set of {-36, 212, -10, 238} |
| | 1st to 4th discrete 106-tone RUs | A subset or a universal set of {-238, 10, -212, 36, -184, 64, -158, 90}, a subset or a universal set of {-104, 144, -78, 170, -50, 198, -24, 224}, a subset or a universal set of {-224, 24, -198, 50, -170, 78, -144, 104}, and a subset or a universal set of {-90, 158, -64, 184, -36, 212,-10, 238} |
| | 1st and 2nd discrete 242-tone RUs | A subset or a universal set of {-238, 10, -212, 36, -184, 64, -158, 90, -130, -116, -104, 144, -78, 170, -50, 198, -24, 224}, and a subset or a universal set of {-224, 24, -198, 50, -170, 78, -144, 104, 116, 130, -90, 158, - 64, 184, -36, 212,-10, 238} |

With reference to Table 22, it may be learned that frequency band indices of pilot subcarriers included in a 1st discrete 26-tone RU (namely, a discrete 26-tone RU whose index is 1) are {-238, 10}, frequency band indices of pilot subcarriers included in a 2nd discrete 26-tone RU (namely, a discrete 26-tone RU whose index is 2) are {-212, 36}, frequency band indices of pilot subcarriers included in a 3rd discrete 26-tone RU (namely, a discrete 26-tone RU whose index is 3) are {-184, 64}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-238,10, -212, 36}, frequency band indices of pilot subcarriers included in a 2nd discrete 52-tone RU (namely, a discrete 52-tone RU whose index is 2) are a subset or a universal set of {-184, 64, -158, 90}, and frequency band indices of pilot subcarriers included in each of other discrete 52-tone RUs are deduced by analogy. Details are not described herein again. Frequency band indices of pilot subcarriers included in a 1st discrete 106-tone RU (namely, a discrete 106-tone RU whose index is 1) are a subset or a universal set of {-238, 10, -212, 36, -184, 64, -158, 90}, frequency band indices of pilot subcarriers included in a 2nd discrete 106-tone RU (namely, a discrete 106-tone RU whose index is 2) are a subset or a universal set of {-104, 144, -78, 170, -50, 198, -24, 224}, and frequency band indices of pilot subcarriers included in each of other discrete 106-tone RUs are deduced by analogy. Details are not described herein again. Frequency band indices of pilot subcarriers included in a 1st discrete 242-tone RU (namely, a discrete 242-tone RU whose index is 1) are a subset or a universal set of {-238, 10, -212, 36, -184, 64, -158, 90, -130, -116, -104, 144, -78, 170, -50, 198, -24, 224}, frequency band indices of pilot subcarriers included in a 2nd discrete 242-tone RU (namely, a discrete 242-tone RU whose index is 2) are a subset or a universal set of {-224, 24, -198, 50, - 170, 78, -144, 104, 116, 130, -90, 158, -64, 184, -36, 212, -10, 238}, and frequency band indices of pilot subcarriers included in each of other discrete 242-tone RUs are deduced by analogy. Details are not described herein again.

For example, with reference to Table 14 or Table 16, frequency band indices of pilot subcarriers corresponding to different discrete RUs when the first frequency band is 40 MHz may be obtained. Specifically, refer to Table 23. Table 23 describes other frequency band indices of pilot subcarriers corresponding to different discrete RUs when the size of the first frequency band is 40 MHz.

**Table 23: Other frequency band indices of pilot subcarriers corresponding to different discrete RUs when the size of the first frequency band is 40 MHz**

| Size of the first frequency band | RU size (size) | Frequency band indices of pilot subcarriers |
|---|---|---|
| 40 MHz | 1st to 18th discrete 26-tone RUs | {-224, 24}, {-198, 50}, {-170, 78}, {-144, 104}, {-130, -116}, {-90, 158}, {-64, 184}, {-36, 212}, {-10, 238}, {-238, 10}, {-212, 36}, {-184, 64}, {-158, 90}, {116, 130}, {-104, 144}, {-78, 170}, {-50, 198}, {-24, 224} |
| | 1st to 8th discrete 52-tone RUs | A subset or a universal set of {-224, 24, -198, 50}, a subset or a universal set of {-170, 78, -144, 104}, a subset or a universal set of {-90, 158, -64, 184}, a subset or a universal set of {-36, 212, -10, 238}, a subset or a universal set of {-238, 10, -212, 36}, a subset or a universal set of {-184, 64, -158, 90}, a subset or a universal set of {-104, 144, -78, 170}, and a subset or a universal set of {-50, 198, -24, 224} |
| | 1st to 4th discrete 106-tone RUs | A subset or a universal set of {-224, 24, -198, 50, -170, 78, -144, 104}, a subset or a universal set of {-90, 158, -64, 184, -36, 212, -10, 238}, a subset or a universal set of {-238, 10, -212, 36, -184, 64, -158, 90}, and a subset or a universal set of {-104, 144, -78, 170, -50, 198, -24, 224} |
| | 1st and 2nd discrete 242-tone RUs | A subset or a universal set of {-224, 24, -198, 50, -170, 78, -144, 104, 116, 130, -90, 158, -64, 184, -36, 212, - 10, 238}, and a subset or a universal set of {-238, 10, - 212, 36, -184, 64, -158, 90, -130, -116, -104, 144, - 78, 170, -50, 198, -24, 224} |

With reference to Table 23, it may be learned that frequency band indices of pilot subcarriers included in a 1st discrete 26-tone RU (namely, a discrete 26-tone RU whose index is 1) are {-224, 24}, frequency band indices of pilot subcarriers included in a 2nd discrete 26-tone RU (namely, a discrete 26-tone RU whose index is 2) are {-198, 50}, frequency band indices of pilot subcarriers included in a 3rd discrete 26-tone RU (namely, a discrete 26-tone RU whose index is 3) are {-170, 78}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-224, 24, -198, 50}, frequency band indices of pilot subcarriers included in a 2nd discrete 52-tone RU (namely, a discrete 52-tone RU whose index is 2) are a subset or a universal set of {-170, 78, -144, 104}, and frequency band indices of pilot subcarriers included in each of other discrete 52-tone RUs are deduced by analogy. Details are not described herein again. Frequency band indices of pilot subcarriers included in a 1st discrete 106-tone RU (namely, a discrete 106-tone RU whose index is 1) are a subset or a universal set of {-224, 24, -198, 50, -170, 78, -144, 104}, frequency band indices of pilot subcarriers included in a 2nd discrete 106-tone RU (namely, a discrete 106-tone RU whose index is 2) are a subset or a universal set of {-90, 158, -64, 184, -36, 212, -10, 238}, and frequency band indices of pilot subcarriers included in each of other discrete 106-tone RUs are deduced by analogy. Details are not described herein again. Frequency band indices of pilot subcarriers included in a 1st discrete 242-tone RU (namely, a discrete 242-tone RU whose index is 1) are a subset or a universal set of {-224, 24, -198, 50, -170, 78, -144, 104, 116, 130, -90, 158, -64, 184, -36, 212, -10, 238}, and frequency band indices of pilot subcarriers included in a 2nd discrete 242-tone RU (namely, a discrete 242-tone RU whose index is 2) are a subset or a universal set of {-238, 10, -212, 36, - 184, 64, -158, 90, -130, -116, -104, 144, -78, 170, -50, 198, -24, 224}.

In addition, in this application, when the first frequency band is equivalent to a continuous 484-tone RU in size, a left continuous 242-tone RU and a right continuous 242-tone RU may separately use a pilot subcarrier allocation manner used when the first frequency band is equivalent to a continuous 242-tone RU in size. For details, refer to related descriptions in FIG. 14. Details are not described herein again.

FIG. 17 is a schematic flowchart of another method for sending data in a wireless network according to an embodiment of this application. As shown in FIG. 17, the method includes but is not limited to the following steps.

1701: A STA determines a discrete resource unit RU allocated to the STA, where the discrete RU includes data subcarriers and pilot subcarriers, all subcarriers in one discrete RU are distributed on a first frequency band, a size of the first frequency band is 80 MHz, the first frequency band includes 72 pilot subcarriers that are spaced, a quantity of pilot subcarriers included in one discrete RU is greater than or equal to 2, and at least two pilot subcarriers included in one discrete RU are spaced by at least M pilot subcarriers.

For a discrete RU, refer to the foregoing related descriptions. Details are not described herein again. It may be understood that, in this application, there may be one or more discrete RUs. This is not limited herein.

That a size of the first frequency band is 80 MHz may be understood as that the first frequency band is equivalent to a continuous 996-tone RU in size. This is not limited herein.

M may be 36.

1702: An AP receives a physical layer protocol data unit (physical layer protocol data unit, PPDU) on the discrete RU.

Correspondingly, the STA sends the PPDU on the discrete RU.

Optionally, step 1702 may include: The AP receives the PPDU from the STA on the discrete RU. Correspondingly, the STA sends the PPDU to the AP on the discrete RU.

It may be learned that, in the foregoing technical solution, all subcarriers in a discrete RU allocated to a STA are distributed on an 80 MHz frequency band, and at least two pilot subcarriers included in the discrete RU are spaced by at least M pilot subcarriers, so that distribution of pilot subcarriers is more discrete, to resolve problems such as narrowband interference and frequency selective fading. In this way, a linear difference result is more accurate, a problem that a linear difference result is incorrect when pilot phases are not in a same period is avoided, and a linear difference implemented by using the pilot subcarriers can accurately cover the entire frequency band. In addition, sending the PPDU on the discrete RU is also implemented.

Optionally, the discrete RU is a discrete 26-tone RU, the discrete 26-tone RU includes 24 data subcarriers and 2 pilot subcarriers, and the 2 pilot subcarriers are spaced by at least 36 pilot subcarriers.

For example, refer to Table 24. Table 24 describes a correspondence between a discrete 26-tone RU and sequence indices of 2 pilot subcarriers included in the discrete 26-tone RU when the size of the first frequency band is 80 MHz.

**Table 24: Correspondence between a discrete 26-tone RU and sequence indices of 2 pilot subcarriers included in the discrete 26-tone RU when the size of the first frequency band is 80 MHz**

| Index of a discrete 26-tone RU | Sequence indices of pilot subcarriers |
| --- | --- |
| 1 | {1, 37} |
| 2 | {3, 39} |
| 3 | {5, 41} |
| 4 | {7, 43} |
| 5 | {9, 10} |
| 6 | {11, 47} |
| 7 | {13, 49} |
| 8 | {15, 51} |
| 9 | {17, 53} |
| 10 | {19, 55} |

(continued)

| Index of a discrete 26-tone RU | Sequence indices of pilot subcarriers |
|---|---|
| 11 | {21, 57} |
| 12 | {23, 59} |
| 13 | {25, 61} |
| 14 | {27, 28} |
| 15 | {29, 65} |
| 16 | {31, 67} |
| 17 | {33, 69} |
| 18 | {35, 71} |
| 19 | {2, 38} |
| 20 | {4, 40} |
| 21 | {6, 42} |
| 22 | {8, 44} |
| 23 | {45, 46} |
| 24 | {12, 48} |
| 25 | {14, 50} |
| 26 | {16, 52} |
| 27 | {18, 54} |
| 28 | {20, 56} |
| 29 | {22, 58} |
| 30 | {24, 60} |
| 31 | {26, 62} |
| 32 | {63, 64} |
| 33 | {30, 66} |
| 34 | {32, 68} |
| 35 | {34, 70} |
| 36 | {36, 72} |

With reference to Table 24, it may be learned that spacings between sequence indices of pilot subcarriers corresponding to discrete 26-tone RUs other than a discrete 26-tone RU whose index is 5, a discrete 26-tone RU whose index is 14, a discrete 26-tone RU whose index is 23, and a discrete 26-tone RU whose index is 32 are all 36. In other words, 2 pilot subcarriers included in the discrete 26-tone RUs are spaced by 36 pilot subcarriers. It may be understood that, in this application, a sequence index of a pilot subcarrier specifically corresponding to a discrete 26-tone RU other than the discrete 26-tone RU whose index is 5, the discrete 26-tone RU whose index is 14, the discrete 26-tone RU whose index is 23, and the discrete 26-tone RU whose index is 32 is not limited herein. For example, a sequence index of a pilot subcarrier corresponding to a discrete 26-tone RU whose index is 1 may be one of the following: {1, 37}, {3, 39}, {5, 41}, {7, 43}, {11, 47}, { 13, 49}, { 15, 51}, { 17, 53}, { 19, 55}, or the like; and a sequence index of a pilot subcarrier corresponding to a discrete 26-tone RU whose index is 2 may be one of the following: { 1, 37}, {3, 39}, {5, 41}, {7, 43}, {11, 47}, {13, 49}, {15, 51}, {17, 53}, {19, 55}, or the like. It should be noted that, in this application, discrete 26-tone RUs with different indices correspond to different sequence indices of pilot subcarriers. For example, refer to Table 25. Table 25 describes another correspondence between a discrete 26-tone RU and sequence indices of 2 pilot subcarriers included in the discrete 26-tone RU when the size of the first frequency band is 80 MHz. With reference to Table 25, it may be learned that spacings between sequence indices of pilot subcarriers corresponding to discrete 26-tone RUs other than a discrete 26-tone RU whose index is 5, a discrete 26-tone RU whose index is 14, a discrete 26-tone RU whose index is 23, and a discrete 26-tone RU whose index is 32 are all 36. In other words, 2 pilot subcarriers included in the discrete 26-tone RUs are spaced by 36 pilot subcarriers.

**Table 25: Another correspondence between a discrete 26-tone RU and sequence indices of 2 pilot subcarriers included in the discrete 26-tone RU when the size of the first frequency band is 80 MHz**

| Index of a discrete 26-tone RU | Sequence indices of pilot subcarriers |
|---|---|
| 1 | {2, 38} |
| 2 | { 4, 40 } |
| 3 | {6, 42} |
| 4 | {8, 44} |
| 5 | {9, 10} |
| 6 | {12, 48} |
| 7 | {14, 50} |
| 8 | {16, 52} |
| 9 | {18, 54} |
| 10 | {20, 56} |
| 11 | {22, 58} |
| 12 | {24, 60} |
| 13 | {26, 62} |
| 14 | {27, 28} |
| 15 | {30, 66} |
| 16 | {32, 68} |
| 17 | {34, 70} |
| 18 | {36, 72} |
| 19 | {1, 37} |
| 20 | {3, 39} |
| 21 | {5, 41} |
| 22 | {7, 43} |
| 23 | {45, 46} |
| 24 | {11, 47} |
| 25 | {13, 49} |
| 26 | {15, 51} |
| 27 | {17, 53} |
| 28 | {19, 55} |
| 29 | {21, 57} |
| 30 | {23, 59} |
| 31 | {25, 61} |
| 32 | {63, 64} |
| 33 | {29, 65} |
| 34 | {31, 67} |
| 35 | {33, 69} |

(continued)

| Index of a discrete 26-tone RU | Sequence indices of pilot subcarriers |
| --- | --- |
| 36 | {35, 71} |

For example, refer to Table 26. Table 26 describes another correspondence between a discrete 26-tone RU and sequence indices of 2 pilot subcarriers included in the discrete 26-tone RU when the size of the first frequency band is 80 MHz.

**Table 26: Another correspondence between a discrete 26-tone RU and sequence indices of 2 pilot subcarriers included in the discrete 26-tone RU when the size of the first frequency band is 80 MHz**

| Index of a discrete 26-tone RU | Sequence indices of pilot subcarriers |
| --- | --- |
| 1 | {1, 37} |
| 2 | {3, 39} |
| 3 | {5, 41} |
| 4 | {7, 43} |
| 5 | {9, 45} |
| 6 | {11, 47} |
| 7 | {13, 49} |
| 8 | {15, 51} |
| 9 | {17, 53} |
| 10 | {19, 55} |
| 11 | {21, 57} |
| 12 | {23, 59} |
| 13 | {25, 61} |
| 14 | {27, 63} |
| 15 | {29, 65} |
| 16 | {31, 67} |
| 17 | {33, 69} |
| 18 | {35, 71} |
| 19 | {2, 38} |
| 20 | {4, 40} |
| 21 | {6, 42} |
| 22 | {8, 44} |
| 23 | {10, 46} |
| 24 | {12, 48} |
| 25 | {14, 50} |
| 26 | {16, 52} |
| 27 | {18, 54} |
| 28 | {20, 56} |
| 29 | {22, 58} |
| 30 | {24, 60} |
| 31 | {26, 62} |

(continued)

| Index of a discrete 26-tone RU | Sequence indices of pilot subcarriers |
|---|---|
| 32 | {28, 64} |
| 33 | {30, 66} |
| 34 | {32, 68} |
| 35 | {34, 70} |
| 36 | {36, 72} |

With reference to Table 26, it may be learned that spacings between sequence indices of pilot subcarriers corresponding to indices of the 36 discrete 26-tone RUs are all 36. In other words, 2 pilot subcarriers included in the 36 discrete 26-tone RUs are spaced by 18 pilot subcarriers. It may be understood that, in this application, a sequence index of a pilot subcarrier corresponding to each discrete 26-tone RU of the 36 discrete 26-tone RUs is not limited herein. For example, a sequence index of a pilot subcarrier corresponding to a discrete 26-tone RU whose index is 1 may be one of the following: {1, 37}, {3, 39}, {5, 41}, {7, 43}, or the like; and a sequence index of a pilot subcarrier corresponding to a discrete 26-tone RU whose index is 2 may be one of the following: {1, 37}, {3, 39}, {5, 41}, {7, 43}, or the like. It should be noted that, in this application, discrete 26-tone RUs with different indices correspond to different sequence indices of pilot subcarriers. For example, refer to Table 27. Table 27 describes another correspondence between a discrete 26-tone RU and sequence indices of 2 pilot subcarriers included in the discrete 26-tone RU when the size of the first frequency band is 80 MHz. With reference to Table 27, it may be learned that spacings between sequence indices of pilot subcarriers corresponding to indices of the 36 discrete 26-tone RUs are all 36. In other words, 2 pilot subcarriers included in the 36 discrete 26-tone RUs are spaced by 36 pilot subcarriers.

**Table 27: Another correspondence between a discrete 26-tone RU and sequence indices of 2 pilot subcarriers included in the discrete 26-tone RU when the size of the first frequency band is 80 MHz**

| Index of a discrete 26-tone RU | Sequence indices of pilot subcarriers |
|---|---|
| 1 | {2, 38} |
| 2 | {4, 40} |
| 3 | {6, 42} |
| 4 | {8, 44} |
| 5 | {10, 46} |
| 6 | {12, 48} |
| 7 | {14, 50} |
| 8 | {16, 52} |
| 9 | {18, 54} |
| 10 | {20, 56} |
| 11 | {22, 58} |
| 12 | {24, 60} |
| 13 | {26, 62} |
| 14 | {28, 64} |
| 15 | {30, 66} |
| 16 | {32, 68} |
| 17 | {34, 70} |
| 18 | {36, 72} |
| 19 | {1, 37} |
| 20 | {3, 39} |

(continued)

| Index of a discrete 26-tone RU | Sequence indices of pilot subcarriers |
| --- | --- |
| 21 | {5, 41} |
| 22 | {7, 43} |
| 23 | {9, 45} |
| 24 | {11, 47} |
| 25 | {13, 49} |
| 26 | {15, 51} |
| 27 | {17, 53} |
| 28 | {19, 55} |
| 29 | {21, 57} |
| 30 | {23, 59} |
| 31 | {25, 61} |
| 32 | {27, 63} |
| 33 | {29, 65} |
| 34 | {31, 67} |
| 35 | {33, 69} |
| 36 | {35, 71} |

Optionally, the discrete RU is a discrete 52-tone RU, the discrete 52-tone RU includes two discrete 26-tone RUs, and pilot subcarriers in the discrete 52-tone RU include some or all of pilot subcarriers in the two discrete 26-tone RUs.

For example, refer to Table 28. Table 28 describes a correspondence between a discrete 52-tone RU and indices of discrete 26-tone RUs included in the discrete 52-tone RU when the size of the first frequency band is 80 MHz.

**Table 28: Correspondence between a discrete 52-tone RU and indices of discrete 26-tone RUs included in the discrete 52-tone RU when the size of the first frequency band is 80 MHz**

| Index of a discrete 52-tone RU | Indices of two discrete 26-tone RUs |
| --- | --- |
| 1 | {1, 2} |
| 2 | {3, 4} |
| 3 | {6, 7} |
| 4 | {8, 9} |
| 5 | {10, 11} |
| 6 | {12, 13} |
| 7 | {15, 16} |
| 8 | {17, 18} |
| 9 | {19, 20} |
| 10 | {21, 22} |
| 11 | {24, 25} |
| 12 | {26, 27} |
| 13 | {28, 29} |
| 14 | {30, 31} |

(continued)

| Index of a discrete 52-tone RU | Indices of two discrete 26-tone RUs |
| --- | --- |
| 15 | {33, 34} |
| 16 | {35, 36} |

With reference to Table 28, it may be learned that a discrete 52-tone RU whose index is 1 corresponds to discrete 26-tone RUs whose indices are 1 and 2, a discrete 52-tone RU whose index is 2 corresponds to discrete 26-tone RUs whose indices are 3 and 4, a discrete 52-tone RU whose index is 3 corresponds to discrete 26-tone RUs whose indices are 6 and 7, a discrete 52-tone RU whose index is 4 corresponds to discrete 26-tone RUs whose indices are 8 and 9, and frequency band indices of pilot subcarriers included in each of other discrete 52-tone RUs are deduced by analogy. Details are not described herein. It may be understood that pilot subcarriers included in the discrete 52-tone RU whose index is 1 may be a subset or a universal set of pilot subcarriers included in the discrete 26-tone RU whose index is 1 and the discrete 26-tone RU whose index is 2; pilot subcarriers included in the discrete 52-tone RU whose index is 2 may be a subset or a universal set of pilot subcarriers included in the discrete 26-tone RU whose index is 3 and the discrete 26-tone RU whose index is 4; pilot subcarriers included in the discrete 52-tone RU whose index is 3 may be a subset or a universal set of pilot subcarriers included in the discrete 26-tone RU whose index is 6 and the discrete 26-tone RU whose index is 7; pilot subcarriers included in the discrete 52-tone RU whose index is 4 may be a subset or a universal set of pilot subcarriers included in the discrete 26-tone RU whose index is 8 and the discrete 26-tone RU whose index is 9; and frequency band indices of pilot subcarriers included in each of other discrete 52-tone RUs are deduced by analogy. Details are not described herein.

For example, sequence indices of pilot subcarriers included in the discrete 52-tone RU whose index is 1 may be, for example, one of the following: {1, 37, 3, 39}, {1, 39}, or the like. This is not limited herein. In other words, pilot subcarriers in a discrete 52-tone RU may include some or all of pilot subcarriers in two discrete 26-tone RUs.

Optionally, the discrete RU is a discrete 52-tone RU, the discrete 52-tone RU includes at least 48 data subcarriers, a quantity of pilot subcarriers included in the discrete 52-tone RU is greater than or equal to 2 and less than or equal to 4, and at least two pilot subcarriers in a maximum of 4 pilot subcarriers are spaced by at least 36 pilot subcarriers.

Optionally, the discrete RU is a discrete 106-tone RU, the discrete 106-tone RU includes four discrete 26-tone RUs, and pilot subcarriers in the discrete 106-tone RU include some or all of pilot subcarriers in the four discrete 26-tone RUs.

For example, refer to Table 29. Table 29 describes a correspondence between a discrete 106-tone RU and indices of discrete 26-tone RUs included in the discrete 106-tone RU when the size of the first frequency band is 80 MHz.

**Table 29: Correspondence between a discrete 106-tone RU and indices of discrete 26-tone RUs included in the discrete 106-tone RU when the size of the first frequency band is 80 MHz**

| Index of a discrete 106-tone RU | Indices of four discrete 26-tone RUs |
| --- | --- |
| 1 | {1, 2, 3, 4} |
| 2 | {6, 7, 8, 9} |
| 3 | {10, 11, 12, 13} |
| 4 | {15, 16, 17, 18} |
| 5 | {19, 20, 21, 22} |
| 6 | {24, 25, 26, 27} |
| 7 | {28, 29, 30, 31} |
| 8 | {33, 34, 35, 36} |

With reference to Table 29, it may be learned that a discrete 106-tone RU whose index is 1 corresponds to discrete 26-tone RUs whose indices are 1, 2, 3, and 4, a discrete 106-tone RU whose index is 2 corresponds to discrete 26-tone RUs whose indices are 6, 7, 8, and 9, and other discrete 106-tone RUs are deduced by analogy. Details are not described herein. It may be understood that pilot subcarriers included in the discrete 106-tone RU whose index is 1 may be a subset or a universal set of pilot subcarriers included in the discrete 26-tone RU whose index is 1, the discrete 26-tone RU whose index is 2, the discrete 26-tone RU whose index is 3, and the discrete 26-tone RU whose index is 4; pilot subcarriers included in the discrete 106-tone RU whose index is 2 may be a subset or a universal set of pilot subcarriers included in the discrete 26-tone RU whose index is 6, the discrete 26-tone RU whose index is 7, the discrete 26-tone RU whose index is 8, and the discrete 26-tone RU whose index is 9; and pilot subcarriers included in each of other discrete 106-tone RUs are deduced by analogy. Details are not described herein.

For example, sequence indices of pilot subcarriers included in the discrete 106-tone RU whose index is 1 may be, for example, one of the following: { 1, 3, 5, 7, 37, 39, 41, 43}, { 1, 3, 37, 39}, or the like. This is not limited herein. In other words, pilot subcarriers in a discrete 106-tone RU may include some or all of pilot subcarriers in four discrete 26-tone RUs.

Optionally, the discrete RU is a discrete 106-tone RU, the discrete 106-tone RU includes two discrete 52-tone RUs, and pilot subcarriers in the discrete 106-tone RU include some or all of pilot subcarriers in the two discrete 52-tone RUs.

For example, refer to Table 30. Table 30 describes a correspondence between a discrete 106-tone RU and indices of discrete 52-tone RUs included in the discrete 106-tone RU when the size of the first frequency band is 80 MHz.

**Table 30: Correspondence between a discrete 106-tone RU and indices of discrete 52-tone RUs included in the discrete 106-tone RU when the size of the first frequency band is 80 MHz**

| Index of a discrete 106-tone RU | Indices of two discrete 52-tone RUs |
| --- | --- |
| 1 | {1, 2} |
| 2 | {3, 4} |
| 3 | {5, 6} |
| 4 | {7, 8} |
| 5 | {9, 10} |
| 6 | {11, 12} |
| 7 | {13, 14} |
| 8 | {15, 16} |

With reference to Table 30, it may be learned that a discrete 106-tone RU whose index is 1 corresponds to discrete 52-tone RUs whose indices are 1 and 2, a discrete 106-tone RU whose index is 2 corresponds to discrete 52-tone RUs whose indices are 3 and 4, and other discrete 106-tone RUs are deduced by analogy. Details are not described herein. It may be understood that pilot subcarriers included in the discrete 106-tone RU whose index is 1 may be a subset or a universal set of pilot subcarriers included in the discrete 52-tone RU whose index is 1 and the discrete 52-tone RU whose index is 2; pilot subcarriers included in the discrete 106-tone RU whose index is 2 may be a subset or a universal set of pilot subcarriers included in the discrete 52-tone RU whose index is 3 and the discrete 52-tone RU whose index is 4; and pilot subcarriers included in each of other discrete 106-tone RUs are deduced by analogy. Details are not described herein.

For example, sequence indices of pilot subcarriers included in the discrete 106-tone RU whose index is 1 may be, for example, one of the following: { 1, 3, 5, 7, 37, 39, 41, 43}, { 1, 3, 37, 39}, or the like. This is not limited herein. In other words, pilot subcarriers in a discrete 106-tone RU may include some or all of pilot subcarriers in two discrete 52-tone RUs.

Optionally, the discrete RU is a discrete 106-tone RU, a quantity of data subcarriers included in the discrete 106-tone RU is greater than or equal to 98, a quantity of pilot subcarriers included in the discrete 106-tone RU is greater than or equal to 2 and less than or equal to 8, and at least two pilot subcarriers in a maximum of 8 pilot subcarriers are spaced by at least 36 pilot subcarriers.

Optionally, the discrete RU is a discrete 242-tone RU, the discrete 242-tone RU includes two discrete 106-tone RUs, and pilot subcarriers in the discrete 242-tone RU include some or all of pilot subcarriers in the two discrete 106-tone RUs.

For example, refer to Table 31. Table 31 describes a correspondence between a discrete 242-tone RU and indices of discrete 106-tone RUs included in the discrete 242-tone RU when the size of the first frequency band is 80 MHz.

**Table 31: Correspondence between a discrete 242-tone RU and indices of discrete 106-tone RUs included in the discrete 242-tone RU when the size of the first frequency band is 80 MHz**

| Index of a discrete 242-tone RU | Indices of two discrete 106-tone RUs |
| --- | --- |
| 1 | {1, 2} |

(continued)

| Index of a discrete 242-tone RU | Indices of two discrete 106-tone RUs |
|---|---|
| 2 | {3, 4} |
| 3 | {5, 6} |
| 4 | {7, 8} |

With reference to Table 31, it may be learned that a discrete 242-tone RU whose index is 1 corresponds to discrete 106-tone RUs whose indices are 1 and 2, and a discrete 242-tone RU whose index is 2 corresponds to discrete 106-tone RUs whose indices are 3 and 4. It may be understood that pilot subcarriers included in the discrete 242-tone RU whose index is 1 may be a subset or a universal set of pilot subcarriers included in the discrete 106-tone RU whose index is 1 and the discrete 106-tone RU whose index is 2; pilot subcarriers included in the discrete 242-tone RU whose index is 2 may be a subset or a universal set of pilot subcarriers included in the discrete 106-tone RU whose index is 3 and the discrete 106-tone RU whose index is 4; and other discrete 242-tone RUs are deduced by analogy. Details are not described herein.

For example, sequence indices of pilot subcarriers included in the discrete 242-tone RU whose index is 1 may be, for example, one of the following: { 1, 3, 5, 7, 9, 11, 13, 15, 17, 37, 39, 41, 43, 10, 47, 49, 51, 53}, or the like. This is not limited herein. In other words, pilot subcarriers in a discrete 242-tone RU may include some or all of pilot subcarriers in two discrete 106-tone RUs.

Optionally, the discrete RU is a discrete 242-tone RU, the discrete 242-tone RU includes four discrete 52-tone RUs, and pilot subcarriers in the discrete 242-tone RU include some or all of pilot subcarriers in the four discrete 52-tone RUs.

Optionally, the discrete RU is a discrete 242-tone RU, the discrete 242-tone RU includes nine discrete 26-tone RUs, and pilot subcarriers in the discrete 242-tone RU include some or all of pilot subcarriers in the nine discrete 26-tone RUs.

Optionally, the discrete RU is a discrete 242-tone RU, a quantity of data subcarriers included in the discrete 242-tone RU is greater than or equal to 224, a quantity of pilot subcarriers included in the discrete 242-tone RU is greater than or equal to 2 and less than or equal to 18, and at least two pilot subcarriers in a maximum of 18 pilot subcarriers are spaced by at least 36 pilot subcarriers.

Optionally, the discrete RU is a discrete 484-tone RU, the discrete 484-tone RU includes two discrete 242-tone RUs, and pilot subcarriers in the discrete 484-tone RU include some or all of pilot subcarriers in the two discrete 242-tone RUs.

For example, refer to Table 32. Table 32 describes a correspondence between a discrete 484-tone RU and indices of discrete 242-tone RUs included in the discrete 484-tone RU when the size of the first frequency band is 80 MHz.

**Table 32: Correspondence between a discrete 484-tone RU and indices of discrete 242-tone RUs included in the discrete 484-tone RU when the size of the first frequency band is 80 MHz**

| Index of a discrete 484-tone RU | Indices of two discrete 242-tone RUs |
|---|---|
| 1 | {1, 2} |
| 2 | {3, 4} |

With reference to Table 32, it may be learned that a discrete 484-tone RU whose index is 1 corresponds to discrete 242-tone RUs whose indices are 1 and 2, and a discrete 484-tone RU whose index is 2 corresponds to discrete 242-tone RUs whose indices are 3 and 4. It may be understood that pilot subcarriers included in the discrete 484-tone RU whose index is 1 may be a subset or a universal set of pilot subcarriers included in the discrete 242-tone RU whose index is 1 and the discrete 242-tone RU whose index is 2; and pilot subcarriers included in the discrete 484-tone RU whose index is 2 may be a subset or a universal set of pilot subcarriers included in the discrete 242-tone RU whose index is 3 and the discrete 242-tone RU whose index is 4.

For example, sequence indices of pilot subcarriers included in the discrete 484-tone RU whose index is 1 may be, for example, one of the following:
{ 1, 3, 5, 7, 9, 11, 13, 15, 17, 19, 21, 23, 25, 27, 29, 31, 37, 39, 41, 43, 10, 47, 49, 51, 53, 55, 57, 59, 61, 28, 65, 67}, or the like. This is not limited herein. In other words, pilot subcarriers in a discrete 484-tone RU may include some or all of pilot subcarriers in two discrete 242-tone RUs.

Optionally, the discrete RU is a discrete 484-tone RU, the discrete 484-tone RU includes four discrete 106-tone RUs, and pilot subcarriers in the discrete 484-tone RU include some or all of pilot subcarriers in the four discrete 106-tone RUs.

Optionally, the discrete RU is a discrete 484-tone RU, the discrete 484-tone RU includes eight discrete 52-tone RUs, and pilot subcarriers in the discrete 484-tone RU include some or all of pilot subcarriers in the eight discrete 52-tone RUs.

Optionally, the discrete RU is a discrete 484-tone RU, the discrete 484-tone RU includes 16 discrete 26-tone RUs, and pilot subcarriers in the discrete 484-tone RU include some or all of pilot subcarriers in the 16 discrete 26-tone RUs.

Optionally, the discrete RU is a discrete 484-tone RU, a quantity of data subcarriers included in the discrete 484-tone RU is greater than or equal to 448, a quantity of pilot subcarriers included in the discrete 484-tone RU is greater than or equal to 2 and less than or equal to 36, and at least two pilot subcarriers in a maximum of 36 pilot subcarriers are spaced by at least 36 pilot subcarriers.

It should be noted that, in this application, based on the one-to-one correspondence between the sequence indices of the 72 pilot subcarriers and the frequency band indices of the 72 pilot subcarriers, frequency band indices of pilot subcarriers corresponding to different discrete RUs when the first frequency band is 80 MHz may be obtained.

Refer to Table 33. Table 33 describes correspondences between sequence indices of 72 pilot subcarriers and frequency band indices of the 72 pilot subcarriers corresponding to a case in which the size of the first frequency band is 80 MHz. For example, a sequence index 1 of a pilot subcarrier corresponds to a frequency band index -494 of the pilot subcarrier.

**Table 33: Correspondences between sequence indices of 72 pilot subcarriers and frequency band indices of the 72 pilot subcarriers in a case in which the size of the first frequency band is 80 MHz**

| Sequence index of a pilot subcarrier | 1 | 2 | 3 | 4 | 5 | 6 | 7 | 8 | 9 |
|---|---|---|---|---|---|---|---|---|---|
| Frequency band index of a pilot subcarrier | -494 | -480 | -468 | -454 | -440 | -426 | -414 | -400 | -386 |
| Sequence index of a pilot subcarrier | 10 | 11 | 12 | 13 | 14 | 15 | 16 | 17 | 18 |
| Frequency band index of a pilot subcarrier | -372 | -360 | -346 | -334 | -320 | -306 | -292 | -280 | -266 |
| Sequence index of a pilot subcarrier | 19 | 20 | 21 | 22 | 23 | 24 | 25 | 26 | 27 |
| Frequency band index of a pilot subcarrier | -246 | -232 | -220 | -206 | -192 | -178 | -166 | -152 | -140 |
| Sequence index of a pilot subcarrier | 28 | 29 | 30 | 31 | 32 | 33 | 34 | 35 | 36 |
| Frequency band index of a pilot subcarrier | -126 | -112 | -98 | -86 | -72 | -58 | -44 | -32 | -18 |
| Sequence index of a pilot subcarrier | 37 | 38 | 39 | 40 | 41 | 42 | 43 | 44 | 45 |
| Frequency band index of a pilot subcarrier | 18 | 32 | 44 | 58 | 72 | 86 | 98 | 112 | 126 |
| Sequence index of a pilot subcarrier | 46 | 47 | 48 | 49 | 50 | 51 | 52 | 53 | 54 |
| Frequency band index of a pilot subcarrier | 140 | 152 | 166 | 178 | 192 | 206 | 220 | 232 | 246 |
| Sequence index of a pilot subcarrier | 55 | 56 | 57 | 58 | 59 | 60 | 61 | 62 | 63 |
| Frequency band index of a pilot subcarrier | 266 | 280 | 292 | 306 | 320 | 334 | 346 | 360 | 372 |

(continued)

| Sequence index of a pilot subcarrier | 1 | 2 | 3 | 4 | 5 | 6 | 7 | 8 | 9 |
|---|---|---|---|---|---|---|---|---|---|
| Sequence index of a pilot subcarrier | 64 | 65 | 66 | 67 | 68 | 69 | 70 | 71 | 72 |
| Frequency band index of a pilot subcarrier | 386 | 400 | 414 | 426 | 440 | 454 | 468 | 480 | 494 |

For example, with reference to Table 24 or Table 26, frequency band indices of pilot subcarriers corresponding to different discrete RUs when the first frequency band is 80 MHz may be obtained. Specifically, refer to Table 34. Table 34 describes frequency band indices of pilot subcarriers corresponding to different discrete RUs when the size of the first frequency band is 80 MHz.

**Table 34: Frequency band indices of pilot subcarriers corresponding to different discrete RUs when the size of the first frequency band is 80 MHz**

| Size of the first frequency band | RU size (size) | Frequency band indices of pilot subcarriers |
|---|---|---|
| 80 MHz | 1st to 36th discrete 26-tone RUs | {-494, 18}, {-468, 44}, {-440, 72}, {-414, 98}, {-386, -372}, {-360, 152}, {-334, 178}, {-306, 206}, {-280, 232}, {-246, 266}, {-220, 292}, {-192, 320}, {-166, 346}, {-140, -126}, {-112, 400}, {-86, 426}, {-58, 454}, {-32, 480}, {-480, 32}, {-454, 58}, {-426, 86}, {-400, 112}, {126, 140}, {-346, 166}, {-320, 192}, {-292, 220}, {-266, 246}, {-232, 280}, {-206, 306}, {-178, 334}, {-152, 360}, {372, 386}, {-98, 414}, {-72, 440}, {-44, 468}, and {-18, 494} |
| | 1st to 16th discrete 52-tone RUs | A subset or a universal set of {-494, 18, -468, 44}, a subset or a universal set of {-440, 72, -414, 98}, a subset or a universal set of {-360, 152, -334, 178}, a subset or a universal set of {-306, 206, -280, 232}, a subset or a universal set of {-246, 266, -220, 292}, a subset or a universal set of {-192, 320, -166, 346}, a subset or a universal set of {-112, 400, -86, 426}, a subset or a universal set of {-58, 454, -32, 480}, a subset or a universal set of {-480, 32, -454, 58}, a subset or a universal set of {-426, 86, -400, 112}, a subset or a universal set of {-346, 166, -320, 192}, a subset or a universal set of {-292, 220, -266, 246}, a subset or a universal set of {-232, 280, -206, 306}, a subset or a universal set of {-178, 334, -152, 360}, a subset or a universal set of {-98, 414, -72, 440}, and a subset or a universal set of {-44, 468, -18, 494} |
| | 1st to 8th discrete 106-tone RUs | A subset or a universal set of {-494, 18, -468, 44, -440, 72, -414, 98}, a subset or a universal set of {-360, 152, -334, 178, -306, 206, -280, 232}, a subset or a universal set of {-246, 266, -220, 292, -192, 320, -166, 346}, a subset or a universal set of {-112, 400, -86, 426, -58, 454, -32, 480}, a subset or a universal set of {-480, 32, -454, 58, -426, 86, -400, 112}, a subset or a universal set of {-346, 166, -320, 192, -292, 220, -266, 246}, a subset or a universal set of {-232, 280, -206, 306, -178, 334, -152, 360}, and a subset or a universal set of {-98, 414, -72, 440, -44, 468, -18, 494} |
| | 1st to 4th discrete 242-tone RUs | A subset or a universal set of {-494, 18, -468, 44, -440, 72, -414, 98, -360, 152, -334, 178, -306, 206, -280, 232}, a subset or a universal set of {-246, 266, -220, 292, -192, 320, -166, 346, -112, 400, -86, 426, -58, 454, -32, 480}, a subset or a universal set of {-480, 32, -454, 58, -426, 86, -400, 112, -346, 166, -320, 192, -292, 220, -266, 246}, and a subset or a universal set of {-232, 280, -206, 306, -178, 334, -152, 360, -98, 414, -72, 440, -44, 468, -18, 494} |
| | 1st and 2nd discrete 484-tone RUs | A subset or a universal set of {-494, 18, -468, 44, -440, 72, -414, 98, -360, 152, -334, 178, -306, 206, -280, 232, -246, 266, -220, 292, -192, 320, -166, 346, -112, 400, -86, 426, -58, 454, -32, 480}, and a subset or a universal set of {-480, 32, -454, 58, -426, 86, -400, 112, -346, 166, -320, 192, -292, 220, -266, 246, -232, 280, -206, 306, -178, 334, -152, 360, -98, 414, -72, 440, -44, 468, -18, 494} |

With reference to Table 34, it may be learned that frequency band indices of pilot subcarriers included in a 1st discrete 26-tone RU (namely, a discrete 26-tone RU whose index is 1) are {-494, 18}, frequency band indices of pilot subcarriers included in a 2nd discrete 26-tone RU (namely, a discrete 26-tone RU whose index is 2) are {-440, 72}, frequency band indices of pilot subcarriers included in a 3rd discrete 26-tone RU (namely, a discrete 26-tone RU whose index is 3) are {-440, 72}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-494, 18, -468, 44}, frequency band indices of pilot subcarriers included in a 2nd discrete 52-tone RU (namely, a discrete 52-tone RU whose index is 2) are a subset or a universal set of {-440, 72, -414, 98}, and frequency band indices of pilot subcarriers included in each of other discrete 52-tone RUs are deduced by analogy. Details are not described herein again. Frequency band indices of pilot subcarriers included in a 1st discrete 106-tone RU (namely, a discrete 106-tone RU whose index is 1) are a subset or a universal set of {-494, 18, -468, 44, -440, 72, -414, 98}, frequency band indices of pilot subcarriers included in a 2nd discrete 106-tone RU (namely, a discrete 106-tone RU whose index is 2) are a subset or a universal set of {-360, 152, -334, 178, -306, 206, -280, 232}, and frequency band indices of pilot subcarriers included in each of other discrete 106-tone RUs are deduced by analogy. Details are not described herein again. Frequency band indices of pilot subcarriers included in a 1st discrete 242-tone RU (namely, a discrete 242-tone RU whose index is 1) are a subset or a universal set of {-494, 18, -468, 44, -440, 72, -414, 98, -360, 152, -334, 178, -306, 206, -280, 232}, frequency band indices of pilot subcarriers included in a 2nd discrete 242-tone RU (namely, a discrete 242-tone RU whose index is 2) are a subset or a universal set of {-246, 266, -220, 292, -192, 320, - 166, 346, -112, 400, -86, 426, -58, 454, -32, 480}, and frequency band indices of pilot subcarriers included in each of other discrete 242-tone RUs are deduced by analogy. Details are not described herein again. Frequency band indices of pilot subcarriers included in a 1st discrete 484-tone RU (namely, a discrete 484-tone RU whose index is 1) are a subset or a universal set of {-494, 18, - 468, 44, -440, 72, -414, 98, -360, 152, -334, 178, -306, 206, -280, 232, -246, 266, -220, 292, - 192, 320, -166, 346, -112, 400, -86, 426, -58, 454, -32, 480}, and frequency band indices of pilot subcarriers included in a 2nd discrete 484-tone RU (namely, a discrete 484-tone RU whose index is 2) are a subset or a universal set of {-480, 32, -454, 58, -426, 86, -400, 112, -346, 166, -320, 192, -292, 220, -266, 246, -232, 280, -206, 306, -178, 334, -152, 360, -98, 414, -72, 440, -44, 468, -18, 494}.

For example, with reference to Table 25 or Table 27, frequency band indices of pilot subcarriers corresponding to different discrete RUs when the first frequency band is 80 MHz may be obtained. Specifically, refer to Table 35. Table 35 describes other frequency band indices of pilot subcarriers corresponding to different discrete RUs when the size of the first frequency band is 80 MHz.

**Table 35: Other frequency band indices of pilot subcarriers corresponding to different discrete RUs when the size of the first frequency band is 80 MHz**

| Size of the first frequency band | RU size (size) | Frequency band indices of pilot subcarriers |
|---|---|---|
| 80 MHz | 1st to 36th discrete 26-tone RUs | {-480, 32}, {-454, 58}, {-426, 86}, {-400, 112}, {-386, -372}, {-346, 166}, {-320, 192}, {-292, 220}, {-266, 246} {-232, 280}, {-206, 306}, {-178, 334}, {-152, 360} {-140, -126}, {-98, 414}, {-72, 440}, {-44, 468}, {-18, 494}, {-494, 18}, {-468, 44}, {-440, 72}, {-414, 98}, {126, 140}, {-360, 152}, {-334, 178}, {-306, 206}, {-280, 232} {-246, 266}, {-220, 292}, {-192, 320}, {-166, 346}, {372, 386}, {-112, 400}, {-86, 426}, {-58, 454}, and {-32, 480} |
| | 1st to 16th discrete 52-tone RUs | A subset or a universal set of {-480, 32, -454, 58}, a subset or a universal set of {-426, 86, -400, 112}, a subset or a universal set of {-346, 166, -320, 192}, a subset or a universal set of {-292, 220, -266, 246}, a subset or a universal set of {-232, 280, -206, 306}, a subset or a universal set of {-178, 334, -152, 360}, a subset or a universal set of {-98, 414, -72, 440}, a subset or a universal set of {-44, 468, -18, 494}, a subset or a universal set of {-494, 18, -468, 44}, a subset or a universal set of {-440, 72, -414, 98}, a subset or a universal set of {-360, 152, -334, 178}, a subset or a universal set of {-306, 206, -280, 232}, a subset or a universal set of {-246, 266, -220, 292}, a subset or a universal set of {-192, 320, -166, 346}, a subset or a universal set of {-112, 400, -86, 426}, and a subset or a universal set of {-58, 454, -32, 480} |
| | 1st to 8th discrete 106-tone RUs | A subset or a universal set of {-480, 32, -454, 58, -426, 86, -400, 112}, a subset or a universal set of {-346, 166, -320, 192, -292, 220, -266, 246}, a subset or a universal set of {-232, 280, -206, 306, -178, 334, -152, 360}, a subset or a universal set of {-98, 414, -72, 440, -44, 468, -18, 494}, a subset or a universal set of {-494, 18, -468, 44, -440, 72, -414, 98}, a subset or a universal set {-360, 152, -334, 178, -306, 206, -280, 232}, a subset or a universal set {-246, 266, -220, 292, -192, 320, -166, 346}, and a subset or a universal set {-112, 400, -86, 426, -58, 454, -32, 480} |
| | 1st to 4th discrete 242-tone RUs | A subset or a universal set of {-480, 32, -454, 58, -426, 86, -400, 112, -346, 166, -320, 192, -292, 220, -266, 246}, a subset or a universal set of {-232, 280, -206, 306, -178, 334, -152, 360, -98, 414, -72, 440, -44, 468, -18, 494}, a subset or a universal set of {-494, 18, -468, 44, -440, 72, -414, 98, -360, 152, -334, 178, -306, 206, -280, 232}, and a subset or a universal set of {-246, 266, -220, 292, -192, 320, -166, 346, -112, 400, -86, 426, -58, 454, -32, 480} |
| | 1st and 2nd discrete 484-tone RUs | A subset or a universal set of {-480, 32, -454, 58, -426, 86, -400, 112, -346, 166, -320, 192, -292, 220, -266, 246, -232, 280, -206, 306, -178, 334, -152, 360, -98, 414, -72, 440, -44, 468, -18, 494}, and a subset or a universal set of {-494, 18, -468, 44, -440, 72, -414, 98, -360, 152, -334, 178, -306, 206, -280, 232, -246, 266, -220, 292, -192, 320, -166, 346, -112, 400, -86, 426, -58, 454, -32, 480} |

With reference to Table 35, it may be learned that frequency band indices of pilot subcarriers included in a 1st discrete 26-tone RU (namely, a discrete 26-tone RU whose index is 1) are {-480, 32}, frequency band indices of pilot subcarriers included in a 2nd discrete 26-tone RU (namely, a discrete 26-tone RU whose index is 2) are {-454, 58}, frequency band indices of pilot subcarriers included in a 3rd discrete 26-tone RU (namely, a discrete 26-tone RU whose index is 3) are {-426, 86}, and frequency band indices of pilot subcarriers included in each of other discrete 26-tone RUs are deduced by analogy. Details are not described herein. Frequency band indices of pilot subcarriers included in a 1st discrete 52-tone RU (namely, a discrete 52-tone RU whose index is 1) are a subset or a universal set of {-480, 32, -454, 58}, frequency band indices of pilot subcarriers included in a 2nd discrete 52-tone RU (namely, a discrete 52-tone RU whose index is 2) are a subset or a universal set of {-426, 86, -400, 112}, and frequency band indices of pilot subcarriers included in each of other discrete 52-tone RUs are deduced by analogy. Details are not described herein again. Frequency band indices of pilot subcarriers included in a 1st discrete 106-tone RU (namely, a discrete 106-tone RU whose index is 1) are a subset or a universal set of {-480, 32, -454, 58, -426, 86, -400, 112}, frequency band indices of pilot subcarriers included in a 2nd discrete 106-tone RU (namely, a discrete 106-tone RU whose index is 2) are a subset or a universal set of {-346, 166, -320, 192, -292, 220, -266, 246}, and frequency band indices of pilot subcarriers included in each of other discrete 106-tone RUs are deduced by analogy. Details are not described herein again. Frequency band indices of pilot subcarriers included in a 1st discrete 242-tone RU (namely, a discrete 242-tone RU whose index is 1) are a subset or a universal set of {-480, 32, -454, 58, -426, 86, -400, 112, -346, 166, -320, 192, -292, 220, -266, 246}, frequency band indices of pilot subcarriers included in a 2nd discrete 242-tone RU (namely, a discrete 242-tone RU whose index is 2) are a subset or a universal set of {-232, 280, -206, 306, -178, 334, - 152, 360, -98, 414, -72, 440, -44, 468, -18, 494}, and frequency band indices of pilot subcarriers included in each of other discrete 242-tone RUs are deduced by analogy. Details are not described herein again. Frequency band indices of pilot subcarriers included in a 1st discrete 484-tone RU (namely, a discrete 484-tone RU whose index is 1) are a subset or a universal set of {-480, 32, - 454, 58, -426, 86, -400, 112, -346, 166, -320, 192, -292, 220, -266, 246, -232, 280, -206, 306, -178, 334, -152, 360, -98, 414, -72, 440, -44, 468, -18, 494}, and frequency band indices of pilot subcarriers included in a 2nd discrete 484-tone RU (namely, a discrete 484-tone RU whose index is 2) are a subset or a universal set of {-494, 18, -468, 44, -440, 72, -414, 98, -360, 152, -334, 178, -306, 206, -280, 232, -246, 266, -220, 292, -192, 320, -166, 346, -112, 400, -86, 426, -58, 454, -32, 480}.

In a possible implementation, in this application, when the first frequency band is equivalent to a continuous 996-tone RU in size, a left continuous 484-tone RU and a right continuous 484-tone RU may separately use a pilot subcarrier allocation manner used when the first frequency band is equivalent to a continuous 484-tone RU in size. For details, refer to related descriptions in FIG. 16. Details are not described herein again. In addition, the continuous 484-tone RU may also use a pilot subcarrier allocation manner used for the continuous 242-tone RU. In another possible implementation, when the first frequency band is equivalent to a continuous 996-tone RU in size, the continuous 996-tone RU may include four continuous 242-tone RUs, each continuous 242-tone RU may use a pilot subcarrier allocation manner used when the first frequency band is equivalent to a continuous 242-tone RU in size. For details, refer to related descriptions in FIG. 14. Details are not described herein again.

Optionally, in this application, when the first frequency band is equivalent to a continuous $2\times996$-tone RU, a continuous $3\times996$-tone RU, or a continuous $4\times996$-tone RU in size, spacings between 2 pilot subcarriers included in the discrete RUs are respectively at least 72, 108, and 144. For a specific pilot subcarrier allocation manner, refer to FIG. 14, FIG. 16, and FIG. 17. Details are not described herein again.

In this application, the size of the first frequency band is U 20 MHz, and U = 1 or U is an even number. There are 9 discrete 26-tone RUs per 20 MHz. Each discrete 26-tone RU of the $9\times U$ discrete 26-tone RUs includes data subcarriers and pilot subcarriers, and all subcarriers in each discrete 26-tone RU of the $9\times U$ discrete 26-tone RUs are distributed on the first frequency band. If each 20 MHz includes 18 pilot subcarriers, the U 20 MHz may include $18\times U$ pilot subcarriers.

If U is 1, the first frequency band includes 18 pilot subcarriers that are spaced, a quantity of pilot subcarriers included in one discrete 26-tone RU is equal to 2, and two pilot subcarriers included in discrete 26-tone RUs other than a 5th discrete 26-tone RU are spaced by at least 10 pilot subcarriers. For details, refer to related descriptions in FIG. 12. Details are not described herein again.

If U is an even number, two pilot subcarriers included in discrete 26-tone RUs other than $(5+9\times n)$th discrete 26-tone RU are spaced by at least $9\times U$ pilot subcarriers, where n is an integer greater than or equal to 0 and less than or equal to U-1. It may be understood that, sequence indices of pilot subcarriers corresponding to a $(5+9\times n)$th discrete 26-tone RU is $[2\times(5+9\times n)-1, 2\times(5+9\times n)\}$, and sequence indices of pilot subcarriers corresponding to a discrete 26-tone RU other than the $(5+9\times n)$th discrete 26-tone RU is $\{x, x+9\times U\}$, where x meets the following condition: x is an integer greater than or equal to 1 and less than or equal to $9\times U$, and x is not equal to $2\times(5+9\times n)-1$.

If U is 1 or an even number, sequence indices of pilot subcarriers corresponding to each discrete 26-tone RU of the $9\times U$ discrete 26-tone RUs is $\{x, x+9U\}$, where x is an integer greater than or equal to 1 and less than or equal to $9\times U$.

Optionally, in this application, if at least two STAs send corresponding first pilot signals to an AP on all pilot subcarriers included in a first frequency band, the AP may receive second pilot signals of the at least two STAs on all the pilot subcarriers included in the first frequency band, and average the received second pilot signals corresponding to the at least two STAs, to use an average value as the first pilot signals sent by each STA of the at least two STAs.

The foregoing mainly describes the solutions provided in this application from the perspective of interaction between devices. It may be understood that, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the AP or the STA may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

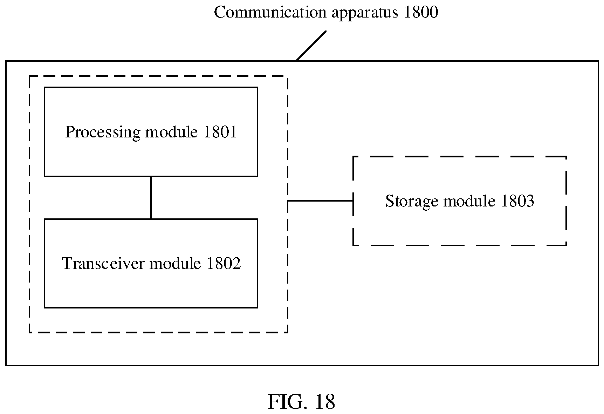

When an integrated module is used, refer to FIG. 18. FIG. 18 is a schematic diagram of a structure of a communication apparatus according to an embodiment of this application. The communication apparatus 1800 may be applied to the method shown in FIG. 5 to FIG. 15. As shown in FIG. 18, the communication apparatus 1800 includes a processing module 1801 and a transceiver module 1802. The processing module 1801 may be one or more processors. The transceiver module 1802 may be a transceiver or a communication interface. The communication apparatus may be configured to implement the AP or the STA in any one of the foregoing method embodiments, or may be configured to implement functions of the network element in any one of the foregoing method embodiments. The network element or function may be a network element in a hardware device, a software function running on dedicated hardware, or a virtualized function instantiated on a platform (for example, a cloud platform). Optionally, the communication apparatus 1800 may further include a storage module 1803, configured to store program code and data that are of the communication apparatus 1800.

In an example, when the communication apparatus is used as a STA or a chip applied to a STA, the communication apparatus performs the steps performed by the STA in the foregoing method embodiments. The transceiver module 1802 is configured to support communication with an AP or the like. The transceiver module specifically performs sending and/or receiving actions performed by the STA in FIG. 5 to FIG. 15, for example, supports the STA in performing step 502, and/or is used for another process of the technology described in this specification. The processing module 1801 may be configured to support the communication apparatus 1800 in performing the processing actions in the foregoing method embodiments, for example, support the STA in performing one or more steps in step 501, step 1201, step 1401, or step 1501, and/or another process of the technology described in this specification.

In an example, when the communication apparatus is used as an AP or a chip applied to an AP, the communication apparatus performs the steps performed by the AP in the foregoing method embodiments. The transceiver module 1802 is configured to support communication with a STA or the like. The transceiver module specifically performs sending and/or receiving actions performed by the AP in FIG. 5 to FIG. 15, for example, supports the AP in performing one or more steps in step 1202, step 1402, or step 1502, and/or is configured to perform another process of the technology described in this specification. The processing module 1801 may be configured to support the communication apparatus 1800 in performing the processing actions in the foregoing method embodiments, for example, support the AP in performing step 502 and/or another process of the technology described in this specification.

In a possible implementation, when the STA or the AP is a chip, the transceiver module 1802 may be an interface, a pin, a circuit, or the like. The interface may be configured to input to-be-processed data to a processor, and may output a processing result of the processor to the outside. During specific implementation, the interface may be a general purpose input output (general purpose input output, GPIO) interface, and may be connected to a plurality of peripheral devices (for example, a display (LCD), a camera (camera), a radio frequency (radio frequency, RF) module, and an antenna). The interface is connected to the processor through a bus.

The processing module 1801 may be a processor. The processor may execute computer-executable instructions stored in a storage module, so that the chip performs the method in any one of the embodiments shown in FIG. 5, FIG. 11 to FIG. 14, FIG. 16, and FIG. 17.

Further, the processor may include a controller, an arithmetic unit, and a register. For example, the controller is mainly responsible for decoding instructions and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages, MIPS) architecture, an advanced reduced instruction set computing machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the processor and the interface may be implemented by using a hardware design, may be implemented by using a software design, or may be implemented by a combination of software and hardware. This is not limited herein.

An embodiment of this application further provides a communication apparatus. The communication apparatus includes a processor, a memory, an input interface, and an output interface. The input interface is configured to receive information from another communication apparatus other than the communication apparatus. The output interface is configured to output information to the another communication apparatus other than the communication apparatus. The processor invokes a computer program stored in the memory to implement any one of the embodiments shown in FIG. 5, FIG. 11 to FIG. 14, and FIG. 16.

An embodiment of this application further provides a chip. The chip includes at least one processor and an interface. The processor is configured to read and execute instructions stored in a memory. When the instructions are run, the chip is enabled to perform any one of the embodiments shown in FIG. 5, FIG. 11 to FIG. 14, and FIG. 16.

An embodiment of this application further provides a computer-readable storage medium. The computer-readable storage medium stores a computer program. The computer program includes program instructions. When the program instructions are executed by a computer, the computer is enabled to perform any one of the embodiments shown in FIG. 5, FIG. 11 to FIG. 14, and FIG. 16.

An embodiment of this application further provides a computer program product. When a computer reads and executes the computer program product, the computer is enabled to implement any one of the embodiments shown in FIG. 5, FIG. 11 to FIG. 14, and FIG. 16.

The objectives, technical solutions, and benefits of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

**Claims**

1. A pilot signal transmission method, wherein the method comprises:

   determining, by a first device, a first frequency band to which a discrete RU allocated to the first device belongs; and
   sending, by the first device, a first pilot signal of the first device to a second device on all pilot subcarriers comprised in the first frequency band.

2. The method according to claim 1, wherein the first pilot signal of the first device is related to a preset matrix $W$ and a column vector $s_k^t$, $W$ is a reversible matrix with Nu rows and Nu columns, $W$ satisfies the following equation: $W = [w_1; w_2, ..., w_{Nu}]$, $w_x$ is a column vector, x is an integer greater than or equal to 1 and less than or equal to Nu, Nu is an integer greater than 0, $W$ is used to control pilot signals transmitted by Nu devices in Nu time units, a column index of $W$ is a time unit index, a row index of $W$ is a device index, and the Nu devices comprise the first device; and

   $s_k^t$ indicates pilot signals corresponding to the first device on all the pilot subcarriers comprised in the first frequency band in a $t^{th}$ time unit, a quantity of columns of $s_k^t$ is a quantity of all the pilot subcarriers comprised in the first frequency band, an $n^{th}$ element in $s_k^t$ indicates a pilot signal corresponding to the first device on an $n^{th}$ pilot subcarrier comprised in the first frequency band, n is an integer greater than 0 and less than or equal to the quantity of columns of $s_k^t$, k is an integer greater than or equal to 1 and less than or equal to Nu, t is an integer greater than or equal to 0, and t is a time unit index.

3. The method according to claim 2, wherein first pilot signals $q_t$ of the Nu devices satisfy the following equation:

$$q_t = \begin{bmatrix} s_1^t & s_2^t & s_3^t & ... & s_{Nu}^t \end{bmatrix} w_{tt}$$

, tt = mod(t, Nu) + 1, $w_{tt}$ indicates a $tt^{th}$ column vector in $W$, $q_t$ is a column vector, a quantity of columns of $q_t$ is a quantity of all the pilot subcarriers comprised in the first frequency band, tt is an integer greater than or equal to 1 and less than or equal to Nu, and the first pilot signals of the Nu devices are sent on all the pilot subcarriers comprised in the first frequency band.

4. The method according to any one of claims 1 to 3, wherein the first pilot signal of the first device is $s_k^t W_{k,tt}$, $W_{k,tt}$ is an element in a $k^{th}$ row and a $tt^{th}$ column in $W$, tt = mod(t, Nu) + 1, and tt is an integer greater than or equal to 1 and less than or equal to Nu.

5. The method according to any one of claims 1 to 4, wherein

$W$ is an orthogonal matrix;
$W$ is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

wherein $H_n$ is an n-order Hadamard matrix, and n is an integer greater than or equal to 1;
$W$ is a 2×n-order P matrix $P_{2n \times 2n}$, and $P_{2n \times 2n}$, satisfies the following equation:

$$P_{2n \times 2n} = \begin{bmatrix} P_{n \times n} & P_{n \times n} \\ P_{n \times n} & -P_{n \times n} \end{bmatrix},$$

wherein $P_{n \times n}$ is an n-order P matrix; or
$W$ is a diagonal matrix, and the diagonal matrix is an identity matrix.

6. The method according to claim 5, wherein

n is 1, and

$$H_{2n} = \begin{bmatrix} 1 & 1 \\ -1 & 1 \end{bmatrix};$$

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and
n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

**7.** The method according to any one of claims 1 to 6, wherein partial elements in $s_k^t$ are set to zero.

**8.** The method according to any one of claims 1 to 7, wherein the first pilot signal of the first device occupies different pilot subcarriers in different time units in the Nu time units, and a total quantity of pilot subcarriers occupied by the first pilot signal of the first device in the Nu time units is a total quantity of the pilot subcarriers comprised in the first frequency band.

**9.** A pilot signal demodulation method, wherein the method comprises:

receiving, by a second device, second pilot signals of at least two first devices on all pilot subcarriers comprised in a first frequency band, wherein the first frequency band is a frequency band to which discrete resource units RUs allocated to the at least two first devices belong; and
processing, by the second device, the second pilot signals of the at least two first devices, to obtain first pilot signals sent by the at least two first devices.

**10.** The method according to claim 9, wherein the second pilot signals $X$ of the at least two first devices satisfy the following equation:

$$X = G[s_1 \quad s_2 \quad s_3 \quad ... \quad s_{Nu}]W \text{ or } X = G[s_1 \quad s_2 \quad s_3 \quad ... \quad s_{Nu}]W + Z;$$

G is a channel parameter, Z is a noise, $W$ satisfies the following equation: $W = [w_1, w_2, ..., w_{Nu}]$, $w_x$ is a column vector, x is an integer greater than or equal to 1 and less than or equal to Nu, Nu is an integer greater than 1, $W$ is used to control pilot signals transmitted by the at least two first devices in Nu time units, a column index of $W$ is a time unit index, and a row index of $W$ is a device index; and
a quantity of columns of $s_k$ is a quantity of all the pilot subcarriers comprised in the first frequency band, an $n^{th}$ element in $s_k$ indicates a pilot signal corresponding to a $k^{th}$ first device in the at least two first devices on an $n^{th}$ pilot subcarrier comprised in the first frequency band, n is an integer greater than 0 and less than or equal to the quantity of columns of $s_k$, k is an integer greater than or equal to 1 and less than or equal to Nu, t is an integer greater than or equal to 0, and t is a time unit index.

**11.** The method according to claim 9 or 10, wherein the first pilot signals sent by the at least two first devices are $[s_1 \ s_2 \ s_3 ... s_{Nu}] \ W$.

**12.** The method according to any one of claims 9 to 11, wherein

$W$ is an orthogonal matrix;
$W$ is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

wherein $H_n$ is an n-order Hadamard matrix, and n is an integer greater than or equal to 1;
$W$ is a 2×n-order P matrix $P_{2n \times 2n}$, and $P_{2n \times 2n}$, satisfies the following equation:

$$P_{2n \times 2n} = \begin{bmatrix} P_{n \times n} & P_{n \times n} \\ P_{n \times n} & -P_{n \times n} \end{bmatrix},$$

wherein $P_{n \times n}$ is an n-order P matrix; or
$W$ is a diagonal matrix, and the diagonal matrix is an identity matrix.

**13.** The method according to claim 12, wherein

n is 1, and

$$H_{2n} = \begin{bmatrix} 1 & 1 \\ -1 & 1 \end{bmatrix};$$

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and
n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

14. The method according to any one of claims 10 to 13, wherein partial elements of partial column vectors in $[s_1\ s_2\ s_3 \ldots s_{Nu}]$ are set to zero.

15. The method according to any one of claims 9 to 14, wherein the first pilot signal of one first device in the at least two first devices occupies different pilot subcarriers in different time units in the Nu time units, and a total quantity of pilot subcarriers occupied by the first pilot signal of one first device in the Nu time units is a total quantity of the pilot subcarriers comprised in the first frequency band.

16. A communication apparatus, wherein the apparatus comprises a processing module and a transceiver module;

   the processing module is configured to determine a first frequency band to which a discrete RU allocated to the processing module belongs; and
   the transceiver module is configured to send a first pilot signal of a first device to a second device on all pilot subcarriers comprised in the first frequency band.

17. The apparatus according to claim 16, wherein the first pilot signal of the first device is related to a preset matrix $W$ and a column vector $s_k^t$, $W$ is a reversible matrix with Nu rows and Nu columns, $W$ satisfies the following equation: $W = [w_1,\ w_2,\ \ldots,\ w_{Nu}]$, $w_x$ is a column vector, x is an integer greater than or equal to 1 and less than or equal to Nu, Nu is an integer greater than 0, $W$ is used to control pilot signals transmitted by Nu devices in Nu time units, a column index of $W$ is a time unit index, a row index of $W$ is a device index, and the Nu devices comprise the first device; and

$s_k^t$ indicates pilot signals corresponding to the first device on all the pilot subcarriers comprised in the first frequency band in a $t^{th}$ time unit, a quantity of columns of $s_k^t$ is a quantity of all the pilot subcarriers comprised in the first frequency band, an $n^{th}$ element in $s_k^t$ indicates a pilot signal corresponding to the first device on an $n^{th}$ pilot subcarrier comprised in the first frequency band, n is an integer greater than 0 and less than or equal to the quantity of columns of $s_k^t$, k is an integer greater than or equal to 1 and less than or equal to Nu, t is an integer greater than or equal to 0, and t is a time unit index.

18. The apparatus according to claim 17, wherein first pilot signals $q_t$ of the Nu devices satisfy the following equation:

$$q_t = \begin{bmatrix} s_1^t & s_2^t & s_3^t & \ldots & s_{Nu}^t \end{bmatrix} w_{tt}$$

, tt = mod(t, Nu) + 1, $w_{tt}$ indicates a $tt^{th}$ column vector in $W$, $q_t$ is a column vector, a quantity of columns of $q_t$ is a quantity of all the pilot subcarriers comprised in the first frequency band, tt is an integer greater than or equal to 1 and less than or equal to Nu, and the first pilot signals of the Nu devices are sent on all the pilot subcarriers comprised in the first frequency band.

19. The apparatus according to any one of claims 16 to 18, wherein the first pilot signal of the first device is $s_k^t W_{k,tt}$, $W_{k,tt}$ is an element in a $k^{th}$ row and a $tt^{th}$ column in $W$, tt = mod(t, Nu) + 1, and tt is an integer greater than or equal to 1 and less than or equal to Nu.

20. The apparatus according to any one of claims 17 to 19, wherein

   $W$ is an orthogonal matrix;
   $W$ is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

   wherein $H_n$ is an n-order Hadamard matrix, and n is an integer greater than or equal to 1;
   $W$ is a 2×n-order P matrix $P_{2n \times 2n}$, and $P_{2n \times 2n}$, satisfies the following equation:

$$P_{2n \times 2n} = \begin{bmatrix} P_{n \times n} & P_{n \times n} \\ P_{n \times n} & -P_{n \times n} \end{bmatrix},$$

   wherein $P_{n \times n}$ is an n-order P matrix; or
   $W$ is a diagonal matrix, and the diagonal matrix is an identity matrix.

21. The apparatus according to claim 20, wherein

   n is 1, and

$$H_{2n} = \begin{bmatrix} 1 & 1 \\ -1 & 1 \end{bmatrix};$$

   n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and
n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

22. The apparatus according to any one of claims 16 to 21, wherein partial elements in $s_k^t$ are set to zero.

23. The apparatus according to any one of claims 16 to 22, wherein the first pilot signal of the first device occupies different pilot subcarriers in different time units in the Nu time units, and a total quantity of pilot subcarriers occupied by the first pilot signal of the first device in the Nu time units is a total quantity of the pilot subcarriers comprised in the first frequency band.

24. A communication apparatus, wherein the apparatus comprises a transceiver module and a processing module;

the transceiver module is configured to receive second pilot signals of at least two first devices on all pilot subcarriers comprised in a first frequency band, wherein the first frequency band is a frequency band to which discrete resource units RUs allocated to the at least two first devices belong; and
the processing module is configured to process the second pilot signals of the at least two first devices, to obtain first pilot signals sent by the at least two first devices.

25. The apparatus according to claim 24, wherein the second pilot signals $X$ of the at least two first devices satisfy the following equation:

$$X = G[s_1 \quad s_2 \quad s_3 \quad \dots \quad s_{Nu}]W \text{ or } X = G[s_1 \quad s_2 \quad s_3 \quad \dots \quad s_{Nu}]W + Z;$$

$G$ is a channel parameter, $Z$ is a noise, $W$ satisfies the following equation: $W = [w_1, w_2, ..., w_{Nu}]$, $w_x$ is a column vector, x is an integer greater than or equal to 1 and less than or equal to Nu, Nu is an integer greater than 1, $W$ is used to control pilot signals transmitted by the at least two first devices in Nu time units, a column index of $W$ is a time unit index, and a row index of $W$ is a device index; and
a quantity of columns of $s_k$ is a quantity of all the pilot subcarriers comprised in the first frequency band, an $n^{th}$ element in $s_k$ indicates a pilot signal corresponding to a $k^{th}$ first device in the at least two first devices on an $n^{th}$ pilot subcarrier comprised in the first frequency band, n is an integer greater than 0 and less than or equal to the quantity of columns of $s_k$, k is an integer greater than or equal to 1 and less than or equal to Nu, t is an integer greater than or equal to 0, and t is a time unit index.

26. The apparatus according to claim 24 or 25, wherein the first pilot signals sent by the at least two first devices are $[s_1 \, s_2 \, s_3 \, ... \, s_{Nu}]W$.

27. The apparatus according to any one of claims 24 to 26, wherein

$W$ is an orthogonal matrix;

$W$ is a 2×n-order Hadamard matrix $H_{2n}$, and $H_{2n}$ satisfies the following equation:

$$H_{2n} = \begin{bmatrix} H_n & H_n \\ -H_n & H_n \end{bmatrix},$$

wherein $H_n$ is an n-order Hadamard matrix, and n is an integer greater than or equal to 1;
$W$ is a 2×n-order P matrix $P_{2n \times 2n}$, and $P_{2n \times 2n}$ satisfies the following equation:

$$P_{2n \times 2n} = \begin{bmatrix} P_{n \times n} & P_{n \times n} \\ P_{n \times n} & -P_{n \times n} \end{bmatrix},$$

wherein $P_{n \times n}$ is an n-order P matrix; or
$W$ is a diagonal matrix, and the diagonal matrix is an identity matrix.

28. The apparatus according to claim 27, wherein

n is 1, and

$$H_{2n} = \begin{bmatrix} 1 & 1 \\ -1 & 1 \end{bmatrix};$$

n is 2, and

$$H_{2n} = \begin{bmatrix} H_2 & H_2 \\ -H_2 & H_2 \end{bmatrix} = \begin{bmatrix} 1 & 1 & 1 & 1 \\ -1 & 1 & -1 & 1 \\ -1 & -1 & 1 & 1 \\ 1 & -1 & -1 & 1 \end{bmatrix};$$

n is 1, and

$$P_{2n \times 2n} = \begin{bmatrix} 1 & -1 \\ 1 & 1 \end{bmatrix};$$

n is 2, and

$$P_{2n \times 2n} = \begin{bmatrix} 1 & -1 & 1 & 1 \\ 1 & 1 & -1 & 1 \\ 1 & 1 & 1 & -1 \\ -1 & 1 & 1 & 1 \end{bmatrix};$$

and
n is 4, and

$$P_{2n \times 2n} = \begin{bmatrix} P_{4 \times 4} & P_{4 \times 4} \\ P_{4 \times 4} & -P_{4 \times 4} \end{bmatrix}.$$

29. The apparatus according to any one of claims 24 to 28, wherein partial elements of partial column vectors in $[s_1\ s_2\ s_3\ ...\ s_{Nu}]$ are set to zero.

30. The apparatus according to any one of claims 24 to 29, wherein the first pilot signal of one first device in the at least two first devices occupies different pilot subcarriers in different time units in the Nu time units, and a total quantity of pilot subcarriers occupied by the first pilot signal of one first device in the Nu time units is a total quantity of the pilot subcarriers comprised in the first frequency band.

31. A chip, wherein the chip comprises at least one processor and an interface, the processor is configured to read and execute instructions stored in a memory, and when the instructions are run, the chip is enabled to perform the method according to any one of claims 1 to 15.

32. A computer-readable storage medium, wherein the computer-readable storage medium stores a computer program, the computer program comprises program instructions, and when the program instructions are executed by a computer, the computer is enabled to perform the method according to any one of claims 1 to 15.

FIG. 1A

EP 4 351 064 A1

Pilot subcarrier

Manner 2

26-tone VRU (a bandwidth of approximately 2 MHz)

Distributed on an RU 242
(a bandwidth of 20 MHz)

Pilot subcarrier

26-tone PRU

FIG.1B

FIG. 2

Wireless access point (AP)

Station 1
(STA 1)

Station 2
(STA 2)

FIG. 3

400

401    407

Processor    Processor    403

CPU 0    CPU 0

Communication    CPU 1    CPU 1    Memory
line 402

404    405    406

Communication    Output device    Input device
interface

## FIG. 4

A STA determines a first frequency band to which a discrete RU allocated to    501
the STA belongs

The STA sends a first pilot signal of the STA to an AP on all pilot subcarriers    502
included in the first frequency band

## FIG. 5

Time
(transmitted
symbol)

Frequency (subcarrier)

■ Pilot subcarrier of a station 1

▨ Pilot subcarrier of a station 2

▨ Pilot subcarrier of a station 3

▨ Pilot subcarrier of a station 4

☐ Data subcarrier

Time (transmitted symbol): time unit (pilot symbol)

Frequency (subcarrier): frequency band (subcarrier)

EP 4 351 064 A1

FIG. 6

FIG. 7

Guard
subcarrier

Pilot subcarrier

Third 26-tone RU (26-tone
resource unit)

Null subcarrier

Discrete
26-tone
RU

| B | B | B | B | A | B | B | B | B |
|---|---|---|---|---|---|---|---|---|

| 1 | 26 | 26 | 2 | 26 | 26 | 1 | 26 | 1 | 26 | 26 | 2 | 26 | 26 | 1 |

Discrete
52-tone
RU

| | B | | | B | | A | | B | | | B | |
|---|---|---|---|---|---|---|---|---|---|---|---|---|

| 1 | 52 | 2 | 52 | 1 | 26 | 1 | 52 | 2 | 52 | 1 |

Discrete
106-tone
RU

| | B | | A | | B | |
|---|---|---|---|---|---|---|

| 1 | 106 | 1 | 26 | 1 | 106 | 1 |

Discrete
242-tone
RU

| A |
|---|

| 242 |

Tone: subcarrier
RU: resource unit

FIG. 8

FIG. 9

Time
(transmitted
symbol)

■ Pilot subcarrier
  of a station 1

▨ Pilot subcarrier
  of a station 2

▦ Pilot subcarrier
  of a station 3

▧ Pilot subcarrier
  of a station 4

☐ Data subcarrier

Time (transmitted symbol):
time unit (pilot symbol)
Frequency (subcarrier):
frequency band (subcarrier)

Frequency
(subcarrier)

10-1

Time
(transmitted
symbol)

■ Pilot subcarrier
  of a station 1

▨ Pilot subcarrier
  of a station 2

▦ Pilot subcarrier
  of a station 3

▧ Pilot subcarrier
  of a station 4

☐ Data subcarrier

Frequency
(subcarrier)

10-2

Time
(transmitted
symbol)

■ Pilot subcarrier
  of a station 1

▨ Pilot subcarrier
  of a station 2

▦ Pilot subcarrier
  of a station 3

▧ Pilot subcarrier
  of a station 4

☐ Data subcarrier

Frequency
(subcarrier)

10-3

FIG. 10

A STA determines a first frequency band to which a discrete RU allocated to the STA belongs, where the first frequency band includes pilot subcarriers in a first discrete RU group and pilot subcarriers in a second discrete RU group, and the pilot subcarriers in the first discrete RU group and the pilot subcarriers in the second discrete RU group do not overlap

1101

The STA sends a first pilot signal of the STA to an AP on all the pilot subcarriers in the first discrete RU group or the second discrete RU group

1102

FIG. 11

An AP receives second pilot signals of STAs on all pilot subcarriers included in a first frequency band, where the first frequency band is a frequency band to which discrete RUs allocated to the STAs belong

1201

The AP processes the second pilot signals of the STAs to obtain first pilot signals sent by the STAs

1202

FIG. 12

An AP receives second pilot signals of at least two STAs on all pilot subcarriers included in a first discrete RU group or a second discrete RU group, where the first discrete RU group or the second discrete RU group is included in a first frequency band, and the first frequency band is a frequency band to which discrete RUs allocated to the at least two STAs belong

1301

The AP processes the second pilot signals of the at least two STAs to obtain first pilot signals sent by the at least two STAs

1302

FIG. 13

| Station STA | | Access point AP |
|---|---|---|

1401: Determine a discrete RU allocated to the STA, where the discrete RU includes data subcarriers and pilot subcarriers, all subcarriers in one discrete RU are distributed on a first frequency band, a size of the first frequency band is 20 MHz, the first frequency band includes a maximum of 18 pilot subcarriers that are spaced, a quantity of pilot subcarriers included in one discrete RU is greater than or equal to 2, and at least two pilot subcarriers included in one discrete RU are spaced by at least M pilot subcarriers

1402: Receive a physical layer protocol data unit on the discrete RU

FIG. 14

FIG. 15

Tone: subcarrier
RU: resource unit

EP 4 351 064 A1

```
┌─────────────────┐                          ┌─────────────────────┐
│   Station STA   │                          │  Access point AP    │
└────────┬────────┘                          └──────────┬──────────┘
         │                                              │
┌────────┴─────────────────────────────────────┐       │
│ 1601: Determine a discrete RU allocated to    │       │
│ the STA, where the discrete RU includes data  │       │
│ subcarriers and pilot subcarriers, all        │       │
│ subcarriers in one discrete RU are            │       │
│ distributed on a first frequency band, a size │       │
│ of the first frequency band is 40 MHz, the    │       │
│ first frequency band includes a maximum of    │       │
│ 36 pilot subcarriers that are spaced, a       │       │
│ quantity of pilot subcarriers included in one │       │
│ discrete RU is greater than or equal to 2,    │       │
│ and at least two pilot subcarriers included   │       │
│ in one discrete RU are spaced by at least M   │       │
│ pilot subcarriers                             │       │
└────────┬──────────────────────────────────────┘      │
         │                                              │
         │  1602: Receive a physical layer protocol     │
         │  data unit on the discrete RU                │
         │ ─────────────────────────────────────────►  │
         │                                              │
```

FIG. 16

```
┌─────────────────┐                          ┌─────────────────────┐
│   Station STA   │                          │  Access point AP    │
└────────┬────────┘                          └──────────┬──────────┘
         │                                              │
┌────────┴─────────────────────────────────────┐       │
│ 1701: Determine a discrete resource unit RU   │       │
│ allocated to the STA, where the discrete RU   │       │
│ includes data subcarriers and pilot           │       │
│ subcarriers, all subcarriers in one discrete  │       │
│ RU are distributed on a first frequency band, │       │
│ a size of the first frequency band is 80 MHz, │       │
│ the first frequency band includes 72 pilot    │       │
│ subcarriers that are spaced, a quantity of    │       │
│ pilot subcarriers included in one discrete RU │       │
│ is greater than or equal to 2, and at least   │       │
│ two pilot subcarriers included in one         │       │
│ discrete RU are spaced by at least M pilot    │       │
│ subcarriers                                   │       │
└────────┬──────────────────────────────────────┘      │
         │                                              │
         │  1702: Receive a physical layer protocol     │
         │  data unit on the discrete RU                │
         │ ─────────────────────────────────────────►  │
         │                                              │
```

FIG. 17

Communication apparatus 1800

FIG. 18

## INTERNATIONAL SEARCH REPORT

| International application No. |
| --- |
| **PCT/CN2022/102494** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE; 3GPP: 导频, 参考信号, 训练序列, 频带, 频段, 带宽, 载波, 资源, 共用, 共享, 公用, 用户, 移动台, 终端, 衰落, 稀疏, STA, UE, RU, pilot, resource, band, station, train, sequence, carrier, reference, signal, terminal, fade, sparse

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101072068 A (FUJITSU LTD.) 14 November 2007 (2007-11-14) <br> description, page 1, the second-to-last paragraph to page 29, paragraph 1, and figures 1-19 | 1-32 |
| X | CN 1677970 A (SAMSUNG ELECTRONICS CO., LTD. et al.) 05 October 2005 (2005-10-05) <br> description, page 2, line 7 to page 12, line 20, and figures 1A-11 | 1-32 |
| A | US 2010273497 A1 (LG ELECTRONICS INC.) 28 October 2010 (2010-10-28) <br> entire document | 1-32 |
| A | US 2018205425 A1 (COMMONWEALTH SCIENTIFIC AND INDUSTRIAL RESEARCH ORGANISATION) 19 July 2018 (2018-07-19) <br> entire document | 1-32 |
| A | US 2008031370 A1 (TELEFONAKTIEBOLAGET LM ERICSSON (PUBL)) 07 February 2008 (2008-02-07) <br> entire document | 1-32 |
| A | JP 2009017053 A (SHARP K. K.) 22 January 2009 (2009-01-22) <br> entire document | 1-32 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 August 2022** | **30 August 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/102494**

| Patent document cited in search report | | | Publication date (day/month/year) | Patent family member(s) | | | Publication date (day/month/year) |
|---|---|---|---|---|---|---|---|
| CN | 101072068 | A | 14 November 2007 | EP | 1855433 | A2 | 14 November 2007 |
| | | | | US | 2007263738 | A1 | 15 November 2007 |
| | | | | JP | 2007306131 | A | 22 November 2007 |
| | | | | KR | 20070109784 | A | 15 November 2007 |
| | | | | KR | 100827051 | B1 | 02 May 2008 |
| | | | | CN | 101072068 | B | 26 October 2011 |
| | | | | JP | 4946159 | B2 | 06 June 2012 |
| | | | | EP | 1855433 | A3 | 21 August 2013 |
| | | | | US | 8630359 | B2 | 14 January 2014 |
| CN | 1677970 | A | 05 October 2005 | DE | 602005002666 | D1 | 15 November 2007 |
| | | | | KR | 20050091912 | A | 15 September 2005 |
| | | | | US | 2005243939 | A1 | 03 November 2005 |
| | | | | EP | 1580950 | A1 | 28 September 2005 |
| | | | | EP | 1580950 | B1 | 03 October 2007 |
| | | | | DE | 602005002666 | T2 | 31 January 2008 |
| | | | | CN | 100525274 | C | 05 August 2009 |
| | | | | KR | 922948 | B1 | 22 October 2009 |
| | | | | US | 7710918 | B2 | 04 May 2010 |
| US | 2010273497 | A1 | 28 October 2010 | WO | 2010123214 | A2 | 28 October 2010 |
| | | | | KR | 20100116527 | A | 01 November 2010 |
| | | | | WO | 2010123214 | A3 | 23 December 2010 |
| | | | | CN | 102415122 | A | 11 April 2012 |
| | | | | US | 8379565 | B2 | 19 February 2013 |
| | | | | CN | 102415122 | B | 21 January 2015 |
| | | | | MY | 161321 | A | 14 April 2017 |
| | | | | KR | 101785651 | B1 | 16 October 2017 |
| US | 2018205425 | A1 | 19 July 2018 | WO | 2017008121 | A1 | 19 January 2017 |
| | | | | AU | 2016292951 | A1 | 01 February 2018 |
| | | | | AU | 2016292951 | B2 | 21 February 2019 |
| | | | | US | 10516449 | B2 | 24 December 2019 |
| US | 2008031370 | A1 | 07 February 2008 | WO | 2008016325 | A2 | 07 February 2008 |
| | | | | TW | 200824337 | A | 01 June 2008 |
| | | | | WO | 2008016325 | A3 | 03 April 2008 |
| | | | | US | 7889799 | B2 | 15 February 2011 |
| JP | 2009017053 | A | 22 January 2009 | JP | 4874178 | B2 | 15 February 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110753764